# EUROPEAN PATENT APPLICATION

(11) **EP 4 145 952 A1**
(43) Date of publication of application: **08.03.2023**
(21) Application number: 21814201.6
(22) Date of filing: 26.05.2021
(51) Int. Cl.: H04W 76/40, H04W 76/27, H04W 4/06

(54) **BEARER STRUCTURE FOR SUPPORTING MULTICAST IN NEXT GENERATION MOBILE COMMUNICATION SYSTEM, AND SUPPORTING METHOD AND DEVICE**

(30) Priority: 29.05.2020 KR 20200065349
(71) Applicant: Samsung Electronics Co., Ltd., Gyeonggi-do 16677 (KR)
(72) Inventor: KIM, Donggun, Suwon-si, Gyeonggi-do 16677 (KR); KIM, Soenghun, Suwon-si, Gyeonggi-do 16677 (KR)
(74) Representative: Nederlandsch Octrooibureau
(86) International application number: PCT/KR2021/006545
(87) International publication number: WO 2021/242007

(57) **Abstract**

The present disclosure relates to: a communication technique merging IoT technology with a 5G communication system for supporting a data transmission rate higher than that of a 4G system; and a system therefor. The present disclosure can be applied to intelligent services (for example, smart homes, smart buildings, smart cities, smart cars or connected cars, healthcare, digital education, retail, security- and safety-related services, and the like) on the basis of 5G communication technology and IoT technology. Also, proposed in the present disclosure are a method and device in which a terminal properly receives an MBS service in various scenarios.

## Description

### [Technical Field]

The present disclosure relates to a bearer structure for supporting multicast or unicast in a next generation mobile communication system, and a supporting method and a device.

### [Background Art]

To meet the demand for wireless data traffic having increased since deployment of 4G communication systems, efforts have been made to develop an improved 5G or pre-5G communication system. Therefore, the 5G or pre-5G communication system is also called a "beyond 4G Network" communication system or a "post LTE" system. The 5G communication system is considered to be implemented in ultrahigh frequency (mmWave) bands (e.g., 60GHz bands) so as to accomplish higher data rates. To decrease propagation loss of the radio waves and increase the transmission distance in the ultrahigh frequency bands, beamforming, massive multiple-input multiple-output (massive MIMO), full dimensional MIMO (FD-MIMO), array antenna, analog beam forming, large scale antenna techniques are discussed in 5G communication systems. In addition, in 5G communication systems, development for system network improvement is under way based on advanced small cells, cloud radio access networks (RANs), ultra-dense networks, device-to-device (D2D) communication, wireless backhaul, moving network, cooperative communication, coordinated multi-points (CoMP), reception-end interference cancellation and the like. In the 5G system, hybrid FSK and QAM modulation (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have also been developed.

The Internet, which is a human centered connectivity network where humans generate and consume information, is now evolving to the Internet of things (IoT) where distributed entities, such as things, exchange and process information without human intervention. The Internet of everything (IoE), which is a combination of the IoT technology and the big data processing technology through connection with a cloud server, has emerged. As technology elements, such as "sensing technology", "wired/wireless communication and network infrastructure", "service interface technology", and "security technology" have been demanded for IoT implementation, a sensor network, a machine-to-machine (M2M) communication, machine type communication (MTC), and so forth have been recently researched. Such an IoT environment may provide intelligent Internet technology (IT) services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

In line with this, various attempts have been made to apply 5G communication systems to IoT networks. For example, technologies such as a sensor network, machine type communication (MTC), and machine-to-machine (M2M) communication may be implemented by beamforming, MIMO, and array antennas. Application of a cloud radio access network (cloud RAN) as the above-described big data processing technology may also be considered an example of convergence of the 5G technology with the IoT technology.

Recently, in the next-generation mobile communication system, technical research on a broadcast (broadcast/multicast) service, a mission critical service, or a public safety network service is being conducted, and at this time, a method and a device for supporting the MBS service are required.

### [Disclosure]

### [Technical Problem]

In the next-generation mobile communication system, an MBS service (multicast, broadcast service, multimedia broadcast and multicast service (MBMS), or multicast and broadcast service (MBS)) may be supported in order to support services such as a broadcast (broadcast/multicast) service, a mission critical service, a public safety service, or the like. The MBS service may be provided to a terminal through a multicast bearer or a unicast bearer.

Because a structure or method of configurating a multicast bearer or a unicast bearer supporting the MBS service, and a data processing method of a PHY layer device, a MAC layer device, an RLC layer device, or a PDCP layer device that receives MBS data and processes the data is required in order to support the MBS service, the present disclosure is to propose a method and apparatus to satisfy such requirement.

In the RRC connected mode, RRC idle mode, or RRC inactive mode for the MBS service, or when switching between the modes, as the signaling procedure of the terminal to continue supporting the MBS service needs to be specified, another aspect of the present disclosure is to propose a method and apparatus to satisfy such necessity.

As a method of reconfiguring (or switching) from a multicast bearer to a unicast bearer or reconfiguring (or switching) from a unicast bearer to a multicast bearer for MBS support may be needed according to handover between base stations or networks supporting the MBS service, or the mobility of a terminal, still another aspect of the present disclosure is to propose a method and device to satisfy such necessity.

Another aspect of the present disclosure is to propose a method and device for a terminal to normally receive an MBS service in various scenarios as described above.

### [Solution to Problem]

In a method performed by a terminal in a wireless communication system according to an embodiment of the present disclosure for solving the above problems, the method may include: establishing a radio resource control (RRC) connection with a base station; receiving, from the base station through a physical layer, first multicast and broadcast service (MBS) data and second MBS data ; delivering, from the physical layer through a medium access control (MAC) layer, the first MBS data to a first radio link control (RLC) layer and the second MBS data to a second RLC layer; delivering, to a packet data convergence protocol (PDCP) layer, the first MBS data from the first RLC layer and the second MBS data from the second RLC layer; and delivering, from the PDCP layer to an upper layer, the first MBS data and the second MBS data, wherein a first bearer comprising the first RLC layer is configured as an unicast bearer, and a second bearer comprising the second RLC layer is configured as a multicast bearer. In addition, in a method performed by a base station in a wireless communication system according to an embodiment of the present disclosure for solving the above problems, the method may include: establishing a radio resource control (RRC) connection with a terminal; obtaining, at a packet data convergence protocol (PDCP) layer from an upper layer, first multicast and broadcast service (MBS) data and second MBS data; obtaining, from the PDCP layer, the first MBS data at a first radio link control (RLC) layer and the second MBS data at a second RLC layer; obtaining, at a physical layer through a medium access control (MAC) layer, the first MBS data from the first RLC layer and the second MBS data from the second RLC layer; and transmitting, to the terminal through the physical layer, the first MBS data and the second MBS data, wherein a first bearer comprising the first RLC layer is configured as an unicast bearer, and a second bearer comprising the second RLC layer is configured as a multicast bearer.

In addition, in a terminal in a wireless communication system according to an embodiment of the present disclosure, the terminal may include: a transceiver; and a controller configured to: establish a radio resource control (RRC) connection with a base station; control the transceiver to receive, from the base station through a physical layer, first multicast and broadcast service (MBS) data and second MBS data; deliver, from the physical layer through a medium access control (MAC) layer, the first MBS data to a first radio link control (RLC) layer and the second MBS data to a second RLC layer, deliver, to a packet data convergence protocol (PDCP) layer, the first MBS data from the first RLC layer and the second MBS data from the second RLC layer; and deliver, from the PDCP layer to an upper layer, the first MBS data and the second MBS data, wherein a first bearer comprising the first RLC layer is configured as an unicast bearer, and a second bearer comprising the second RLC layer is configured as a multicast bearer.

In addition, in a base station in a wireless communication system according to an embodiment of the present disclosure, the base station may include: a transceiver; and a controller configured to: establish a radio resource control (RRC) connection with a terminal; obtain, at a packet data convergence protocol (PDCP) layer from an upper layer, first multicast and broadcast service (MBS) data and second MBS data; obtain, from the PDCP layer, the first MBS data at a first radio link control (RLC) layer and the second MBS data at a second RLC layer; obtain, at a physical layer through a medium access control (MAC) layer, the first MBS data from the first RLC layer and the second MBS data from the second RLC layer; and control the transceiver to transmit, to the terminal through the physical layer, the first MBS data and the second MBS data, wherein a first bearer comprising the first RLC layer is configured as an unicast bearer, and a second bearer comprising the second RLC layer is configured as a multicast bearer.

### [Advantageous Effects of Invention]

According to an embodiment of the present disclosure, the present disclosure has an effect of providing the structure or configuration method of a multicast bearer or unicast bearer supporting the MBS service, and efficiently performing data processing of a PHY layer device, a MAC layer device, an RLC layer device, or a PDCP layer device that receives MBS data and processes the data, in order to support the MBS service in the next-generation mobile communication system.

In addition, according to an embodiment of the present disclosure, there is an effect of enabling the signaling procedure or the terminal to continue supporting the MBS service in RRC Connected mode, RRC IDLE Mode, or RRC INACTIVE mode, or when the MBS service is switched between the modes.

In addition, according to an embodiment of the present disclosure, for MBS support, reconfiguring (or switching) from a multicast bearer to a unicast bearer or reconfiguring (or switching) from a unicast bearer to a multicast bearer may be possible depending on the handover between the base stations or networks supporting the MBS service, or the mobility of the terminal.

### [Brief Description of Drawings]

FIG. 1 is a diagram illustrating a structure of an LTE system to which the present disclosure can be applied.
FIG. 2 is a diagram illustrating a radio protocol structure in an LTE system to which the present disclosure can be applied.
FIG. 3 is a diagram illustrating the structure of a next-generation mobile communication system to which the present disclosure can be applied.
FIG. 4 is a diagram illustrating a radio protocol structure of a next-generation mobile communication system to which the present disclosure can be applied.
FIG. 5 is a diagram illustrating a procedure for providing a service to a terminal by efficiently using a very wide frequency bandwidth in the next-generation mobile communication system of the present disclosure.
FIG. 6 is a diagram illustrating a procedure for a terminal to switch from an RRC idle mode to an RRC connected mode in a next-generation mobile communication system of the present disclosure, and proposing a method of configuring a plurality of partial bandwidths (Bandwidth part, BWP) and configuring a default bandwidth (default BWP) or a first active bandwidth (first active BWP).
FIG. 7 is a diagram illustrating a structure of a bearer that can be configured for an MBS service to a terminal in system information, an RRC message (e.g., RRCSetup, RRCResume, RRCReconfiguration, RRCRelease, or a newly defined new RRC message), or a control message for an MBS channel or that is configured by the terminal to receive the MBS service, when the base station or the network supports the MBS service to the RRC connected mode, RRC deactivation mode, or RRC idle mode terminal.
FIG. 8 is a diagram illustrating a method of demultiplexing received MBS data in the MAC layer device when the terminal in RRC connected mode, or RRC deactivation mode, or RRC idle mode receives MBS data (e.g., MBS control data, or MBS user data, or general data other than MBS data) through a multicast bearer or unicast bearer supporting the MBS service with the bearer structure proposed in FIG. 7 of the present disclosure.
FIG. 9 is a diagram illustrating a method of multiplexing MBS data to be transmitted in the MAC layer device when the RRC connected mode, RRC deactivated mode, or RRC idle mode terminal transmits MBS data (e.g., MBS control data, MBS when transmitting user data or general data other than MBS data) through a multicast bearer or unicast bearer supporting the MBS service with the bearer structure proposed in FIG. 7 of the present disclosure.
FIG. 10 is a diagram illustrating a first signaling procedure for MBS service support proposed by the present disclosure.
FIG. 11 is a diagram illustrating a second signaling procedure for MBS service support proposed by the present disclosure.
FIG. 12 is a diagram illustrating a third signaling procedure for MBS service support proposed in the present disclosure.
FIG. 13 is a diagram illustrating a fourth signaling procedure for MBS service support proposed by the present disclosure.
FIG. 14 is a diagram illustrating an operation of a terminal proposed by the present disclosure.
FIG. 15 is a diagram illustrating a structure of a terminal to which an embodiment of the present disclosure can be applied.
FIG. 16 is a diagram illustrating a block configuration of the TRP in a wireless communication system to which an embodiment of the present disclosure can be applied.

### [Mode for Invention]

Hereinafter, the operation principle of the disclosure will be described in detail with reference to the accompanying drawings. In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description of the disclosure, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of convenience. Therefore, the disclosure is not limited by the terms as used below, and other terms referring to subjects having equivalent technical meanings may be used.

In the following description, the disclosure will be described using terms and names defined in the 3rd generation partnership project long term evolution (3GPP LTE) standards for the convenience of description. However, the disclosure is not limited by these terms and names, and may be applied in the same way to systems that conform other standards. In the disclosure, the term "eNB" may be interchangeably used with the term "gNB". That is, a base station described as "eNB" may indicate "gNB".

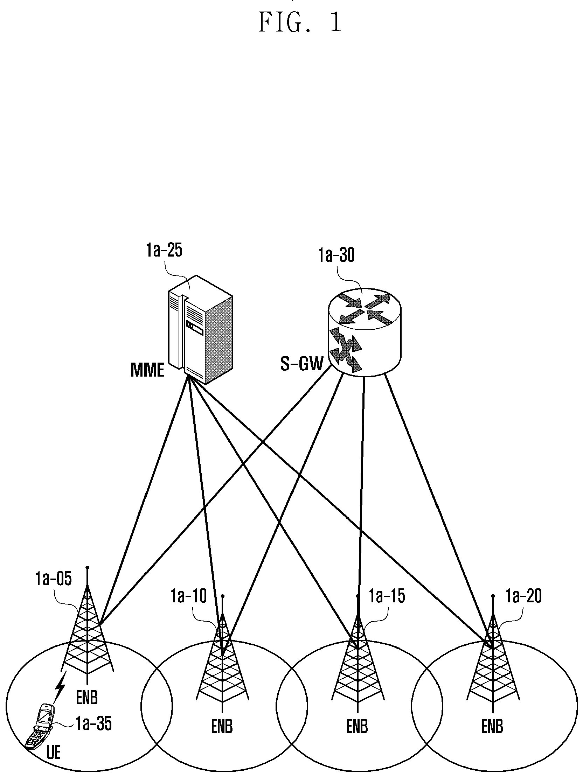

FIG. 1 is a diagram illustrating a structure of an LTE system to which the present disclosure can be applied.

Referring to FIG. 1, as shown, the wireless access network of the LTE system includes a next-generation base station (Evolved Node B, hereinafter ENB, Node B or base station) 1a-05, 1a-10, 1a-15, and 1a-20, a mobility management entity (MME) 1a-25, and a serving-gateway (S-GW) 1a-30. A user terminal (user equipment, hereinafter UE or terminal) 1a-35 may be connected to an external network through ENB 1a-05 ~ 1a-20 and S-GW 1a-30.

In FIG. 1, the ENB 1a-05~1a-20 correspond to the existing Node B of the UMTS system. The ENB is connected to the terminal 1a-35 through a radio channel and performs a more complex role than the existing Node B. In the LTE system, because all user traffic, including real-time services such as VoIP (Voice over IP) through the Internet protocol, is serviced through a shared channel, a device for scheduling by collecting status information such as buffer status of terminals, available transmission power status, and channel status is needed, and ENB 1a-05 ~ 1a-20 is responsible for this. One ENB typically controls multiple cells. For example, in order to implement a transmission rate of 100 Mbps, the LTE system uses, for example, orthogonal frequency division multiplexing (hereinafter, referred to as OFDM) as a radio access technology in a 20 MHz bandwidth. In addition, an adaptive modulation & coding (hereinafter, referred to as AMC) scheme that determines a modulation scheme and a channel coding rate according to the channel state of the terminal is applied.

The S-GW 1a-30 is a device that provides a data bearer, and generates or removes a data bearer according to the control of the MME 1a-25. The MME is a device in charge of various control functions as well as a mobility management function for the terminal, and is connected to a plurality of base stations.

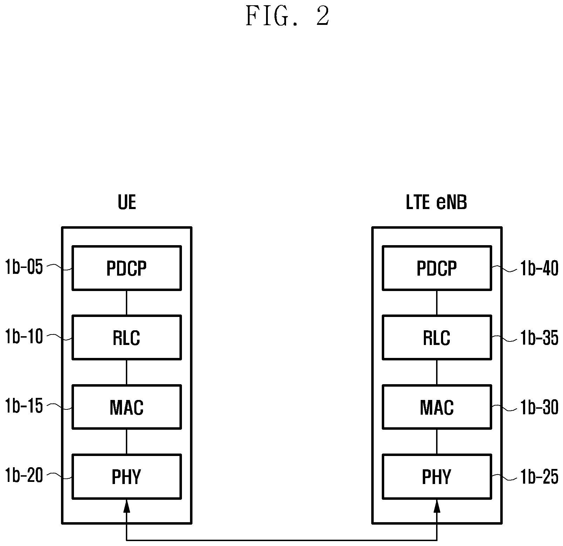

FIG. 2 is a diagram illustrating a radio protocol structure in an LTE system to which the present disclosure can be applied.

Referring to FIG. 2, the wireless protocol of the LTE system include packet data convergence protocols (PDCP) 1b-05 and 1b-40, radio link control (RLC) 1b-10 and 1b-35, and medium access controls (MAC) 1b-15 and 1b-30. The packet data convergence protocols (PDCP) 1b-05 and 1b-40 are in charge of operations such as IP header compression/restore. The main functions of PDCP are summarized below.
- Header compression and decompression: ROHC only
- Transfer of user data
- In-sequence delivery of upper layer PDUs at PDCP re-configuring procedure for RLC AM
- For split bearers in DC (only support for RLC AM): PDCP PDU routing for transmission and PDCP PDU reordering for reception
- Duplicate detection of lower layer SDUs at PDCP re-configuring procedure for RLC AM
- Retransmission of PDCP SDUs at handover and, for split bearers in DC, of PDCP PDUs at PDCP data-recovery procedure, for RLC AM
- Ciphering and deciphering
- Timer-based SDU discard in uplink

The radio link control (hereinafter, referred to RLC) 1b-10 and 1b-35 reconfigures a PDCP protocol data unit (PDU) to an appropriate size and performs ARQ operation and the like. The main functions of RLC are summarized below.
- Transfer of upper layer PDUs
- Error Correction through ARQ (only for AM data transfer)
- Concatenation, segmentation, and reassembly of RLC SDUs (only for UM and AM data transfer)
- Re-segmentation of RLC data PDUs (only for AM data transfer)
- Reordering of RLC data PDUs (only for UM and AM data transfer
- Duplicate detection (only for UM and AM data transfer)
- Protocol error detection (only for AM data transfer)
- RLC SDU discard (only for UM and AM data transfer)
- RLC re-establishment

The MACs 1b-15, 1b-30 are connected to several RLC layer devices configured in one terminal, and perform an operation of multiplexing RLC PDUs to MAC PDUs and demultiplexing RLC PDUs from MAC PDUs. The main functions of MAC are summarized below.
- Mapping between logical channels and transport channels
- Multiplexing/demultiplexing of MAC SDUs belonging to one or different logical channels into/from transport blocks (TB) delivered to/from the physical layer on transport channels
- Scheduling information reporting
- Error correction through HARQ
- Priority handling between logical channels of one UE
- Priority handling between UEs by means of dynamic scheduling
- MBMS service identification
- Transport format selection
- Padding

The physical layers 1b-20, 1b-25 channel-code and modulate upper layer data, convert OFDM symbols into OFDM symbols, and transmit them over a wireless channel, or demodulate and channel-decode OFDM symbols received through the wireless channel and transmit them to an upper layer.

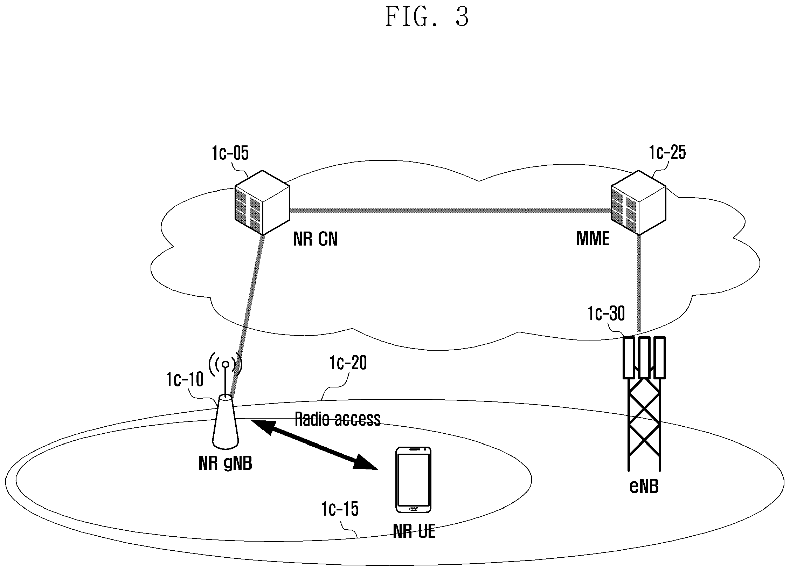

FIG. 3 is a diagram illustrating the structure of a next-generation mobile communication system to which the present disclosure can be applied.

Referring to FIG. 3, as shown, the radio access network of the next generation mobile communication system (hereinafter, NR or 5G) includes a next generation base station (new radio node B, hereinafter, NR gNB or NR base station) 1c-10 and new radio core network (NR CN) 1c-05. A user equipment (new radio user equipment, hereinafter NR UE or terminal) 1c-15 accesses the external network through the NR gNB 1c-10 and the NR CN 1c-05.

In FIG. 3, the NR gNB 1c-10 corresponds to the evolved node B (eNB) of the existing LTE system. The NR gNB is connected through a radio channel with NR terminal 1c-15 and may provide a service superior to that of the existing Node B. In the next-generation mobile communication system, since all user traffic is serviced through a shared channel, a device for scheduling by collecting status information such as buffer status, available transmission power status, and channel status of terminals is required, and the NR NB 1c-10 is responsible for this. One NR gNB typically controls multiple cells. In order to implement ultra-high-speed data transmission compared to current LTE, it can have more than the existing maximum bandwidth, and additional beamforming technology may be grafted by using orthogonal frequency division multiplexing (hereinafter, referred to as OFDM) as a radio access technology. In addition, an adaptive modulation & coding (AMC) scheme that determines a modulation scheme and a channel coding rate according to the channel state of the terminal is applied. The NR CN 1c-05 performs functions such as mobility support, bearer setup, QoS setup, and the like. The NR CN is a device in charge of various control functions as well as a mobility management function for the terminal, and is connected to a plurality of base stations. In addition, the next-generation mobile communication system can be linked with the existing LTE system, and the NR CN is connected to the MME 1c-25 through a network interface. The MME is connected to the existing base station eNB 1c-30.

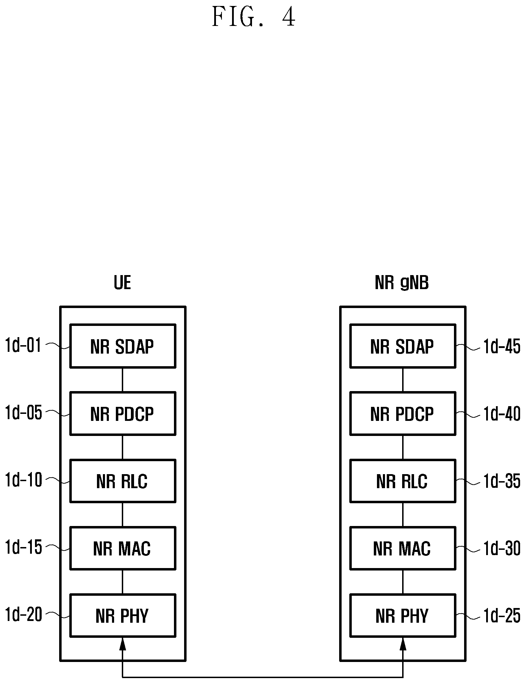

FIG. 4 is a diagram illustrating a radio protocol structure of the next-generation mobile communication system to which the present disclosure can be applied.

Referring to FIG. 4, the radio protocol of the next generation mobile communication system includes NR SDAP 1d-01 and 1d-45, NR PDCP 1d-05 and 1d-40, NR RLC 1d-10 and 1d-35, and NR MAC 1d-15 and 1d-30 in a terminal and an NR base station, respectively.

The main function of the NR SDAP 1d-01 and 1d-45 may include some of the following functions.
- transfer of user plane data
- mapping between a QoS flow and a DRB for both DL and UL
- marking QoS flow ID in both DL and UL packets
- reflective QoS flow to DRB mapping for the UL SDAP PDUs

With respect to the SDAP layer device, the terminal may be configured with an RRC message whether to use the header of the SDAP layer device for each PDCP layer device, for each bearer, or for each logical channel, or whether to use the functions of SDAP layer devices, and when the SDAP header is set, the SDAP header's NAS QoS reflection configuration 1-bit indicator and AS QoS reflection configuration 1-bit indicator may indicate that the terminal can update or reconfigure mapping information for uplink and downlink QoS flows and data bearers. The SDAP header may include QoS flow ID information indicating QoS. The QoS information may be used as data processing priority and scheduling information to support a smooth service.

The main functions of the NR PDCP 1d-05 and 1d-40 may include some of the following functions.
- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

In the above, the reordering of the NR PDCP device refers to a function of reordering the PDCP PDUs received from the lower layer in order based on the PDCP sequence number (SN), may include the ability to pass data to upper layers in the reordered order, or, may include a function to deliver directly without considering the order, may include a function of reordering the order to record the lost PDCP PDUs, may include a function to report the status of the lost PDCP PDUs to the transmitting side, and may include a function of requesting retransmission for lost PDCP PDUs.

The main functions of the NR RLC 1d-10 and 1d-35 may include some of the following functions.
- Transfer of upper layer PDUs
- In-sequence delivery of upper layer PDUs
- Out-of-sequence delivery of upper layer PDUs
- Error Correction through ARQ
- Concatenation, segmentation, and reassembly of RLC SDUs
- Re-segmentation of RLC data PDUs
- Reordering of RLC data PDUs
- Duplicate detection
- Protocol error detection
- RLC SDU discard
- RLC re-establishment

In the above, in-sequence delivery of the NR RLC device refers to a function of sequentially delivering RLC SDUs received from a lower layer to an upper layer, may include a function of reassembling and transmitting when one RLC SDU is originally divided into several RLC SDUs and received, may include a function of rearranging the received RLC PDUs based on RLC sequence number (SN) or PDCP sequence number (SN), may include a function of reordering the order to record the lost RLC PDUs, may include a function of reporting the status of the lost RLC PDUs to the transmitting side, may include a function of requesting retransmission of the lost RLC PDUs, may include a function of delivering only RLC SDUs before the lost RLC SDU to an upper layer in order when there is a lost RLC SDU, or when a predetermined timer expires even if there is a lost RLC SDU, may include a function of sequentially delivering all RLC SDUs received before the timer starts to an upper layer, or a predetermined timer expires even if there is a lost RLC SDU, may include a function of sequentially transferring all RLC SDUs received so far to an upper layer. In addition, the RLC PDUs may be processed in the order in which they are received (in the order of arrival, regardless of the sequence number and sequence number) and delivered to the PDCP device out of sequence (out-of-sequence delivery), and in the case of segments, segments stored in the buffer or to be received later are received, reconstructed into one complete RLC PDU, processed, and delivered to the PDCP device. The NR RLC layer may not include a concatenation function, and the function may be performed in the NR MAC layer or replaced with a multiplexing function of the NR MAC layer.

In the above, the out-of-sequence delivery of the NR RLC device may refer to the function of delivering the RLC SDUs received from the lower layer to the upper layer regardless of the order, may include a function of reassembling and transmitting RLC SDUs when the original one RLC SDU is divided into several RLC SDUs and received, and may include a function of storing the RLC SN or PDCP SN of the received RLC PDUs, arranging the order, and recording the lost RLC PDUs.

The NR MAC 1d-15 and 1d-30 may be connected to several NR RLC layer devices configured in one terminal, and the main function of the NR MAC may include some of the following functions.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

The NR PHY layer 1d-20 and 1d-25 may perform of channel-coding and modulating the upper layer data, making an OFDM symbol and transmit the same to a wireless channel, or demodulating an OFDM symbol received through a wireless channel, decoding the channel, and delivering the same to the upper layer.

Since the next-generation mobile communication system may use a very high frequency band, the frequency bandwidth may also be very wide. However, supporting all of the very wide bandwidth in the implementation of the terminal requires high implementation complexity and incurs high cost. Therefore, in the next-generation mobile communication system, the concept of partial bandwidth (bandwidth part (BWP)) may be introduced, a plurality of partial bandwidths (BWPs) may be configured in one cell (Spcell or Scell), and data may be transmitted/received in one or a plurality of partial bandwidths according to an instruction of a base station.

The present disclosure is characterized by proposing a state transition method or a partial bandwidth switching method and a specific operation in consideration of the state of the Scell and a plurality of partial bandwidths configured in the Scell when the dormant partial bandwidth proposed in the present disclosure is introduced. In addition, present disclosure proposes a method of managing the dormant mode in a partial bandwidth unit (BWP-level) and transitioning the state or a partial bandwidth switching method, respectively, and propose a specific partial bandwidth operation according to the state of each SCell or the state or mode (activated, deactivated, or dormant) of each partial bandwidth.

In addition, the present disclosure is characterized in that a plurality of partial bandwidths are configured for each downlink or uplink in one cell (Spcell, Pcell, Pscell, or Scell), and an active partial bandwidth (active DL or UL BWP), a dormant partial bandwidth (dormant BWP or dormant DL BWP), or an inactive partial bandwidth (inactive or deactivated DL/LTL BWP) may be configured and operated through partial bandwidth switching. That is, the data transmission rate can be increased in a method similar to the carrier aggregation technology by transitioning the downlink or uplink partial bandwidth to the active state for the single cell, the battery can be saved by transitioning or switching the downlink partial bandwidth to the dormant partial bandwidth so that the terminal does not perform PDCCH monitoring on the cell, and it is possible to support the activation of a fast cell or partial bandwidth later by enabling the terminal to perform channel measurement on the downlink partial bandwidth and report the channel measurement result. Also, it is possible to save the battery of the terminal by transitioning the downlink (or uplink) partial bandwidth to the inactive state in the one cell. In the above, the state transition indication or partial bandwidth switching indication for each cell may be configured and indicated by a radio resource control (RRC) message, a medium access control (MAC) control element (CE), or downlink control information (DCI) of a physical downlink control channel (PDCCH).

In the present disclosure, the partial bandwidth (BWP) may be used without distinguishing between the uplink and the downlink, which may mean an uplink partial bandwidth and a downlink partial bandwidth, respectively, depending on context.

In the present disclosure, the link may be used without distinguishing between the uplink and the downlink, which may mean each of the uplink and the downlink depending on the context.

In the present disclosure, a dormant partial bandwidth (dormant BWP) may be configured or introduced for the SCell of the terminal performing the carrier aggregation technique, the PDCCH may not be monitored in the dormant partial bandwidth to reduce the battery consumption of the terminal, the channel measurement may be performed and reported in the dormant partial bandwidth (e.g., channel state information (CSI) or channel quality information (CQI) measurement or report), or beam measurement or beam tracking or beam operation may be performed, so that when data transmission is required, it is switched or activated to a normal partial bandwidth (normal BWP) so that data transmission can be started quickly in the normal partial bandwidth. In the above, the dormant partial bandwidth may not be configured or applied for the SpCell (PCell in MCG or PCell in SCG (or PSCell)) that needs to continuously monitor a signal, or transmit or receive feedback, or verify and maintain synchronization or the SCell with a PUCCH configured.

The present disclosure proposes various embodiments in which the SCell of the terminal operates based on DCI, MAC CE, or RRC message of PDCCH in order to operate the above proposed dormant partial bandwidth.

A network or a base station may configure a Spcell (Pcell and PScell) and a plurality of Scells to the terminal. In the above, the Spcell may indicate the Pcell when the terminal communicates with one base station, and may indicate the Pcell of the master base station or the PScell of the secondary base station when the terminal communicates with two base stations (the master base station and the secondary base station). In the above, the Pcell or Pscell may indicate a main cell used when a terminal and a base station communicate in each MAC layer device, and may mean a cell in which timing is adjusted to perform synchronization, random access is performed, HARQ ACK/NACK feedback is transmitted to a PUCCH transmission resource, and most control signals are exchanged. In the above, a technique in which the base station increases transmission resources by operating a plurality of Scells together with the Spcells and increases uplink or downlink data transmission resources is referred to as a carrier aggregation technique.

When the terminal is configured with the Spcell and the plurality of SCells by an RRC message, the state or mode for each SCell or a partial bandwidth of each SCell may be configured by the RRC message, MAC CE, or DCI of the PDCCH. In the above, the state or mode of the Scell may be configured in an active mode, an activated state and deactivated mode, or a deactivated state. In the above description, that the Scell is in the active mode or in the active state may mean that the terminal may exchange uplink or downlink data with the base station in the activated partial bandwidth of the Scell, the activated normal partial bandwidth, or a partial bandwidth other than the activated dormant partial bandwidth in the active mode or the activated Scell, may monitor the PDCCH to check the indication of the base station, may perform channel measurement for the downlink of the Scell (or the activated partial bandwidth of the Scell, or the activated normal partial bandwidth or the activated dormant partial bandwidth) in the active mode or the active state and periodically report measurement information to the base station, and may periodically transmit a pilot signal (Sounding Reference Signal, SRS) to the base station so that the terminal can measure the uplink channel by the base station.

However, that the SCell is in an inactive mode or in an inactive state may mean that the terminal is in an inactive state of the partial bandwidth configured in the Scell, or the configured partial bandwidths are not activated, the terminal cannot transmit and receive data with the base station because there is no active partial bandwidth among the configured partial bandwidths, does not monitor the PDCCH for checking the indication of the base station, does not perform channel measurement, does not perform measurement report, and does not transmit a pilot signal.

Therefore, in order to activate the Scells in the deactivation mode, the base station may first configured frequency measurement configuration information to the terminal with an RRC message, and the terminal may perform cell or frequency measurement based on the frequency measurement configuration information. In addition, the base station may activate the deactivated Scells, based on the frequency/channel measurement information after receiving the cell or frequency measurement report of the terminal. Due to this, a large delay occurs in the base station activating the carrier aggregation technology to the terminal and starting data transmission or reception.

The present disclosure proposes a dormant mode or a dormant state for the partial bandwidth of each activated Scell (activated SCell or active SCell) or proposes to configure or introduce a dormant band width part (BWP) for each activated SCell so as to save the battery of the terminal and to start data transmission or reception quickly.

It is characterized in that, in the dormant partial bandwidth or dormant BWP in activated SCell mode of the activated SCell, or when the dormant partial bandwidth is activated, the terminal cannot exchange data with the base station, the terminal does not monitor the PDCCH to check the indication of the base station, or the terminal does not transmit a pilot signal, but performs channel measurement and reports the measurement result for the measured frequency/cell/channel periodically or when an event occurs according to the base station configuration. Therefore, because the terminal does not monitor the PDCCH in the dormant BWP of the activated SCell and does not transmit a pilot signal, the battery can be saved compared to the normal partial bandwidth of the activated SCell (or the non-dormant partial bandwidth) or when the activated SCell's normal partial bandwidth (or the non-dormant partial bandwidth) is activated, and because the terminal performs the channel measurement report differently from when the SCell is deactivated, the base station can quickly activate the normal partial bandwidth of the activated SCell based on the measurement report or the measurement report of the dormant partial bandwidth of the activated SCell so that the carrier aggregation technology can be used quickly, thereby reducing the transmission delay.

Therefore, in the present disclosure, that the Scell is in an active mode or an active state may mean that the terminal may exchange uplink or downlink data with the base station in the activated partial bandwidth of the Scell, the activated normal partial bandwidth, or a partial bandwidth other than the activated dormant partial bandwidth in the active mode or the activated Scell, may monitor the PDCCH to check the indication of the base station, may perform channel measurement for the downlink of the Scell (or the activated partial bandwidth of the Scell, or the activated normal partial bandwidth or the activated dormant partial bandwidth) in the active mode or the active state and periodically report measurement information to the base station, and may periodically transmit a pilot signal (Sounding Reference Signal, SRS) to the base station so that the base station can measure the uplink channel. In addition, in the present disclosure, when the Scell is in the active mode or the active state, it may mean that the terminal cannot transmit and receive uplink or downlink data with the base station in the active dormant partial bandwidth of the Scell in the active mode or the activated Scell. Alternatively, it may mean that the PDCCH is not monitored to check the indication of the base station, but channel measurement for the downlink of the active dormant partial bandwidth of the Scell in the active mode or active state may be performed, and measurement information may be periodically reported to the base station.

In addition, in the present disclosure, the dormant partial bandwidth may indicate the state of the partial bandwidth, or the dormant partial bandwidth may be used as the name of a logical concept indicating a specific partial bandwidth. Thus, the dormant partial bandwidth can be activated, deactivated, or switched. For example, an instruction to switch a second partial bandwidth activated in the first SCell to a dormant partial bandwidth, or an instruction to transition the first SCell to dormant or a dormant mode, or an instruction to activate a dormant partial bandwidth of the first SCell may be interpreted as the same meaning.

In addition, in the present disclosure, the general partial bandwidth may indicate partial bandwidths that are not dormant partial bandwidths among the partial bandwidths configured in each SCell of the terminal as an RRC message, and the terminal may exchange uplink data or downlink data with the base station in the normal partial bandwidth, monitor the PDCCH to check the indication of the base station, perform channel measurement for the downlink, periodically report measurement information to the base station, and periodically transmit a pilot signal (sounding reference signal (SRS)) to the base station so that the base station can measure the uplink channel. In addition, the normal partial bandwidth may indicate a first active partial bandwidth, a default partial bandwidth, a first active partial bandwidth, or an initial partial bandwidth activated from dormancy.

In addition, among the partial bandwidths configured in each Scell of the terminal, only one dormant partial bandwidth may be configured, and may be configured for downlink. As another method, one dormant partial bandwidth may be configured for uplink or downlink among the partial bandwidths configured for each Scell of the terminal.

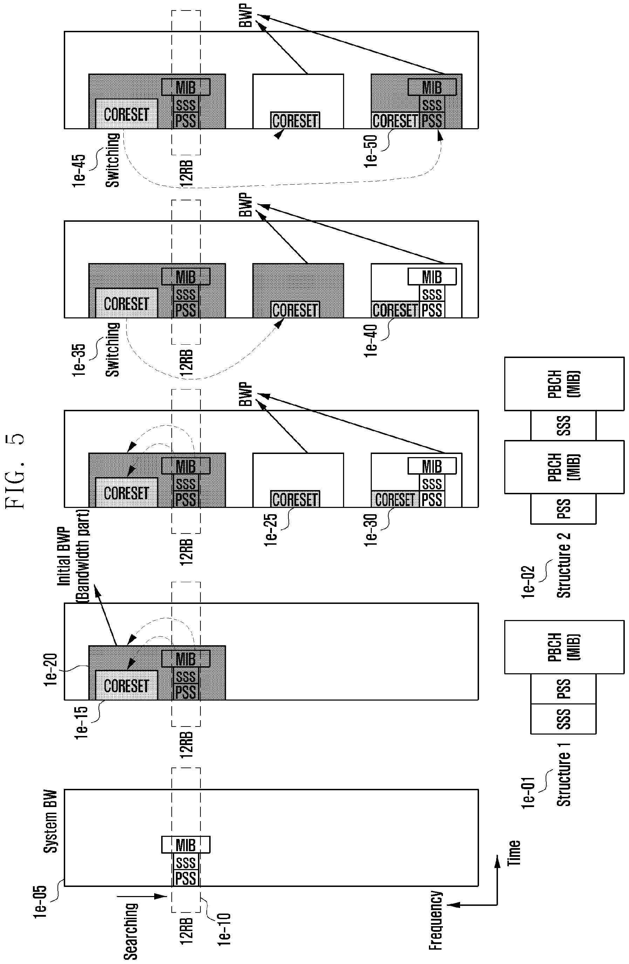

FIG. 5 is a diagram illustrating a procedure for providing a service to a terminal by efficiently using a very wide frequency bandwidth in the next-generation mobile communication system of the present disclosure.

FIG. 5 illustrates how the next-generation mobile communication system can efficiently use a very wide frequency bandwidth to provide services to terminals with different abilities (capabilities or categories) and to save batteries.

One cell to which the base station provides a service can serve a very wide frequency band like 1e-05. However, in order to provide a service to terminals having different capabilities, the wide frequency band may be divided into a plurality of partial bandwidths and managed as one cell.

First, the terminal initially turned on may search for the entire frequency band provided by the operator (PLMN) in a certain resource block unit (e.g., 12RB (resource block) unit). That is, the terminal may start searching for a primary synchronization sequence (PSS)/secondary synchronization sequence (SSS) in the entire system bandwidth in units of the resource blocks 1e-10. If the signal is detected while searching for the PSS/SSS 1e-01 or 1e-02 in the resource block unit, the terminal may read and interpret (decode) the signals to determine the boundary between the subframe and the radio transmission resource frame (Radio frame). Accordingly, subframes may be distinguished in units of 1 ms, and synchronization between the base station and the downlink signal may be matched. In the above, a resource block (RB) may be defined as a two-dimensional unit with the size of a predetermined frequency resource and a predetermined time resource. For example, the time resource may be defined in units of 1 ms, and as a frequency resource, 12 subcarriers (1 carrier x 15 kHz = 180 kHz) may be defined.

When the synchronization is completed in the above, the terminal may check the master system information block (MIB) or minimum system information (MSI) to check the information of the control resource set (CORESEST), and may check initial access bandwidth part (BWP) information 1e-15 and 1e-20. In the above, CORESET information refers to a location of a time/frequency transmission resource through which a control signal is transmitted from a base station, and for example, indicates a resource location through which a PDCCH channel is transmitted. That is, the CORESET information may be information indicating where the first system information (system information block 1 (SIB1)) is transmitted, and may indicate in which frequency/time resource the PDCCH is transmitted. In the above, when the terminal reads the first system information, the terminal may check information on the initial partial bandwidth (initial BWP). As described above, when the terminal completes synchronization of the downlink signal with the base station and can receive the control signal, the terminal may perform a random access procedure in the initial partial bandwidth (initial BWP) of the cell on which the terminal camps, request RRC connection configuration, and receive an RRC message to perform RRC connection configuration.

In the RRC connection configuration, a plurality of partial bandwidths may be configured for each cell (Pcell, Pscell, Spcell, or Scell). A plurality of partial bandwidths may be configured for downlink in one cell, and a plurality of partial bandwidths may be separately configured for uplink.

The plurality of partial bandwidths may be indicated and configured by a partial bandwidth identifier (BWP Identifier) to be used as Initial BWP, default BWP, first active BWP, dormant BWP, or first active BWP from dormant.

In the above, the initial partial bandwidth (initial BWP) may be used as a partial bandwidth determined by the cell level (cell-specific) existing one for each cell, and may be used as a partial bandwidth in which a terminal accessing the cell for the first time configures a connection to the cell through a random access procedure or a terminal that configures a connection performs synchronization. Also, in the above, the base station may configure an initial downlink partial bandwidth to be used in the downlink and an initial uplink partial bandwidth to be used in the uplink for each cell. In addition, the configuration information for the initial partial bandwidth may be broadcast in the first system information (SIB1) indicated by CORESET, and the base station may configure the connection again to the terminal with an RRC message. In addition, the initial partial bandwidth may be used by designating the partial bandwidth identifier as 0 in the uplink and downlink, respectively. That is, all terminals accessing the same cell may use the same initial partial bandwidth by designating the partial bandwidth identifier as 0. This is because the base station can transmit a random access response (RAR) message with an initial partial bandwidth that all terminals can read when performing the random access procedure, so there may be an advantage in facilitating the contention-based random access procedure.

The first active partial bandwidth (first active BWP) may be configured differently for each terminal (UE specific), and the first active partial bandwidth (first active BWP) may be designated and indicated by a partial bandwidth identifier among a plurality of partial bandwidths. The first active partial bandwidth may be configured for the downlink and the uplink, respectively, and may be configured as a partial bandwidth identifier as a first active downlink partial bandwidth (first active downlink BWP) and a first active uplink partial bandwidth (first active uplink BWP), respectively. The first active partial bandwidth may be used to indicate which partial bandwidth is to be initially activated when a plurality of partial bandwidths are configured in one cell. For example, if the Pcell, Pscell, or Scell is activated when a Pcell or Pscell and a plurality of Scells are configured in the terminal and a plurality of partial bandwidths are configured in each of the Pcell, Pscell, or Scell, the terminal may activate and use a first active BWP among a plurality of partial bandwidths configured in the Pcell, Pscell, or Scell. That is, for the downlink, the first active downlink partial bandwidth (first active downlink BWP) may be activated and used, and for the uplink, the first active uplink partial bandwidth (first active uplink BWP) may be activated and used.

In the above, the operation of the terminal to switch the currently activated downlink partial bandwidth for the Scell and activating the same to the first active downlink partial bandwidth (or the partial bandwidth configured or indicated by the RRC message) or switch the currently activated uplink partial bandwidth and activating the same to the first active uplink partial bandwidth (or the partial bandwidth configured or indicated by the RRC message) may be performed when the Scell or partial bandwidth is in a deactivated state and an instruction to activate the same is received through an RRC message, MAC control information, or DCI. Also, the operation may be performed when an instruction to transition the Scell or partial bandwidth to the dormant state is received through an RRC message, MAC control information, or DCI. Because even when activating the Scell or partial bandwidth, the terminal switches the currently activated downlink partial bandwidth and activates the same with the first active downlink partial bandwidth (or the partial bandwidth configured or indicated by the RRC message), or switches the uplink partial bandwidth to activate it with the first active uplink partial bandwidth (or the partial bandwidth configured or indicated by the RRC message), and because the base station can effectively use the carrier aggregation technique only when the frequency/channel is measured and reported for the first active downlink or uplink partial bandwidth even when the channel measurement report is performed in the dormant state.

In the above, the default partial bandwidth (default BWP) may be configured differently for each terminal (UE specific), and may be indicated by a partial bandwidth identifier among the plurality of partial bandwidths. The default partial bandwidth may be configured only for downlink. The default partial bandwidth may be used as a partial bandwidth to which an activated partial bandwidth among a plurality of downlink partial bandwidths will fall back after a predetermined time. For example, a partial bandwidth inactivity timer (bwp inactivity timer) may be configured for each cell or partial bandwidth with an RRC message, the timer may be started or restarted when data transmission/reception occurs in an activated partial bandwidth other than the default partial bandwidth or may be started or restarted when the active partial bandwidth is switched to another partial bandwidth.

When the timer expires, the terminal may fall back or switch the downlink partial bandwidth activated in the cell to the default bandwidth. In the above, switching may mean a procedure of inactivating a currently activated partial bandwidth and activating a partial bandwidth indicated by switching, and switching may be triggered by an RRC message, MAC control element, or L1 signaling (downlink control information (DCI) of the PDCCH). In the above, the switching may be triggered by indicating a partial bandwidth to be switched or activated, and the partial bandwidth may be indicated by a partial bandwidth identifier (e.g., 0, 1, 2, 3, or 4).

The reason for using the default partial bandwidth by applying only for the downlink is that the base station scheduling can be facilitated by allowing the base station to fall back to the default partial bandwidth after a certain time has elapsed for each cell and to receive an instruction from the base station (e.g., DCI of PDCCH). For example, when the base station configures the default partial bandwidth of terminals accessing one cell as the initial partial bandwidth, the base station may continue to perform the scheduling instruction only in the initial partial bandwidth after a predetermined time. If the default partial bandwidth is not configured in the RRC message, the initial partial bandwidth may be regarded as the default partial bandwidth and fall back to the initial partial bandwidth when the partial bandwidth deactivation timer expires.

As another method, in order to increase the implementation freedom of the base station, a default partial bandwidth may be defined and configured for the uplink to be used like the default partial bandwidth of the downlink.

In the above, it is characterized in that the dormant partial bandwidth (dormant BWP) means a partial bandwidth that is a dormant mode of an activated SCell or a dormant partial bandwidth (dormant BWP in activated SCell), or when the dormant partial bandwidth is activated, the terminal cannot transmit and receive data with the base station, or does not monitor the PDCCH for checking the indication of the base station, or does not transmit a pilot signal, but performs channel measurement and reports the measurement result for the measured frequency/cell/channel periodically or when an event occurs according to the base station configuration.

Therefore, because the terminal does not monitor the PDCCH in the dormant BWP of the activated SCell and does not transmit a pilot signal, it is possible to save battery compared to the normal partial bandwidth (or partial bandwidth other than the dormant partial bandwidth) of the activated SCell or when the normal partial bandwidth (or partial bandwidth other than the dormant partial bandwidth) of the activated SCell is activated, and because the channel measurement report is performed unlike when the SCell is deactivated, the base station may quickly activate the normal partial bandwidth of the activated SCell based on the measurement report or based on the measurement report of the dormant partial bandwidth of the activated SCell. Thus, the transmission delay can be reduced by allowing the carrier aggregation technology to be used quickly.

The first active partial bandwidth (or the first active non-dormant partial bandwidth or partial bandwidth configured or indicated by the RRC message) that is activated by switching from the dormant state or dormant partial bandwidth may be a partial bandwidth to be activated by switching the currently activated partial bandwidth of the SCell activated by the terminal according to a corresponding indication, or a partial bandwidth to be activated from a dormant state configured in an RRC message in the case in which the terminal instructs the base station to switch the partial bandwidth of the SCell activated by the DCI or MAC CE or RRC message of the PDCCH from the dormant partial bandwidth to the normal partial bandwidth (or a partial bandwidth other than the dormant partial bandwidth), or the terminal instructs to switch or switch the active partial bandwidth to the normal partial bandwidth in the dormant partial bandwidth, or the terminal instructs to switch or switch or activate the active partial bandwidth in the dormant partial bandwidth to the normal partial bandwidth (e.g., the first active partial bandwidth activated from dormancy), when the terminal is operating the partial bandwidth of one activated SCell as the dormant partial bandwidth, when the activated partial bandwidth in the activated SCell is the dormant partial bandwidth, or when the SCell switches to the dormant partial bandwidth.

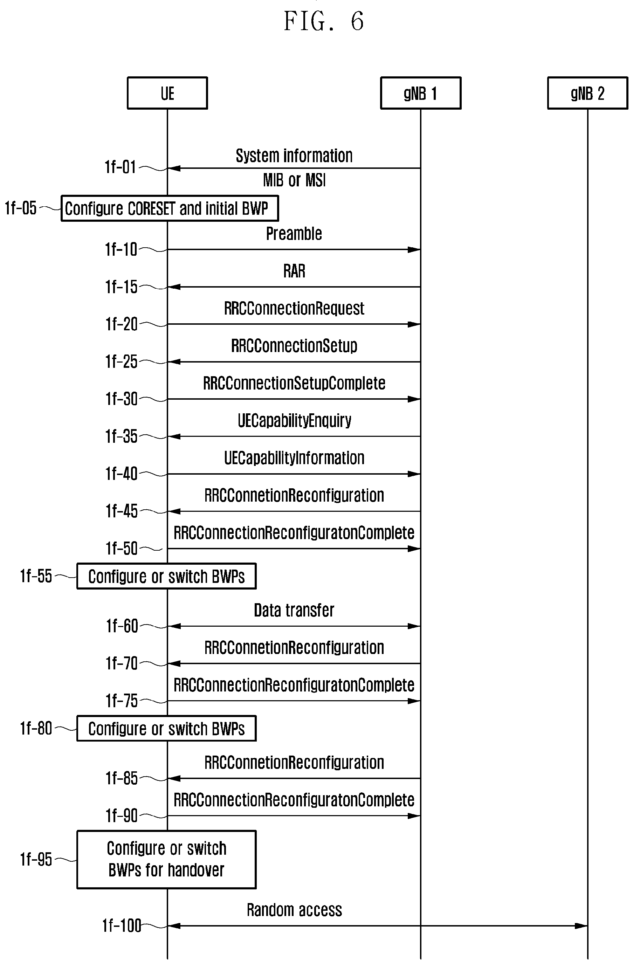

FIG. 6 is a diagram illustrating a procedure for a terminal to switch from an RRC idle mode to an RRC connected mode in a next-generation mobile communication system of the present disclosure, and proposing a method of configuring a plurality of partial bandwidths (Bandwidth part, BWP) and configuring a default bandwidth (default BWP) or a first active bandwidth (first active BWP).

One cell that the base station provides a service can service a very wide frequency band. First, the terminal may search the entire frequency band provided by the operator (PLMN) in units of a certain resource block (e.g., in units of 12 RBs). That is, the terminal may start searching for a Primary Synchronization Sequence (PSS)/Secondary Synchronization Sequence (SSS) in the entire system bandwidth in units of the resource blocks. If the signals are detected while searching for the PSS/SSS in units of the resource blocks, the signals may be read and interpreted (decoded), and a boundary between a subframe and a radio transmission resource frame may be identified.

In the above, when the synchronization is completed, the terminal may read the system information of the cell currently camped on. That is, the terminal may check the master system information block (MIB) or minimum system information (MSI) to check the information of the control resource set (CORESEST), and read the system information to check the initial partial bandwidth (Initial Bandwidth Part, BWP) information (1f-01, 1f-05). In the above, CORESET information refers to a location of a time/frequency transmission resource through which a control signal is transmitted from a base station, and for example, indicates a resource location through which a PDCCH channel is transmitted.

As described above, when the terminal completes the synchronization of the downlink signal with the base station and can receive the control signal, the terminal may perform a random access procedure in the initial partial bandwidth, may receive a random access response, request RRC connection configuration, and may receive an RRC message to perform RRC connection configuration (1f-10, 1f-15, 1f-20, 1f-25, 1f-30).

When the default RRC connection configuration is completed in the above, the base station may transmit an RRC message asking the terminal to the capability of the terminal in order to check the capability (UE capability) of the terminal (UECapabilityEnquiry, 1f-35). In another method, the base station may ask the MME or AMF for the capability of the terminal in order to check the capability of the terminal. This is because, when the terminal has previously accessed, the MME or AMF may have stored the capability information of the terminal. When there is no terminal capability information desired by the base station, the base station may request terminal capability information from the terminal.

The reason the base station transmits an RRC message to the terminal to check the terminal's performance is because it can check the terminal's performance. For example, it is possible to check which frequency band the terminal can read or the region of the frequency band that can be read. After checking the performance of the terminal, an appropriate partial bandwidth (BWP) may be configured for the terminal. When the terminal receives the RRC message asking for the capability of the terminal, in response to this, the terminal may indicate the range of the bandwidth supported by the terminal or the range of the bandwidth supported by the current system bandwidth as an offset from the reference center frequency, or may directly indicate the start point and the end point of the supported frequency bandwidth or may indicate the center frequency and bandwidth (1f-40).

In the above, the partial bandwidth may be configured with an RRCSetup message, an RRCResume message (1f-25), or an RRCReconfiguration message (1f-45) of RRC connection setup, the RRC message may include configuration information for a PCell, a Pscell, or a plurality of Scells, and a plurality of partial bandwidths may be configured for each cell (PCell, Pscell, or Scell). When configuring a plurality of partial bandwidths for each cell, a plurality of partial bandwidths to be used in the downlink of each cell may be set, and in the case of the FDD system, a plurality of partial bandwidths to be used in the uplink of each cell may be configured separately from the downlink partial bandwidths. In the case of the TDD system, a plurality of partial bandwidths to be commonly used in the downlink and the uplink of each cell may be set.

The information for configuring the partial bandwidth of each cell (PCell, Pscell, or Scell) may include some of the following information.
- Downlink partial bandwidth configuration information of the cell
   ■Initial downlink partial bandwidth (initial downlink BWP) configuration information
   ■A plurality of partial bandwidth configuration information and a partial bandwidth identifier (BWP ID) corresponding to each partial bandwidth
   ■Initial state configuration information of the downlink partial bandwidth of the cell (e.g., active state or dormant state or inactive state)
   ■Partial bandwidth identifier indicating the first active downlink partial bandwidth (first active downlink BWP)
   ■Partial bandwidth identifier indicating the default partial bandwidth (default BWP)
   ■Configuration information for PDCCH monitoring for each partial bandwidth. For example, CORESET information or Search Space resource information, or PDCCH transmission resource, period, subframe number information, etc.
   ■A partial bandwidth identifier indicating a dormant partial bandwidth or a 1-bit indicator indicating a dormant partial bandwidth for each partial bandwidth in the partial bandwidth configuration information
   ■A partial bandwidth identifier indicating the first active partial bandwidth activated from dormancy, or a 1-bit indicator indicating the first active partial bandwidth activated from dormancy for each partial bandwidth in the partial bandwidth configuration information
   ■Partial bandwidth disable timer configuration and timer value
- Uplink partial bandwidth configuration information of the cell
   ■Initial uplink partial bandwidth (initial uplink BWP) configuration information
   ■A plurality of partial bandwidth configuration information and a partial bandwidth identifier (BWP ID) corresponding to each partial bandwidth
   ■Initial state configuration information of the downlink partial bandwidth of the cell (e.g., active state or dormant state or inactive state)
   ■A partial bandwidth identifier indicating a dormant partial bandwidth, or a 1-bit indicator indicating a dormant partial bandwidth for each partial bandwidth in the partial bandwidth configuration information
   ■Partial bandwidth identifier indicating the first active uplink partial bandwidth (first active uplink BWP)

The initial partial bandwidth (initial BWP) or default partial bandwidth (default BWP) or first active partial bandwidth (first active BWP) configured above may be used for the following purposes, and may operate as follows according to the purpose.

In the above, the initial partial bandwidth (initial BWP) may be used as a partial bandwidth determined by the cell level (Cell-specific) existing one for each cell, and may be used as a partial bandwidth in which a terminal accessing the cell for the first time configures a connection to the cell through a random access procedure, or a terminal that has configured a connection performs synchronization. In addition, in the above, the base station may configure the initial downlink partial bandwidth to be used in the downlink (initial downlink BWP) and the initial uplink partial bandwidth to be used in the uplink for each cell, respectively. In addition, the configuration information for the initial partial bandwidth may be broadcast in the first system information (system information 1, SIB 1) indicated by CORESET, and the base station may reconfigure the connection to the terminal accessing it with an RRC message. In addition, the initial partial bandwidth may be used by designating a partial bandwidth identifier as 0 in each of the uplink and the downlink. That is, all terminals accessing the same cell may use the same initial partial bandwidth by designating the same partial bandwidth identifier 0. This is because the base station can transmit a random access response (RAR) message with an initial partial bandwidth that all terminals can read when performing the random access procedure, so there may be an advantage in facilitating the contention-based random access procedure.

In the above, the first active partial bandwidth (first active BWP) may be configured differently for each terminal (UE specific), and may be indicated by designating a partial bandwidth identifier among a plurality of partial bandwidths. The first active partial bandwidth may be configured for the downlink and the uplink, respectively, and may be configured as a partial bandwidth identifier as a first active downlink partial bandwidth (first active downlink BWP) and a first active uplink partial bandwidth (first active uplink BWP), respectively. The first active partial bandwidth may be used to indicate which partial bandwidth is to be initially activated and used when a plurality of partial bandwidths are configured in one cell. For example, when a Pcell or Pscell and a plurality of Scells are configured for the terminal and a plurality of partial bandwidths are configured for each Pcell, Pscell, or Scell, if the Pcell, Pscell, or Scell is activated, the terminal may activate and use a first active BWP among a plurality of partial bandwidths configured in the Pcell, Pscell, or Scell. That is, the first active downlink partial bandwidth (first active downlink BWP) may be activated and used for the downlink, and the first active uplink partial bandwidth (first active uplink BWP) may be activated and used for the uplink.

The operation in which the terminal switches the currently activated downlink partial bandwidth for the Scell and activates the same as the first active downlink partial bandwidth (or the partial bandwidth configured or indicated by the RRC message), or switches the currently activated uplink partial bandwidth to activate the first active uplink partial bandwidth (or the partial bandwidth configured or indicated by the RRC message) may be performed when the partial bandwidth of an Scell in an inactive or dormant state or an activated Scell is instructed to be activated or when an instruction to switch or activate from a deactivation or dormant partial bandwidth to a normal partial bandwidth is received through an RRC message, MAC control information, or DCI of a PDCCH. In addition, when the terminal receives an instruction to transition the activated Scell or partial bandwidth to a dormant state or an instruction to switch to or activate the dormant partial bandwidth through an RRC message, MAC control information, or DCI of PDCCH, the partial bandwidth may be switched or activated to a dormant partial bandwidth or the partial bandwidth may be made dormant.

In the above, switching to dormancy or dormant partial bandwidth or activation of dormant partial bandwidth may mean performing the operation proposed in the dormant state in the present disclosure. That is, an operation of measuring a channel for a downlink partial bandwidth (or a dormant partial bandwidth) and reporting it to the base station may be performed without performing PDCCH monitoring. In another method, similarly, when the active Scell or partial bandwidth is activated or switched to the normal partial bandwidth, since the downlink partial bandwidth will be switched to be activated to the first active downlink partial bandwidth, and the uplink partial bandwidth will be switched to be activated to the first active uplink partial bandwidth, the dormant partial bandwidth may be configured as the first active downlink or uplink partial bandwidth or default partial bandwidth.

In the above, the default partial bandwidth (default BWP) may be configured differently for each terminal (UE specific), and may be indicated by designating a partial bandwidth identifier among a plurality of partial bandwidths. The default partial bandwidth may be configured only for downlink. The default partial bandwidth may be used as a partial bandwidth to which an activated partial bandwidth among the plurality of downlink partial bandwidths will fall back after a predetermined time. For example, a partial bandwidth inactivity timer (BWP inactivity timer) may be configured for each cell or partial bandwidth with an RRC message, and the timer may be started or restarted when data transmission/reception occurs in an activated partial bandwidth other than the default partial bandwidth, or may be started or restarted when the activated partial bandwidth is switched to another partial bandwidth.

When the timer expires, the terminal may fallback or switch the downlink partial bandwidth activated in the cell to the default bandwidth. In the above, the switching may mean a procedure of inactivating a currently activated partial bandwidth and activating a partial bandwidth indicated by switching, and switching may be triggered by an RRC message, MAC control element, or L1 signaling (downlink control information (DCI) of the PDCCH). In the above, the switching may be triggered by indicating a partial bandwidth to be switched or activated, and the partial bandwidth may be indicated by a partial bandwidth identifier (e.g., 0, 1, 2, 3, or 4).

The reason for using the default partial bandwidth by applying only for the downlink is that the base station can facilitate scheduling by allowing the terminal to fall back to the default partial bandwidth after a certain period of time for each cell and to receive an instruction from the base station (e.g., DCI of PDCCH). For example, when the base station configures the default partial bandwidth of terminals accessing one cell as the initial partial bandwidth, the base station may continue to perform the scheduling instruction only in the initial partial bandwidth after a predetermined time. When the default partial bandwidth is not configured in the RRC message, the initial partial bandwidth may be regarded as the default partial bandwidth and fall back to the initial partial bandwidth when the partial bandwidth deactivation timer expires.

As further another method, in order to increase the implementation freedom of the base station, a default partial bandwidth for the uplink may be defined and configured to be used like the default partial bandwidth of the downlink.

In the above, the dormant partial bandwidth (dormant BWP) may mean a partial bandwidth that is in the dormant mode of an activated SCell or a dormant partial bandwidth (dormant BWP in activated SCell), and may be characterized in that the terminal cannot transmit and receive data with the base station when the dormant partial bandwidth is activated, does not monitor the PDCCH for checking the indication of the base station, or does not transmit a pilot signal, but performs channel measurement, and reports the measurement results for the measured frequency/cell/channel periodically or when an event occurs according to the base station configuration. Therefore, since the terminal does not monitor the PDCCH in the dormant BWP of the activated Scell and does not transmit a pilot signal, the battery can be saved compared to the normal partial bandwidth of the activated SCell (or the partial bandwidth that is not the dormant partial bandwidth) or when the normal partial bandwidth of the activated SCell (or the partial bandwidth that is not the dormant partial bandwidth) is activated. In addition, since the channel measurement report is performed unlike when the SCell is deactivated, the base station can quickly activate the normal partial bandwidth of the activated SCell based on the measurement report or the measurement report of the dormant partial bandwidth of the activated SCell, so that the carrier aggregation technology can be used quickly, thereby reducing the transmission delay.

In the above, when the partial bandwidth of one activated SCell of the terminal is operated as the dormant partial bandwidth, when the activated partial bandwidth in the activated SCell is the dormant partial bandwidth, or when the SCell switches to the dormant partial bandwidth, in a case in which the terminal instructs the base station to switch the partial bandwidth of the activated SCell from the dormant partial bandwidth to the normal partial bandwidth (or a partial bandwidth other than the dormant partial bandwidth) with a DCI or MAC CE or RRC message of the PDCCH, the terminal instructs to switch or switch the active partial bandwidth from the dormant partial bandwidth to the normal partial bandwidth, or the terminal instructs to switch or switch or activate the active partial bandwidth in the dormant partial bandwidth to the normal partial bandwidth (e.g., the first active partial bandwidth activated from dormancy), the first active partial bandwidth (or first active non-dormant partial bandwidth) activated from dormancy may be the first active partial bandwidth activated from dormancy configured in the RRC message for which the terminal needs to switch or activate the partial bandwidth of the activated SCell according to the above indication.

In the present disclosure, the meaning of switching the first partial bandwidth to the second partial bandwidth can be interpreted as the meaning of activating the second partial bandwidth, or may be interpreted as meaning that the activated first partial bandwidth is deactivated, and the second partial bandwidth is activated.

In addition, in the RRCSetup message or the RRCResume message 1f-25 or the RRCReconfiguration message 1f-45 of the RRC connection configuration, a state transition timer may be configured so that the terminal can perform state transition by itself even if the terminal does not receive an indication due to an RRC message, MAC control information, or DCI of a PDCCH from the base station. For example, a cell deactivation timer (ScellDeactivationTimer) may be configured for each Scell, and when the cell deactivation timer expires, the Scell may be transitioned to a deactivation state. Alternatively, by configuring a downlink (or uplink) partial bandwidth dormancy timer (DLBWPHibernationTimer or ULBWPHibernationTimer) for each SCell or for each partial bandwidth of each SCell, and by configuring the cell dormancy timer (ScellHibernationTimer) for each Scell, the Scell or the downlink (or uplink) partial bandwidth may be transitioned to a dormant state or switched to a dormant partial bandwidth when the cell dormancy timer or the downlink (or uplink) partial bandwidth dormancy timer expires. For example, it may be characterized in that when the cell dormancy timer or downlink (or uplink) partial bandwidth dormancy timer expires, the Scell or downlink (or uplink) partial bandwidth that was in the active state is transitioned to the dormant state or switched to the dormant partial bandwidth, and the Scell or downlink (or uplink) partial bandwidth that was in the inactive state or dormant state does not transition to the dormant state or dormant partial bandwidth.

In addition, the partial bandwidth dormancy timer may start when an instruction to switch or activate the partial bandwidth is received through an RRC message, MAC CE, or DCI of PDCCH, or may stop when an instruction to switch to a dormant partial bandwidth, an instruction to dormancy, or an instruction to activate a dormant partial bandwidth is received through an RRC message, MAC CE, or DCI of a PDCCH. In addition, by configuring a dormant cell deactivation timer (dormantScellDeactivationTimer) or a dormant state or downlink (or uplink) dormant partial bandwidth deactivation timer (dormantDLDeactivationTimer dormantULDeactivationTimer) for each Scell or downlink (or uplink) partial bandwidth, the Scell in the dormant state or the downlink (or uplink) dormant partial bandwidth may be transitioned to the inactive state. It may be characterized in that only the Scell or downlink (or uplink) dormant partial bandwidth that was in the dormant state transitions to the inactive state when the dormant state cell deactivation timer or the dormant state or downlink (or uplink) dormant partial bandwidth deactivation timer expires, and the Scell or downlink (or uplink) partial bandwidth that was in the active or inactive state does not transition to the inactive state. In addition, the dormant partial bandwidth dormancy timer may be started when an instruction to switch or dormant partial bandwidth or an instruction to activate dormant partial bandwidth is received through an RRC message or DCI of MAC CE or PDCCH, or may stop when an instruction to deactivate or activate a partial bandwidth or SCell or an instruction to activate a normal partial bandwidth (e.g., a partial bandwidth other than a dormant partial bandwidth configured by RRC) is received through an RRC message, MAC CE, or DCI of PDCCH.

It may be characterized in that when the cell deactivation timer (ScellDeactivationTimer) (or downlink (or uplink) partial bandwidth dormancy timer) and cell dormancy timer (ScellHibernationTimer) (or downlink (or uplink) dormancy partial bandwidth deactivation timer) are configured together, the cell dormancy timer (ScellHibernationTimer) (or downlink (or uplink) dormancy partial bandwidth dormancy timer) is prioritized. That is, when the cell dormancy timer (ScellHibernationTimer) (or downlink (or uplink) partial bandwidth dormancy timer) is set, even if the cell deactivation timer (ScellDeactivationTimer) (or downlink (or uplink) dormant partial bandwidth deactivation timer) expires, the corresponding Scell or downlink (or uplink) partial bandwidth is not deactivated. In other words, it may be characterized in that when the cell dormancy timer (or downlink (or uplink) partial bandwidth dormancy timer) is configured, the Scell or the downlink (or uplink) partial bandwidth is first transitioned from the active state to the dormant state due to expiration of the timer, or is switched to the dormant partial bandwidth, and the cell or partial bandwidth transitioned to the dormant state due to expiration of the dormant state cell or partial bandwidth deactivation timer is gradually transitioned to the inactive state again. Therefore, when the cell dormancy timer or partial bandwidth dormancy timer is configured, the cell inactivation timer or dormant partial bandwidth inactivation timer does not affect the Scell or downlink (or uplink) partial bandwidth state transition, and even if the cell deactivation timer or the dormant partial bandwidth deactivation timer expires, if the cell dormancy timer or the partial bandwidth dormancy timer is configured, the Scell or the downlink (or uplink) partial bandwidth is not immediately transferred to the inactive state.

When the cell deactivation timer (or downlink (or uplink) partial bandwidth dormancy timer) is not configured in the RRC message, the terminal may consider that the cell deactivation timer (or downlink (or uplink) partial bandwidth dormancy timer) is configured to an infinite value.

In addition, in the RRCSetup message, RRCResume message (1f-25), or RRCReconfiguration message (1f-45) of the RRC connection setup, frequency measurement configuration information and frequency measurement gap configuration information, etc. may be configured, and may include frequency measurement object information. In addition, in the RRCSetup message, the RRCResume message (1f-25), or the RRCResetting message (1f-45) of the RRC connection configuration in the above, a function for reducing the power consumption of the terminal (power saving mode) may be configured, and configuration information such as discontinuous reception (DRX) cycle or offset or on-duration interval or time information, or time information regarding when to monitor or detect the PDCCH from the base station before the on-duration interval (interval in which the terminal needs to monitor PDCCH) in the DRX cycle, or short time period information, etc. may be configured with the function to reduce the power consumption.

When the function for reducing the power consumption of the terminal is configured in the above, the terminal may configure the DRX cycle, may detect a wake-up signal (WUS) signal in the interval configured to monitor the PDCCH of the base station before the on-duration interval in the above, and may indicate to the terminal whether to skip (or not perform) or perform PDCCH monitoring in the immediately following on-duration period with DCI of the PDCCH of the WUS signal. Although the terminal should always monitor the PDCCH in the on-duration period, the WUS signal as described above allows the base station to instruct the terminal not to monitor the PDCCH in the on-duration period to save battery consumption of the terminal.

When the RRC connection configuration is completed as described above, the terminal may configure a plurality of partial bandwidths according to an indication configured in the RRC message. In addition, in order to save battery, one or a small number of bandwidths among the plurality of configured partial bandwidths may be activated. For example, one partial bandwidth to be activated may be indicated. In addition, the base station may instruct activation of the partial bandwidth with an RRC message or with MAC control information (MAC CE) or L1 signaling (PHY layer control signal such as DCI of PDCCH) to switch from the initial access partial bandwidth to a new partial bandwidth.

As another method, it is possible to define new bitmap information in the DCI of the PDCCH and indicate whether to activate, dormant, or deactivate. As another method, the bitmap may indicate whether to activate the normal partial bandwidth (e.g., the first active partial bandwidth to be activated from dormancy), activate the dormant partial bandwidth, switch to the dormant partial bandwidth, or perform partial bandwidth switching. Since there may be many other newly accessing users in the initial access partial bandwidth, it may be much more advantageous to allocate a new partial bandwidth and separately manage the connected users in terms of scheduling. This is because the initial access partial bandwidth is not configured for each terminal, but can be shared and used by all terminals. In addition, in order to reduce signaling overhead, a default partial bandwidth may be dynamically indicated by the MAC control information, L1 signaling, or system information.

In the present disclosure, when the base station or network supports the MBS service to the terminal, bearer configuration information for the MBS service or transmission resource information (e.g., time resource or frequency resource, bandwidth, frequency, partial bandwidth (or partial bandwidth identifier), subcarrier interval, transmission resource period, RNTI identifier for each MBS service, or logical channel identifier for each MBS service) for the MBS service may be configured to the terminal in system information, RRC message (e.g., RRCSetup, RRCResume, RRCReconfiguration, RRCRelease, or a newly defined new RRC message), or a control message for an MBS channel. As another method, the bearer configuration information for the MBS service may be reserved or designated as a default configuration. In the above, the bearer for the MBS service may be considered as a multicast bearer or a unicast bearer from the viewpoint of the base station or the terminal. In another method, in a system information or RRC message (e.g., RRCSetup, RRCResume, RRCReconfiguration, RRCRelease, or a newly defined new RRC message) or a control message for an MBS channel, a multicast bearer for the MBS service or a unicast bearer for the MBS service can be distinguished and configured to the terminal by configuring a separate identifier or indicator.

The bearer or multicast bearer or unicast bearer for the MBS service described in the present disclosure may be interpreted as a multicast bearer or unicast bearer.

The downlink shared channel (DL-SCH) described in the present disclosure may include or indicate a common control channel (CCCH), a dedicated control channel (DCCH), or a dedicated traffic channel (DTCH).

In the present disclosure, bearer may mean including SRB and DRB, SRB means Signaling Radio Bearer, and DRB means Data Radio Bearer. The SRB is mainly used to transmit and receive RRC messages of the RRC layer device, and the DRB is mainly used to transmit and receive user layer data. In addition, UM DRB means a DRB using an RLC layer device operating in unacknowledged mode (UM) mode, and AM DRB means a DRB using an RLC layer device operating in acknowledged mode (AM) mode.

MBS data for MBS service described in the present disclosure may be interpreted as MBS channel configuration information, bearer configuration, or MBS control data for service configuration, or MBS user data supporting MBS service.

The radio network temporary identifier (RNTI) described in the present disclosure is an identifier used by the terminal to monitor a physical downlink control channel (PDCCH) in the PHY layer device, descramble or check the received cyclic redundancy check (CRC) of the PDCCH, and determine whether it is an RNTI value configured in the terminal or an RNTI value corresponding to a PDCCH that the terminal intends to receive, and to determine whether the terminal is a PDCCH to be read.

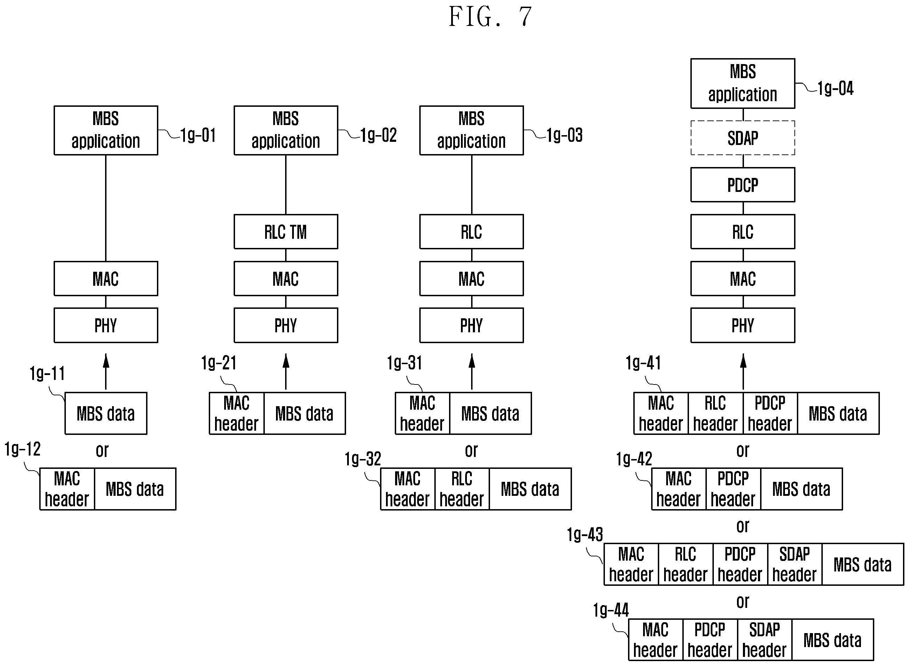

FIG. 7 is a diagram illustrating a structure of a bearer that can be configured for an MBS service to a terminal in system information, an RRC message (e.g., RRCSetup, RRCResume, RRCReconfiguration, RRCRelease, or a newly defined new RRC message), or a control message for an MBS channel or that is configured by the terminal to receive the MBS service, when the base station or the network supports the MBS service to the RRC connected mode, RRC deactivation mode, or RRC idle mode terminal. In addition, the bearer structures proposed in FIG. 7 can be extended and applied or configured even when a general data service is supported.

In FIG. 7, the structure of a bearer configured for the MBS service may have one or a plurality of structures among the following bearer structures. As another method, as for the configuration information of the bearer for the MBS service, one or a plurality of structures among the following bearer structures may be promised or designated as a default configuration. In addition, the following bearer structures may be configured or applied to a terminal or a base station.
- First bearer structure (1g-01): If a unicast bearer or a multicast bearer for the MBS service is configured with the first bearer structure (1g-01) shown in FIG. 7, the terminal may configure a bearer structure for directly connecting the MAC layer device and the upper MBS application layer device as a bearer for the MBS service. In the first bearer structure, transmission of HARQ ACK or NACK or HARQ retransmission procedure or HARQ processing procedure of the MAC layer device may not be applied to the first bearer structure. Alternatively, in the first bearer structure, the terminal may transfer MBS data (MBS control data or MBS user data) received through the PHY layer device or the MAC layer device to the upper MBS application layer device. In the first bearer structure, MBS data may not include a MAC header. For example, this is because if a separate physical channel or transport channel for the MBS service is configured and a separate transmission resource (frequency or time resource or transmission period) is configured, the MAC layer device can distinguish MBS data even without the MAC header. In another method, for example, this is because when a separate physical channel or transmission channel for the MBS service is configured and a separate transmission resource (frequency or time resource, or transmission period) is configured, if the first RNTI for MBS data is allocated or determined, MBS data can be distinguished even if there is no MAC header in the PHY layer device or the MAC layer device. In the above, the RNTI for MBS data may be assigned or designated as the 1-1 RNTI for MBS control data (or MBS control data channel) or the 1-2 RNTI for MBS user data (or MBS user data channel), respectively. In the first bearer structure, the MAC layer device may not basically apply HARQ ACK or NACK transmission, HARQ retransmission procedure, or HARQ processing procedure to a bearer supporting the MBS service. Alternatively, in the system information or the RRC message (e.g., RRCSetup, RRCResume, RRCReconfiguration, RRCRelease, or a newly defined new RRC message) or the control message for the MBS channel, the configuration information of the SDAP layer device is not configured for the first bearer structure, and the SDAP layer device may transfer the data of the first bearer directly to the MBS application layer device without processing (e.g., bypass) the data. In another method, the SDAP layer device configuration information for the bearer may be configured in system information or an RRC message (e.g., RRCSetup, RRCResume, RRCReconfiguration, RRCRelease, or a newly defined new RRC message) or a control message for an MBS channel, and mapping information between QoS flow and bearer may be configured or reconfigured. Also, in the SDAP layer device configuration information, the presence or absence of an SDAP header for downlink data or the presence or absence of an SDAP header for uplink data may be configured. In addition, a reconfiguring or switching procedure between a unicast bearer or a multicast bearer may be supported by using the QoS flow and the mapping information of the bearer. In addition, in the SDAP configuration information for the bearer, the QoS flow for the MBS service may be mapped to the bearer to support MBS services. The MBS data that may be received or transmitted in the first bearer structure may have a structure of 1g-11 or 1g-12. For example, the MBS data that may be received or transmitted in the first bearer structure may have a structure of 1g-11 or 1g-12 according to the configuration information of the system information or the RRC message (e.g., RRCSetup, RRCResume, RRCReconfiguration, RRCRelease, or a newly defined new RRC message) or the control message for the MBS channel. As described above, the overhead due to the header can be reduced.
- Second bearer structure (1g-02): If a unicast bearer or a multicast bearer for the MBS service is configured with the second bearer structure 1g-02 shown in FIG. 7, the terminal may configure an MBS control data channel connected to the MAC layer device, an MBS user data channel, or an RLC layer device corresponding to a logical channel identifier (or MBS service) of the MBS user data channel. In addition, a bearer structure for directly connecting the RLC layer device to an upper MBS application layer device may be configured as a bearer for the MBS service. In the second bearer structure, transmission of HARQ ACK or NACK of the MAC layer device, HARQ retransmission procedure, or HARQ processing procedure may not be applied to the second bearer. Alternatively, in the second bearer structure, the terminal may transmit MBS data (MBS control data or MBS user data) received through the PHY layer device or the MAC layer device to the higher MBS application layer device through the RLC layer device. In the second bearer structure, MBS data may not include a MAC header. For example, when a separate physical channel or transport channel for the MBS service is configured and a separate transmission resource (frequency or time resource or transmission period) is configured, the MAC layer device can distinguish MBS data even without the MAC header. In another method, for example, when a separate physical channel or transmission channel for the MBS service is configured, and a separate transmission resource (frequency or time resource or transmission period) is configured, if the first RNTI for MBS data is allocated or determined, MBS data can be distinguished even if there is no MAC header in the PHY layer device or the MAC layer device. In the above, for the RNTI for MBS data, the 1-1 RNTIs for MBS control data (or MBS control data channel) or the first 1-2 RNTIs for MBS user data (or MBS user data channel or logical channel identifier or per MBS service) may be assigned or specified, respectively. In another method, a separate physical channel or transport channel for the MBS service is configured in the second bearer structure, or the MBS service is supported in a DL-SCH (Downlink Shared Channel) used for a general data service, or a separate transmission resource (frequency or time resource or transmission period) is configured, the MBS data may include a MAC header, MBS control data (or MBS control data channel), or MBS user data (or MBS user data channel or logical channel identifier, or by MBS service), or MBS service may be distinguished based on the logical channel identifier included in the MAC header, or may be distinguished to be demultiplexed and delivered to each RLC layer device. In another method, when a separate physical channel or transmission channel for the MBS service is configured in the second bearer structure, or the MBS service is supported in a downlink shared channel (DL-SCH) used for a general data service, or a separate transmission resource (frequency or time resource or transmission period) is configured, MBS data may be received from the transmission resource, MBS data may be received from the transmission resource to the RNTI according to a PDCCH indication when the first RNTI for MBS data is allocated or determined, and the MBS data may include a MAC header, the MBS control data (or MBS control data channel) or MBS user data (or MBS user data channel, logical channel identifier, or by MBS service) or MBS service can be distinguished, or distinguished to be demultiplexed and delivered to each RLC layer device based on the logical channel identifier included in the MAC header. That is, different logical channel identifiers may be configured or defined for each MBS control data channel or MBS user data channel or MBS service as the logical channel, and the MBS service may be supported. The RLC layer device configured in the second bearer structure may be configured to transparent mode (TM), and may be characterized in that the RLC header is not included in the MBS data. Alternatively, the RLC serial number length may not be configured in the RLC layer device. Alternatively, the RLC layer device may not apply a data processing procedure to the MBS data. In addition, the RLC layer device configured in the second bearer structure may not apply a data partitioning procedure or a data reassembly procedure for MBS data in TM mode. Alternatively, the RLC layer device configured in the second bearer structure may configure the RLC reception window size to 0 or may not operate the RLC reception window. In the second bearer structure, the MAC layer device may not basically apply HARQ ACK or NACK transmission, HARQ retransmission procedure or HARQ processing procedure to a bearer supporting the MBS service. Alternatively, in the system information or RRC message (e.g., RRCSetup, RRCResume, RRCReconfiguration, RRCRelease, or a newly defined new RRC message) or a control message for an MBS channel, the configuration information of the SDAP layer device may not be configured for the second bearer structure, and the SDAP layer device may directly transfer the data of the second bearer to the MBS application layer device without processing (e.g., bypass) the data. Alternatively, in the system information or RRC message (e.g., RRCSetup, RRCResume, RRCReconfiguration, RRCRelease, or a newly defined new RRC message) or a control message for an MBS channel, the SDAP layer device configuration information for the bearer may be configured, and mapping information between QoS flow and bearer may be configured or reconfigured. Also, in the SDAP layer device configuration information, the presence or absence of an SDAP header for downlink data or the presence or absence of an SDAP header for uplink data may be configured. In addition, a reconfiguring or switching procedure between a unicast bearer or a multicast bearer may be supported by using the QoS flow and the mapping information of the bearer. In addition, in the SDAP configuration information for the bearer, the QoS flow for the MBS service may be mapped to the bearer to support MBS services. The MBS data that may be received or transmitted in the second bearer structure may have a structure of 1g-21. For example, according to the configuration information of the system information or the RRC message (e.g., RRCSetup, RRCResume, RRCReconfiguration, RRCRelease, or a newly defined new RRC message) or the control message for the MBS channel, the MBS data that can be received or transmitted in the second bearer structure above may have a structure of 1g-21. As described above, the overhead due to the header can be reduced.
- Third bearer structure (1g-03): If a unicast bearer or a multicast bearer for the MBS service is configured with the third bearer structure (1g-03) shown in FIG. 7, the terminal may configure the RLC layer device corresponding to the MBS control data channel, the MBS user data channel, or the logical channel identifier (or MBS service) of the MBS user data channel connected to the MAC layer device. In addition, a bearer structure for directly connecting the RLC layer device to an upper MBS application layer device may be configured as a bearer for the MBS service. In the third bearer structure, transmission of HARQ ACK or NACK of the MAC layer device, HARQ retransmission procedure, or HARQ processing procedure may not be applied to the third bearer. In another method, in the control message for the system information or RRC message (e.g., RRCSetup, RRCResume, RRCReconfiguration, RRCRelease, or a newly defined new RRC message) or the control message for the MBS channel, transmission of the HARQ ACK or NACK of the MAC layer device, or the HARQ retransmission procedure, or the HARQ processing procedure may be configured as an indicator whether or not to be performed. For example, in the control message for the system information or RRC message (e.g., RRCSetup, RRCResume, RRCReconfiguration, RRCRelease, or a newly defined new RRC message) or the control message for the MBS channel, when an indicator is configured (indicator value indicates a specific value or there is no indicator field) to perform HARQ ACK or NACK transmission, or HARQ retransmission procedure or HARQ processing procedure, it may be performed. Alternatively, if the indicator is configured (indicator value indicates a specific value or there is no indicator field) so as not to perform HARQ ACK or NACK transmission, HARQ retransmission procedure, or HARQ processing procedure in the above, it may not be performed, or transmission of HARQ ACK or NACK, HARQ retransmission procedure, or HARQ processing procedure may not be basically applied to a bearer supporting the MBS service in the MAC layer device. Alternatively, the indicator may be configured for an MBS control data channel or an MBS user data channel or a logical channel identifier (or MBS service) or a bearer identifier of the MBS user data channel, respectively. In another method, when the MAC layer device transmits HARQ ACK or NACK, or the HARQ retransmission procedure, or the HARQ processing procedure is performed or configured, or is configured for a specific logical channel identifier or MBS service or bearer, in the control message for the system information or RRC message (e.g., RRCSetup, RRCResume, RRCReconfiguration, RRCRelease, or a newly defined new RRC message) or the control message for the MBS channel, an indicator (either the indicator value indicates a specific value or there is no indicator field) may be configured to perform HARQ reordering or RLC reordering (or in-sequence delivery) for the RLC layer device configured for the MBS control data channel or the MBS user data channel or the logical channel identifier (or MBS service) or the bearer identifier of the MBS user data channel. Alternatively, the RLC reception window size may be configured to a value greater than 0 (e.g., 2^(RLC serial number length-1)). This is because the order of data may be mixed when HARQ process or retransmission is performed on MBS data, the order of data may be mixed, it is necessary to perform rearrangement on MBS data based on the RLC reception window or based on the RLC serial number, or to run the reordering timer in order to support the MBS service. In another method, when the MAC layer device does not perform the transmission of HARQ ACK or NACK, or the HARQ retransmission procedure, or the HARQ processing procedure is not performed or is configured not to be performed, in the control message for the system information or RRC message (e.g., RRCSetup, RRCResume, RRCReconfiguration, RRCRelease, or a newly defined new RRC message) or the control message for the MBS channel, the HARQ reordering or RLC reordering (or in-sequence delivery) may not be performed by configuring an indicator (indicator value indicates a specific value or no indicator field) not to perform the function for the RLC layer device configured for the MBS control data channel or the MBS user data channel or the logical channel identifier (or MBS service) or the bearer identifier of the MBS user data channel. Alternatively, by not applying HARQ ACK or NACK transmission, HARQ retransmission procedure, or HARQ processing procedure to the bearer supporting the MBS service by default in the MAC layer device, even the RLC layer device configured in the bearer supporting the MBS service may not basically perform the HARQ reordering or RLC reordering function (or in-sequence delivery). Alternatively, the reception RLC window may not be operated by configuring the RLC reception window size to 0. For example, without the configuration information or basically, the terminal may transmit data to an upper layer device by an out-of-sequence delivery method regardless of the order of data always received from the RLC layer device. Alternatively, in the third bearer structure, the terminal may transmit MBS data (MBS control data or MBS user data) received through the PHY layer device or the MAC layer device to the higher MBS application layer device through the RLC layer device. In the third bearer structure, MBS data may include a MAC header. Alternatively, the logical channel identifier included in the MAC header may be configured or defined to indicate an MBS control data channel or an MBS user data channel or each MBS service. For example, when a separate physical channel or transmission channel for the MBS service is configured and a separate transmission resource (frequency or time resource, or transmission period) is configured, if the first RNTI for MBS data is allocated or determined, it is possible to distinguish whether MBS data is MBS control data or MBS user data based on RNTI or logical channel identifier, or data for which MBS service in the PHY layer device or the MAC layer device, or it may be distinguished to be demultiplexed and delivered to each RLC layer device. In the above, for the RNTI for MBS data, an 1-1 RNTI for MBS control data (or MBS control data channel) or 1-2 RNTI for MBS user data (or MBS user data channel, or logical channel identifier, or MBS service-specific) may be allocated or designated, respectively. In another method, in the third bearer structure, a separate physical channel or transport channel for the MBS service is configured or the MBS service is supported in a downlink shared channel (DL-SCH) used for a general data service, or a separate transmission resource (frequency or time resource or transmission period) is configured, the MBS data may include a MAC header, the MBS control data (or by MBS control data channel) or MBS user data (MBS user data channel, logical channel identifier, or MBS service) or MBS service may be distinguished, or demultiplexed and delivered to each RLC layer device, based on the logical channel identifier included in the MAC header. In another method, in the third bearer structure, when a separate physical channel or transport channel for the MBS service is configured, or the MBS service is supported in a downlink shared channel (DL-SCH) used for a general data service, or a separate transmission resource (frequency or time resource or transmission period) is configured, the MBS data may be received from the transmission resource, and if the first RNTI for MBS data is allocated or determined, the MBS data may be received from the transmission resource to the RNTI according to a PDCCH indication, the MBS data may include a MAC header, the MBS control data (MBS control data channel) or MBS user data (or by MBS user data channel, logical channel identifier, or MBS service) or MBS service can be distinguished based on the logical channel identifier included in the MAC header, or distinguished to be demultiplexed and delivered to each RLC layer device. That is, different logical channel identifiers may be configured or defined for each MBS control data channel or MBS user data channel or MBS service as the logical channel, and the MBS service may be supported. The RLC layer device configured in the third bearer structure may be configured to a transparent mode (TM) or unacknowledged mode (UM) or a uni-directional mode of the UM mode, a bi-directional mode of the UM mode, or an acknowledged mode (AM) mode. In the RLC TM mode, the RLC header may not be included in the MBS data, and in the RLC UM mode or the AM mode, the RLC header may be included. In addition, in the RLC TM mode, the RLC layer device may not apply a data processing procedure to the MBS data (e.g., may not apply a data division procedure or a reassembly procedure), and in the RLC UM mode or the RLC AM mode, a data processing procedure may be applied to the MBS data. Alternatively, in the system information or RRC message (e.g., RRCSetup, RRCResume, RRCReconfiguration, RRCRelease, or a newly defined new RRC message) or a control message for an MBS channel, the configuration information of the SDAP layer device may not configure for the third bearer structure, and the SDAP layer device does not process the data of the third bearer (e.g., bypass) and may directly transmit the same to the MBS application layer device. In another method, SDAP layer device configuration information for the bearer may be configured in system information or an RRC message (e.g., RRCSetup, RRCResume, RRCReconfiguration, RRCRelease, or a newly defined new RRC message) or a control message for an MBS channel, and mapping information between QoS flow and bearer may be configured or reconfigured. Also, in the SDAP layer device configuration information, the presence or absence of an SDAP header for downlink data or the presence or absence of an SDAP header for uplink data may be configured. In addition, a reconfiguring or switching procedure between a unicast bearer or a multicast bearer may be supported by using the QoS flow and the mapping information of the bearer. In addition, in the SDAP configuration information for the bearer, the QoS flow for the MBS service may be mapped to the bearer to support MBS services. The MBS data that may be received or transmitted in the third bearer structure may have a structure of 1g-31 or 1g-32. For example, the MBS data that may be received or transmitted in the third bearer structure above may have a structure of 1g-31 or 1g-32 according to the configuration information of the system information or RRC message (e.g., RRCSetup, RRCResume, RRCReconfiguration, RRCRelease, or a newly defined new RRC message) or a control message for the MBS channel. As described above, the overhead due to the header can be reduced. When configured to perform HARQ ACK or NACK transmission of the MAC layer device, or HARQ retransmission procedure, or HARQ processing procedure, or when configured as an indicator in the system information or an RRC message (e.g., RRCSetup, RRCResume, RRCReconfiguration, RRCRelease, or a newly defined new RRC message) or a control message for an MBS channel, transmission resource (e.g., time or frequency resource, transmission channel, frequency interval, etc.) information for transmitting HARQ ACK or NACK may be transmitted together. When it is configured to perform HARQ ACK or NACK transmission, HARQ retransmission procedure, or HARQ processing procedure in the above, the terminal of the RRC connected mode, RRC deactivation mode, or RRC idle mode may receive the downlink MBS data and transmit HARQ ACK or NACK with the transmission resource (e.g., physical transmission resource) configured above. In the above, if the base station detects even one NACK in the transmission resource, or detects that at least one terminal has transmitted a NACK, the base station may perform retransmission on the MBS data. Alternatively, the base station may perform retransmission so that all terminals can receive it through the MBS channel. In another method, the RRC connected mode terminal, the RRC deactivation mode terminal, or the RRC idle mode terminal may receive the downlink MBS data in the above and then define MAC control information (RLC control information, PDCP control information, or RRC message), and may transmit the MAC control information including the terminal identifier or the MBS service identifier or the logical channel identifier or the RNTI identifier or the bearer identifier, so that the base station may indicate which terminal did not successfully receive the data (e.g., the MAC control information (or RLC control information, PDCP control information, or RRC message) may be transmitted in the transmission resource configured above). The base station may retransmit the MBS data only to the RRC connected mode, RRC idle mode, or RRC deactivation mode terminal indicating that the NACK has been transmitted or failed to be successfully received in the transmission resource. As another method, when the base station detects even one NACK in the transmission resource, or detects that at least one terminal has transmitted a NACK, the base station may perform retransmission on the MBS data. Alternatively, retransmission may be performed so that all terminals may receive the same through the MBS channel.
- Fourth bearer structure 1g-04: When a unicast bearer or a multicast bearer for the MBS service is configured with the fourth bearer structure 1g-04 shown in FIG. 7, the terminal may configure an RLC layer device corresponding to a logical channel identifier (or MBS service) of an MBS control data channel or MBS user data channel or MBS user data channel connected to the MAC layer device. In addition, the terminal may configure a PDCP layer device connected to the RLC layer device, and may configure a bearer structure for directly connecting the PDCP layer device to a higher MBS application layer device as a bearer for the MBS service. In the fourth bearer structure, transmission of HARQ ACK or NACK of the MAC layer device, HARQ retransmission procedure, or HARQ processing procedure may not be applied to the fourth bearer. In another method, in the control message for the system information or RRC message (e.g., RRCSetup, RRCResume, RRCReconfiguration, RRCRelease, or a newly defined new RRC message) or MBS channel, whether or not to perform transmission of HARQ ACK or NACK of the MAC layer device, or HARQ retransmission procedure, or HARQ processing procedure may be configured as an indicator. For example, when an indicator is configured (indicator value indicates a specific value or there is no indicator field) to perform HARQ ACK or NACK transmission, HARQ retransmission procedure, or HARQ processing procedure in the control message for the system information or RRC message (e.g., RRCSetup, RRCResume, RRCReconfiguration, RRCRelease, or a newly defined new RRC message) or MBS channel, it may be performed. Alternatively, when the indicator is configured (indicator value indicates a specific value or there is no indicator field) so as not to perform HARQ ACK or NACK transmission, HARQ retransmission procedure, or HARQ processing procedure in the above, it may not be performed, or the transmission of HARQ ACK or NACK or HARQ retransmission procedure or HARQ processing procedure may not be applied to a bearer supporting the MBS service in the MAC layer device. Alternatively, the indicator may be configured for an MBS control data channel or an MBS user data channel or a logical channel identifier (or MBS service) or a bearer identifier of the MBS user data channel, respectively. In another method, when the MAC layer device transmits the HARQ ACK or NACK, or the HARQ retransmission procedure, or the HARQ processing procedure is performed or configured, or is configured for a specific logical channel identifier or MBS service or bearer, an indicator (indicator value indicates a specific value or there is no indicator field) may be configured to perform HARQ reordering or RLC reordering (in-sequence delivery) for the RLC layer device configured for the MBS control data channel, or the MBS user data channel, or the logical channel identifier (or MBS service) of the MBS user data channel, or the bearer identifier, in the system information or RRC message (e.g., RRCSetup, RRCResume, RRCReconfiguration, RRCRelease, or a newly defined new RRC message) or control message for the MBS channel. Alternatively, the RLC reception window size may be configured to a value greater than 0 (e.g., 2^(RLC serial number length-1)). This is because, since the order of data may be mixed when HARQ process or retransmission is performed on MBS data, it is necessary to perform rearrangement on MBS data based on the RLC reception window or based on the RLC serial number, or to run the reordering timer in order to support the MBS service. In another method, when the MAC layer device does not perform the transmission of HARQ ACK or NACK, or the HARQ retransmission procedure, or the HARQ processing procedure is not performed or is configured not to be performed, an indicator (either an indicator value indicates a specific value or there is no indicator field) may be configured so that HARQ reordering or RLC reordering function (RLC reordering or in-sequence delivery) is not performed for the RLC layer device configured for the MBS control data channel or the MBS user data channel or the logical channel identifier (or MBS service) or the bearer identifier of the MBS user data channel, in the system information or RRC message (e.g., RRCSetup, RRCResume, RRCReconfiguration, RRCRelease, or newly defined new RRC message) or the control message for the MBS channel. Alternatively, by not basically applying HARQ ACK or NACK transmission, HARQ retransmission procedure, or HARQ processing procedure to the bearer supporting the MBS service in the MAC layer device, even the RLC layer device configured in the bearer supporting the MBS service may not basically perform HARQ reordering or RLC reordering (or in-sequence delivery). Alternatively, the reception RLC window may not be operated by configuring the RLC reception window size to 0. For example, in the absence of the configuration information or basically, the terminal may transmit data always received from the RLC layer device to the upper layer device in an out-of-sequence delivery method regardless of the order. Alternatively, in the fourth bearer structure, the terminal may transmit MBS data (MBS control data, or MBS user data) received through the PHY layer device or the MAC layer device to the higher MBS application layer device through the RLC layer device or the PDCP layer device. In the fourth bearer structure, MBS data may include a MAC header. Alternatively, the logical channel identifier included in the MAC header may be configured or defined to indicate an MBS control data channel or an MBS user data channel or each MBS service. For example, in the case in which a separate physical channel or transmission channel for the MBS service is configured and a separate transmission resource (frequency or time resource, or transmission period) is configured, when the first RNTI for MBS data is allocated or determined, it is possible to distinguish whether the MBS data is MBS control data, MBS user data, or data for which MBS service based on RNTI or logical channel identifier in the PHY layer device or the MAC layer device, and may be demultiplexed and delivered to each RLC layer device after classification. As the RNTI for MBS data, the 1-1 RNTI for MBS control data (or MBS control data channel) or the 1-2 RNTIs for MBS user data (by MBS user data channel, logical channel identifier, or MBS service) may be allocated or designated, respectively. In another method, a separate physical channel or transport channel for the MBS service may be configured in the fourth bearer structure, or the MBS service may be supported in a downlink shared channel (DL-SCH) used for a general data service, or the MBS data may include a MAC header when a separate transmission resource (frequency, time resource, or transmission period) is configured, the MBS control data (or MBS control data channel) or MBS user data (by MBS user data channel, logical channel identifier, or MBS service) or MBS service may be distinguished based on the logical channel identifier included in the MAC header, or may be distinguished to be demultiplexed and delivered to each RLC layer device. In another method, when a separate physical channel or transport channel for the MBS service is configured in the fourth bearer structure, or the MBS service is supported in a downlink shared channel (DL-SCH) used for a general data service, or a separate transmission resource (frequency, time resource, or transmission period) is configured, the MBS data may be received from the transmission resource, and if the first RNTI for MBS data is allocated or determined, MBS data may be received from the transmission resource to the RNTI according to a PDCCH indication, the MBS data may include a MAC header, and the MBS control data (or MBS control data channel) or MBS user data (or MBS user data channel, or logical channel identifier, or per MBS service) or MBS service may be distinguished based on the logical channel identifier included in the MAC header, or distinguished to be demultiplexed and transmitted to each RLC layer device separately. In addition, by dividing the MBS control data or MBS user data MBS service, only some services may be demultiplexed and delivered to each RLC layer device, or some services may be demultiplexed and delivered to each RLC layer device except for some services. That is, different logical channel identifiers may be configured or defined for each MBS control data channel, MBS user data channel, or MBS service as the logical channel, and the MBS service may be supported. The RLC layer device configured in the fourth bearer structure may be configured to a transparent mode (TM) or unacknowledged mode (UM) or a uni-directional mode of the UM mode, a bi-directional mode of the UM mode, or an acknowledged mode (AM) mode. In the RLC TM mode, the RLC header may not be included in the MBS data, and in the RLC UM mode or the RLC AM mode, the RLC header may be included. In addition, in the RLC TM mode, the RLC layer device may not apply a data processing procedure to the MBS data (e.g., may not perform a data division procedure or a reassembly procedure), and a data processing procedure may be applied to the MBS data in the RLC UM mode or the RLC AM mode. In the system information or RRC message for the fourth bearer structure (e.g., RRCSetup, RRCResume, RRCReconfiguration, RRCRelease, or a newly defined new RRC message) or a control message for the MBS channel, the overhead of MBS data may be reduced by configuring the RLC layer device to the TM mode (e.g., the overhead may be reduced by not using the RLC header). Alternatively, in the system information or RRC message for the fourth bearer structure (e.g., RRCSetup, RRCResume, RRCReconfiguration, RRCRelease, or a newly defined new RRC message) or a control message for the MBS channel, an out-of-sequence delivery function in the PDCP layer device may be configured to prevent transmission delay of MBS data. As another method, in the fourth bearer structure for the MBS bearer, the PDCP layer device may perform an out-of-sequence delivery function by default (e.g., always configured the out-of-sequence delivery indicator to True) to prevent transmission delay of MBS data. This is because, when the HARQ retransmission or HARQ processing procedure is not performed on MBS data and the RLC retransmission procedure is not performed, the reordering function in the PDCP layer device may cause transmission delay when data loss occurs. As another method, the PDCP layer device may basically perform a PDCP reordering function, may determine the size of the reception window (for example, the length of the PDCP serial number 16 bits, the window size 2^(16-1)) based on the PDCP reception window length of the PDCP serial number, and may drive a reordering timer. Alternatively, in the fourth bearer structure, SDAP layer device configuration information may be configured in system information or RRC message (e.g., RRCSetup, RRCResume, RRCReconfiguration, RRCRelease, or a newly defined new RRC message) or a control message for an MBS channel, and the QoS flow and bearer mapping information may be configured or reconfigured. In addition, in the SDAP layer device configuration information, the presence or absence of an SDAP header for downlink data or the presence or absence of an SDAP header for uplink data may be configured. In addition, a reconfiguring or switching procedure between a unicast bearer or a multicast bearer may be supported by using the QoS flow and the mapping information of the bearer. Alternatively, in the system information or RRC message (e.g., RRCSetup, RRCResume, RRCReconfiguration, RRCRelease, or a newly defined new RRC message) or a control message for an MBS channel, when the configuration information of the SDAP layer device is not configured for the third bearer structure, the SDAP layer device may transfer the data of the fourth bearer directly to the MBS application layer device without processing (e.g., bypass) the data. In addition, in the SDAP configuration information for the bearer, the QoS flow for the MBS service may be mapped to the bearer to support MBS services. MBS data that may be received or transmitted in the fourth bearer structure may have a structure of 1g-41, 1g-42, 1g-43, or 1g-44. For example, the MBS data that may be received or transmitted in the fourth bearer structure may have a structure of 1g-41, 1g-42, 1g-43, or 1g-44 according to the configuration information of the system information or the RRC message (e.g., RRCSetup, RRCResume, RRCReconfiguration, RRCRelease, or a newly defined new RRC message) or the control message for the MBS channel. As described above, the overhead due to the header can be reduced. In the system information or RRC messages (e.g., RRCSetup, RRCResume, RRCReconfiguration, RRCRelease, or a newly defined new RRC message) or a control message for an MBS channel, when configured to perform HARQ ACK or NACK transmission of the MAC layer device, or HARQ retransmission procedure, or HARQ processing procedure, or when configured as an indicator, the transmission resource (e.g., time or frequency resource, transmission channel, frequency interval, etc.) information for transmitting HARQ ACK or NACK may be transmitted together. When it is configured to perform HARQ ACK or NACK transmission, HARQ retransmission procedure, or HARQ processing procedure in the above, the RRC connected mode, RRC deactivation mode, or RRC idle mode terminal may transmit HARQ ACK or NACK using the transmission resource (e.g., physical transmission resource) configured above, after receiving downlink MBS data. The base station may perform retransmission on the MBS data when detecting even one NACK in the transmission resource, or detecting that even at least one terminal has transmitted a NACK. Alternatively, retransmission may be performed so that all terminals can receive the same through the MBS channel. In another method, the RRC connected mode, or RRC deactivation mode, or RRC idle mode terminal may receive downlink MBS data in the above, define MAC control information (or RLC control information, or PDCP control information, or RRC message), and transmit the MAC control information (or RLC control information, or PDCP control information, or an RRC message) to allow the base station to indicate which terminal did not successfully receive data (e.g., the MAC control information (or RLC control information, or PDCP control information, or RRC message) may be transmitted in the transmission resource configured above) including a terminal identifier, an MBS service identifier, a logical channel identifier, an RNTI identifier, or a bearer identifier. The base station may perform retransmission on the MBS data only to the RRC connected mode, RRC idle mode, or RRC deactivation mode terminal indicating that the NACK has been transmitted or failed to be successfully received in the transmission resource. As another method, when the base station detects even one NACK in the transmission resource, or detects that at least one terminal has transmitted a NACK, the base station may perform retransmission on the MBS data. Alternatively, retransmission may be performed so that all terminals can receive it through the MBS channel.

When the terminal receives the system information above, when the terminal tries to receive the service of interest, when the service of interest occurs or is determined, when the terminal is in or enters a cell or area supporting the MBS service in the system information, when the terminal configures or connects MBS service (or session), when configuration information or bearer configuration information for MBS service is received or broadcast in the system information or RRC message (e.g., RRCSetup, RRCResume, RRCReconfiguration, RRCRelease, or a newly defined new RRC message) or a control message for the MBS channel (e.g., transmitted in the MBS control data channel), the terminal may configure a unicast bearer, a multicast bearer, or an MBS bearer for receiving the MBS service having the above-proposed bearer structure.

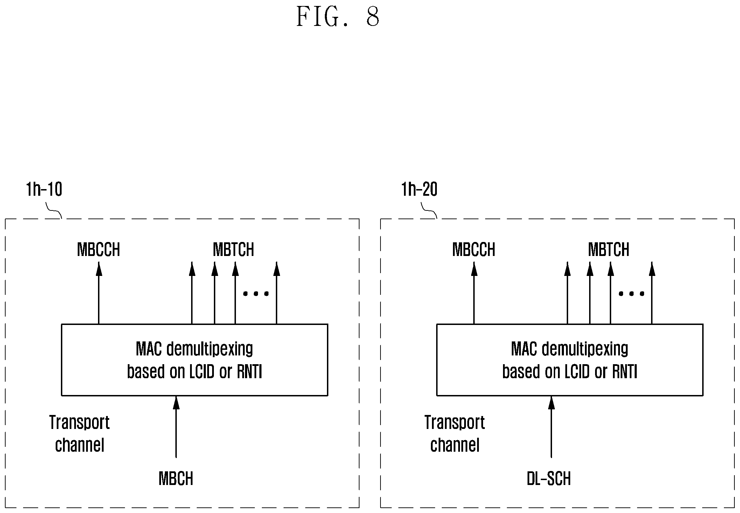

FIG. 8 illustrates a method of demultiplexing the received MBS data in the MAC layer device when the terminal in RRC connected mode, or RRC deactivation mode, or RRC idle mode receives MBS data (e.g., MBS control data, or MBS user data, or general data other than MBS data) through the multicast bearer or unicast bearer supporting the MBS service with the bearer structure proposed in FIG. 7 of the present disclosure. In addition, a method for the terminal to transmit uplink MBS data (e.g., MBS control data, MBS user data, or general data other than MBS data) is also proposed.

A method of receiving MBS data or a method of receiving MBS data and demultiplexing MBS data in FIG. 8 may apply one method or a plurality of methods among the following methods. As another method, different methods may be applied according to whether the terminal is in an RRC connected mode, an RRC deactivation mode, or an RRC idle mode among the following methods.
- (1-1)^{th} MBS reception method 1h-10: In the (1-1)^{th} MBS reception method (1h-10) of FIG. 8, a separate physical channel or transmission channel (e.g., MBCH, MBS channel) for the MBS service is configured, and a separate transmission resource (frequency or time resource, transmission period, partial bandwidth (or partial bandwidth identifier), bandwidth, dedicated frequency (frequency information or SCell identifier), or subcarrier interval, etc.) may be configured or defined in system information or RRC messages (e.g., RRCSetup, RRCResume, RRCReconfiguration, RRCRelease, or a newly defined new RRC message) or a control message for an MBS channel (e.g., transmitted in an MBS control data channel). A MAC header is always attached to MBS data transmitted for MBS service, and a logical channel identifier included in the MAC header is assigned to an MBS control data channel (e.g., MBCCH, MBS Control Channel) or an MBS user data channel (e.g., MBTCH, MBS traffic channel) may be allocated differently. In addition, different logical channel identifiers may be allocated to each MBS service serviced in the MBS user data channel. A first identifier or a second identifier for each MBS service may be configured or broadcast in the system information or RRC message (e.g., RRCSetup, RRCResume, RRCReconfiguration, RRCRelease, or a newly defined new RRC message) or a control message for an MBS channel (e.g., transmitted in an MBS control data channel), and each logical channel identifier corresponding to the first identifier or the second identifier of each MBS service may be configured or broadcast. In the above, the first identifier may indicate a public land mobile network (PLMN) serving the MBS or may indicate an MBS service type or session. In the above, the second identifier may indicate a more specific session or type of MBS service. A logical channel identifier that can be allocated to a bearer for a general data service (voice or Internet or video service) in the DL-SCH channel may be allocated as one predetermined combination of bits (e.g., 6 bits) in a first logical channel identifier space that can be generated with predetermined bits (e.g., 6 bits). A logical channel identifier for each service of the MBS control data channel, the MBS user data channel, or the MBS user data channel may be allocated as one predetermined bit (e.g., 6 bits) combination in the first logical channel identifier space. Alternatively, the MAC control information (MAC CE, Control Element, for example, MAC CE for an indication that the network stops the MBS service or the terminal stops receiving the MBS service to the network) for supporting the MBS service or a logical channel identifier for padding for inserting padding into MBS data for supporting the MBS service may also be allocated as one predetermined bit (e.g., 6 bits) combination in the first logical channel identifier space. In another method, in order to double the logical channel identifier space, the logical channel identifier for each service of the MBS control data channel, the MBS user data channel, or the MBS user data channel may be allocated as a predetermined bit (e.g., 6 bits) combination in the new second logical channel identifier space. Alternatively, the MAC control information (MAC CE, Control Element, for example, MAC CE for an indication that the network stops the MBS service or the terminal stops receiving the MBS service to the network) for supporting the MBS service or the logical channel identifier for padding for inserting padding into MBS data for supporting the MBS service may also be allocated as one predetermined bit (e.g., 6 bits) combination in the new second logical channel identifier space. The first logical channel identifier space and the second logical channel identifier space may be distinguished as MBS channels or DL-SCH channels or transmission resources (frequency or time transmission resource, frequency information, partial bandwidth identifier, partial bandwidth configuration information, dedicated carrier or dedicated cell (SCell) identifier, or dedicated cell information) in the MAC layer device, or may be distinguished by using different RNTIs. Therefore, when the MAC layer device of the terminal receives MBS data through the channel or transmission resource for receiving the MBS service, the MAC layer device of the terminal may classify or demultiplex the MBS data and transmit the data to a corresponding upper layer device, based on the received transport channel (e.g., MBCH or DL-SCH or BCH), partial bandwidth identifier, SCell identifier, logical channel identifier, or RNTI identifier. The 1-1 MBS reception method may be applied to an RRC connected mode, RRC deactivation mode, or RRC idle mode terminal.
- (1-2)^{th} MBS reception method 1h-10: In the (1-2)^{th} MBS reception method 1h-10 of FIG. 8, separate physical channel or transport channel (e.g., MBCH, MBS channel) for the MBS service is configured in the system information or RRC messages (e.g., RRCSetup, RRCResume, RRCReconfiguration, RRCRelease, or a newly defined new RRC message) or a control message for an MBS channel (e.g., transmitted in an MBS control data channel), and a separate transmission resource (frequency or time resource, transmission period, partial bandwidth (or partial bandwidth identifier), bandwidth, dedicated frequency (frequency information or SCell identifier), or subcarrier interval, etc.) may be configured or defined. A MAC header may be attached to MBS data transmitted for MBS service, and the logical channel identifiers included in the MAC header may be allocated differently for MBS control data channels (e.g., MBCCH, MBS control channel) or MBS user data channels (e.g., MBTCH, MBS traffic channel). In addition, different logical channel identifiers may be allocated to each MBS service serviced in the MBS user data channel. In addition, different RNTI identifiers may be allocated to the MBS control data channel (e.g., MBCCH, MBS control channel) or MBS user data channel (e.g., MBTCH, MBS traffic channel). In addition, different RNTI identifiers may be allocated to each MBS service serviced in the MBS user data channel. Therefore, since the RNTI identifiers can distinguish each MBS service served in the MBS control data channel (e.g., MBCCH, MBS Control Channel) or MBS user data channel or MBS user data channel, for the logical channel identifier, the same logical channel identifier for each MBS service serviced in the MBS control data channel or MBS user data channel or MBS user data channel may be allocated. In another method, the same RNTI identifier may be allocated to each MBS service serviced in the MBS control data channel (e.g., MBCCH, MBS Control Channel) or the MBS user data channel or the MBS user data channel, and more specifically, the classification of the channel or data may be distinguished by allocating different logical channel identifiers for each MBS service serviced in the MBS control data channel (e.g., MBS control channel (MBCCH)), the MBS user data channel, or the MBS user data channel. The RNTI identifier for the MBS service may be configured differently from the RNTI identifier for the DL-SCH (e.g., C-RNTI, MCS-C-RNTI, or CS-RNTI). In another method, in the above, the RNTI identifier for the MBS service may be configured to be the same as the RNTI identifier for the DL-SCH (e.g., C-RNTI, MCS-C-RNTI, CS-RNTI, etc.), and the distinction may be performed with a logical channel identifier. In addition, for each MBS service serviced in the MBS user data channel, a first identifier or a second identifier for each MBS service may be configured or broadcast in the system information or RRC message (e.g., RRCSetup, RRCResume, RRCReconfiguration, RRCRelease, or a newly defined new RRC message) or a control message for the MBS channel (e.g., transmitted in the MBS control data channel), and each logical channel identifier or each RNTI identifier corresponding to the first identifier or the second identifier of each MBS service may be configured or broadcast. The first identifier may indicate a public land mobile network (PLMN) serving the MBS or may indicate an MBS service type or session. In the above, the second identifier may indicate a more specific session or type of MBS service. A logical channel identifier that can be allocated to a bearer for a general data service (voice or Internet or video service) in the DL-SCH channel may be allocated as one predetermined bit (e.g., 6 bits) combination in a first logical channel identifier space that can be generated with predetermined bits (e.g., 6 bits). The logical channel identifier for each service of the MBS control data channel or the MBS user data channel or the MBS user data channel may be allocated as one predetermined bit (e.g., 6 bits) combination in the first logical channel identifier space. Alternatively, the MAC control information (MAC CE, Control Element, for example, MAC CE for an indication that the network stops the MBS service or the terminal stops receiving the MBS service to the network) for supporting the MBS service or a logical channel identifier for padding for inserting padding into MBS data for supporting the MBS service may also be allocated as one predetermined bit (e.g., 6 bits) combination in the first logical channel identifier space. In another method, in order to double the logical channel identifier space, in the above, the logical channel identifier for each service of the MBS control data channel or the MBS user data channel or the MBS user data channel may be allocated as one predetermined bit (e.g., 6 bits) combination in the new second logical channel identifier space. Alternatively, the MAC control information (MAC CE, Control Element, for example, MAC CE for an indication that the network stops the MBS service or the terminal stops receiving the MBS service to the network) for supporting the MBS service or a logical channel identifier for padding for inserting padding into MBS data for supporting the MBS service may also be allocated as one predetermined bit (e.g., 6 bits) combination in the new second logical channel identifier space. The first logical channel identifier space and the second logical channel identifier space may be distinguished by an MBS channel, a DL-SCH channel, or a transmission resource (frequency or time transmission resource, frequency information, partial bandwidth identifier, partial bandwidth configuration information, dedicated carrier or dedicated cell (SCell) identifier, or dedicated cell information) in the MAC layer device, or may be distinguished by using different RNTIs. Therefore, when the MAC layer device of the terminal receives MBS data through the channel or transmission resource for receiving the MBS service, the MAC layer device may divide or demultiplex the MBS data, based on the received transport channel (e.g., MBCH or DL-SCH or BCH) or partial bandwidth identifier, SCell identifier, logical channel identifier, or RNTI identifier, and transmit the data to a corresponding upper layer device. The (1-2)^{th} MBS reception method may be applied to an RRC connected mode, an RRC deactivation mode, or an RRC idle mode terminal.
- (1-3)^{th} MBS reception method 1h-10: In the (1-3)^{th} MBS reception method 1h-10 of FIG. 8, in the system information or RRC messages (e.g., RRCSetup, RRCResume, RRCReconfiguration, RRCRelease, or a newly defined new RRC message) or a control message for an MBS channel (e.g., transmitted in an MBS control data channel), a separate physical channel or transport channel (e.g., MBCH, MBS channel) for the MBS service may be configured, and a separate transmission resource (frequency or time resource, transmission period, partial bandwidth (or partial bandwidth identifier), bandwidth, dedicated frequency (frequency information or SCell identifier), or subcarrier interval, etc.) may be configured or defined. The MAC header may not be attached to MBS data transmitted for MBS service, and an MBS control data channel (e.g., MBCCH, MBS control channel) or an MBS user data channel (e.g., MBTCH, MBS traffic channel) may be distinguished from each other, based on the RNTI identifier. Also, different RNTI identifiers may be allocated to the MBS control data channel (e.g., MBCCH, MBS control channel) or MBS user data channel (e.g., MBTCH, MBS traffic channel). In addition, different RNTI identifiers may be allocated to each MBS service serviced in the MBS user data channel. Therefore, since the RNTI identifiers can distinguish each MBS service served in the MBS control data channel (e.g., MBCCH, MBS Control Channel) or MBS user data channel or MBS user data channel, the logical channel identifier does not need to be configured for each MBS service served in the MBS control data channel or the MBS user data channel or the MBS user data channel, and the MAC header does not need to be included in the MBS data. Also, for each MBS service serviced in the MBS user data channel, In the system information or RRC message (e.g., RRCSetup, RRCResume, RRCReconfiguration, RRCRelease, or a newly defined new RRC message) or a control message for the MBS channel (e.g., transmitted in the MBS control data channel), a first identifier or a second identifier for each MBS service may be configured or broadcast, and each RNTI identifier corresponding to the first or second identifier of each MBS service may be configured or broadcast. In the above, the first identifier may indicate a Public Land Mobile Network (PLMN) serving the MBS or may indicate an MBS service type or session. In the above, the second identifier may indicate a more specific session or type of MBS service. Therefore, when receiving the MBS data through the channel or transmission resource for receiving the MBS service, the MAC layer device of the terminal may divide or demultiplex the MBS data and transmit the data to a corresponding upper layer device, based on the received transport channel (e.g., MBCH, or DL-SCH, or BCH, etc.) or partial bandwidth identifier or SCell identifier or RNTI identifier. The (1-3)^{th} MBS reception method may be applied to an RRC connected mode, RRC deactivation mode, or RRC idle mode terminal.
- (2-1)^{th} MBS reception method 1h-20: In the (2-1)^{th} MBS reception method 1h-20 of FIG. 8, in the system information or RRC messages (e.g., RRCSetup, RRCResume, RRCReconfiguration, RRCRelease, or a newly defined new RRC message) or a control message for an MBS channel (e.g., transmitted in an MBS control data channel), a physical channel or transport channel (e.g., MBCH, MBS channel, or DL-SCH channel) for the MBS service may be configured, or in the existing DL-SCH channel, a separate transmission resource (frequency or time resource, transmission period, partial bandwidth (or partial bandwidth identifier), bandwidth, dedicated frequency (frequency information or SCell identifier), or subcarrier interval, etc.) may be configured or defined. MAC header may be always attached to MBS data transmitted for MBS service, and the logical channel identifiers included in the MAC header may be allocated differently for the MBS control data channel (e.g., MBCCH, MBS control channel) or the MBS user data channel (e.g., MBTCH, MBS traffic channel). In addition, different logical channel identifiers may be allocated to each MBS service serviced in the MBS user data channel. In the system information or RRC message (e.g., RRCSetup, RRCResume, RRCReconfiguration, RRCRelease, or a newly defined new RRC message) or a control message for the MBS channel (e.g., transmitted in the MBS control data channel), a first identifier or a second identifier for each MBS service may be configured or broadcast, and each logical channel identifier corresponding to the first identifier or the second identifier of each MBS service may be configured or broadcast. In the above, the first identifier may indicate a public land mobile network (PLMN) serving the MBS or may indicate an MBS service type or session. In the above, the second identifier may indicate a more specific session or type of MBS service. A logical channel identifier that can be allocated to a bearer for a general data service (voice or Internet or video service) in the DL-SCH channel may be allocated as one predetermined bit (e.g., 6 bits) combination in a first logical channel identifier space that can be generated with predetermined bits (e.g., 6 bits). In the above, the logical channel identifier for each service of the MBS control data channel or the MBS user data channel or the MBS user data channel is allocated as a predetermined bit (e.g., 6 bits) combination in the first logical channel identifier space. Alternatively, the MAC control information (MAC CE, Control Element, for example, MAC CE for an indication that the network stops the MBS service or the terminal stops receiving the MBS service to the network) for supporting the MBS service or a logical channel identifier for padding for inserting padding into MBS data for supporting the MBS service may also be allocated as one predetermined bit (e.g., 6 bits) combination in the first logical channel identifier space. In another method, in order to double the logical channel identifier space, in the above, the logical channel identifier for each service of the MBS control data channel or the MBS user data channel or the MBS user data channel may be allocated as one predetermined combination of bits (e.g., 6 bits) in the new second logical channel identifier space. Alternatively, the MAC control information (MAC CE, Control Element, for example, MAC CE for an indication that the network stops the MBS service or the terminal stops receiving the MBS service to the network) for supporting the MBS service or a logical channel identifier for padding for inserting padding into MBS data for supporting the MBS service may also be allocated as a predetermined bit (e.g., 6 bits) combination in the new second logical channel identifier space. In the above, the first logical channel identifier space and the second logical channel identifier space may be distinguished into an MBS channel, a DL-SCH channel, or a transmission resource (frequency or time transmission resource, frequency information, partial bandwidth identifier, partial bandwidth configuration information, dedicated carrier or dedicated cell (SCell) identifier, or dedicated cell information) at the MAC layer device, or may be distinguished by using different RNTIs. Therefore, when receiving the MBS data through the channel or transmission resource for receiving the MBS service, the MAC layer device of the terminal may divide or demultiplex the MBS data, based on the received transport channel (e.g., MBCH or DL-SCH or BCH), partial bandwidth identifier, SCell identifier, logical channel identifier, or RNTI identifier, and transmit the data to a corresponding upper layer device. The (2-1)^{th} MBS reception method may be applied to an RRC connected mode, an RRC deactivation mode, or an RRC idle mode terminal.
- (2-2)^{th} MBS reception method 1h-20: In the (2-2)^{th} MBS reception method 1h-20 of FIG. 8, in the system information or RRC messages (e.g., RRCSetup, RRCResume, RRCReconfiguration, RRCRelease, or a newly defined new RRC message) or a control message for an MBS channel (e.g., transmitted in an MBS control data channel), a physical channel or transport channel (e.g., MBCH, MBS channel, or DL-SCH channel) for the MBS service may be configured, or in the existing DL-SCH channel, a separate transmission resource (frequency or time resource, transmission period, partial bandwidth (or partial bandwidth identifier), bandwidth, dedicated frequency (frequency information or SCell identifier), or subcarrier interval, etc.) may be configured or defined. The MAC header may be always attached to MBS data transmitted for MBS service, and the logical channel identifiers included in the MAC header may be allocated differently for the MBS control data channel (e.g., MBS control channel (MBCCH)) or the MBS user data channel (e.g., MBS traffic channel (MBTCH)). In addition, different logical channel identifiers may be allocated to each MBS service serviced in the MBS user data channel. Also, different RNTI identifiers may be allocated to the MBS control data channel (e.g., MBS control channel (MBCCH)) or MBS user data channel (e.g., MBS traffic channel (MBTCH)). In addition, different RNTI identifiers may be allocated to each MBS service serviced in the MBS user data channel. Therefore, since the RNTI identifiers can distinguish each MBS service served in the MBS control data channel (e.g., MBS control channel (MBCCH)) or MBS user data channel or MBS user data channel, the logical channel identifier may allocate the same logical channel identifier to each MBS service serviced in the MBS control data channel or MBS user data channel or MBS user data channel. In another method, the same RNTI identifier is assigned to each MBS service serviced in the MBS control data channel (e.g., MBS control channel (MBCCH)) or the MBS user data channel or the MBS user data channel, and in more detail, in classifying the channel or data, different logical channel identifiers may be assigned and distinguished for each MBS service serviced in the MBS control data channel (e.g., MBS control channel (MBCCH)), the MBS user data channel, or the MBS user data channel. In the above, the RNTI identifier for the MBS service may be configured differently from the RNTI identifier for the DL-SCH (e.g., C-RNTI, MCS-C-RNTI, or CS-RNTI). In another method, in the above, the RNTI identifier for the MBS service is configured to be the same as the RNTI identifier for the DL-SCH (e.g., C-RNTI, or MCS-C-RNTI, or CS-RNTI, etc.), and the distinction is logical channel This can be done with identifiers. Also, for each MBS service serviced in the MBS user data channel, a first identifier or a second identifier for each MBS service may be configured or broadcast in the system information or RRC message (e.g., RRCSetup, RRCResume, RRCReconfiguration, RRCRelease, or a newly defined new RRC message) or a control message for the MBS channel (e.g., transmitted in the MBS control data channel). Each logical channel identifier or each RNTI identifier corresponding to the first identifier or the second identifier of each MBS service may be configured or broadcast. In the above, the first identifier may indicate a public land mobile network (PLMN) serving the MBS or may indicate an MBS service type or session. In the above, the second identifier may indicate a more specific session or type of MBS service. A logical channel identifier that can be allocated to a bearer for a general data service (voice or Internet or video service) in the DL-SCH channel may be allocated as one predetermined bit (e.g., 6 bits) combination in a first logical channel identifier space that can be generated with predetermined bits (e.g., 6 bits). In the above, the logical channel identifier for each service of the MBS control data channel or the MBS user data channel or the MBS user data channel may be allocated as a predetermined bit (e.g., 6 bits) combination in the first logical channel identifier space. Alternatively, the MAC control information (MAC CE, Control Element, for example, MAC CE for an indication that the network stops the MBS service or the terminal stops receiving the MBS service to the network) for supporting the MBS service or a logical channel identifier for padding for inserting padding into MBS data for supporting the MBS service may also be allocated as a combination of one predetermined bit (e.g., 6 bits) in the first logical channel identifier space. In another method, in order to double the logical channel identifier space, in the above, the logical channel identifier for each service of the MBS control data channel or the MBS user data channel or the MBS user data channel may be allocated as a predetermined bit (e.g., 6 bits) combination of in the new second logical channel identifier space. Alternatively, the MAC control information (MAC CE, Control Element, for example, MAC CE for an indication that the network stops the MBS service or the terminal stops receiving the MBS service to the network) for supporting the MBS service or a logical channel identifier for padding for inserting padding into MBS data for supporting the MBS service may also be allocated as a predetermined bit (e.g., 6 bits) combination in the new second logical channel identifier space. In the above, the first logical channel identifier space and the second logical channel identifier space may be distinguished as an MBS channel or a DL-SCH channel or a transmission resource (frequency or time transmission resource, frequency information, partial bandwidth identifier, partial bandwidth configuration information, dedicated carrier or dedicated cell (SCell) identifier, or dedicated cell information) in the MAC layer device, or may be distinguished by using different RNTIs. Therefore, when receiving MBS data through the channel or transmission resource for receiving the MBS service, the MAC layer device of the terminal may distinguish or demultiplex the MBS data, based on the received transport channel (e.g., MBCH or DL-SCH or BCH), partial bandwidth identifier, SCell identifier, logical channel identifier, or RNTI identifier, and transmit the data to a corresponding upper layer device. The (2-2)^{th} MBS reception method may be applied to an RRC connected mode, an RRC deactivation mode, or an RRC idle mode terminal.
- (2-3)^{th} MBS reception method 1h-20: In the (2-3)^{th} MBS reception method of FIG. 8, in the system information or RRC messages (e.g., RRCSetup, RRCResume, RRCReconfiguration, RRCRelease, or a newly defined new RRC message) or a control message for an MBS channel (e.g., transmitted in an MBS control data channel), a physical channel or transport channel (e.g., MBCH, MBS channel, or DL-SCH channel) for the MBS service may be configured, or in the existing DL-SCH channel, a separate transmission resource (frequency or time resource, transmission period, partial bandwidth (or partial bandwidth identifier), bandwidth, dedicated frequency (frequency information or SCell identifier), or subcarrier interval, etc.) may be configured or defined. The MAC header may not be attached to MBS data transmitted for MBS service, and an MBS control data channel (e.g., MBCCH, MBS control channel) or an MBS user data channel (e.g., MBTCH, MBS traffic channel) may be distinguished from each other, based on the RNTI identifier. Also, different RNTI identifiers may be allocated to the MBS control data channel (e.g., MBS control channel (MBCCH)) or MBS user data channel (e.g., MBS traffic channel (MBTCH)). In addition, different RNTI identifiers may be allocated to each MBS service serviced in the MBS user data channel. Therefore, since the RNTI identifiers can distinguish each MBS service served in the MBS control data channel (e.g., MBS control channel (MBCCH)) or MBS user data channel or MBS user data channel, a logical channel identifier does not need to be configured for each MBS service served in the MBS control data channel, or the MBS user data channel, or the MBS user data channel, and the MAC header does not need to be included in the MBS data. Also, for each MBS service serviced in the MBS user data channel, a first identifier or a second identifier for each MBS service may be configured or broadcast in the system information or RRC message (e.g., RRCSetup, RRCResume, RRCReconfiguration, RRCRelease, or a newly defined new RRC message) or a control message (e.g., transmitted in the MBS control data channel) for an MBS channel, and each RNTI identifier corresponding to the first identifier or the second identifier of each MBS service may be configured or broadcast. In the above, the first identifier may indicate a public land mobile network (PLMN) serving the MBS or may indicate an MBS service type or session. In the above, the second identifier may indicate a more specific session or type of MBS service. Therefore, when receiving MBS data through the channel or transmission resource for receiving the MBS service, the MAC layer device of the terminal may distinguish or demultiplex the MBS data based on the received transmission channel (e.g., MBCH or DL-SCH or BCH), partial bandwidth identifier, SCell identifier, or RNTI identifier and transmit the data to a corresponding upper layer device. The (2-3)^{th} MBS reception method may be applied to an RRC connected mode, an RRC deactivation mode, or an RRC idle mode terminal.

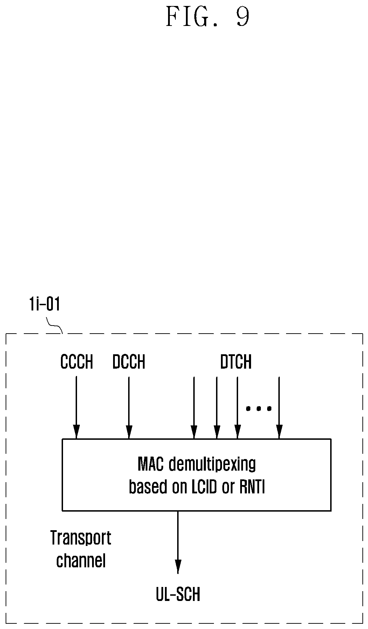

FIG. 9 is a diagram illustrating a method of multiplexing the MBS data to be transmitted in the MAC layer device when the RRC connected mode, RRC deactivated mode, or RRC idle mode terminal transmits MBS data (e.g., MBS control data, MBS When transmitting MBS user data or general data other than MBS data) through a multicast bearer or unicast bearer supporting the MBS service with the bearer structure proposed in FIG. 8 of the present disclosure.

One method or a plurality of methods among the following methods may be applied to the method of transmitting MBS data or the method of transmitting MBS data and multiplexing MBS data in FIG. 9. As another method, different methods may be applied according to whether the terminal is in the RRC connected mode, the RRC deactivation mode, or the RRC idle mode among the following methods.
- First MBS transmission method 1i-01: When the terminal receiving the MBS service by the methods proposed in FIG. 8 needs to transmit uplink MBS data according to a network request or by the necessity of the terminal itself, the terminal or the terminal in the RRC connected mode, the RRC deactivation mode, or the RRC idle mode may transmit uplink MBS data to the base station or the network. In the above, the network or the base station may transmit the network request to the terminal including the MBS data (e.g., MBS control data, MBS user data, RRC message, RLC control data (RLC control PDU), PDCP control data (PDCP control PDU), MAC control data (control element (MAC CE)), or a newly defined message), and may transmit or configure an indication for the MBS service status (e.g., service stop or resume) or response request for MBS service (e.g., information or indicator to request to whether the terminal is receiving a specific MBS service, whether the terminal wants to receive a specific MBS service, preference between the multicast bearer and the unicast bearer or preference for switching (whether the terminal wants to receive the MBS service through the multicast bearer or the MBS service through the unicast bearer)). In the above, as suggested in FIG. 8, the base station or network may transmit MBS data including a request from the network in a separate downlink link channel configured in system information or RRC message (e.g., RRCSetup, RRCResume, RRCReconfiguration, RRCRelease, or a newly defined new RRC message) or control message (e.g., transmitted on the MBS control data channel) for MBS channel, or a physical channel or transmission channel (e.g., MBS channel (MBCH)) for MBS service, or in a separate transmission resource (frequency or time resource, transmission period, partial bandwidth (or partial bandwidth identifier), bandwidth, dedicated frequency (frequency information or SCell identifier), or subcarrier interval, etc.) to allow the terminal of RRC connected mode, or RRC deactivation mode, or RRC idle mode for receiving MBS to receive the MBS data. By transmitting as described above, the MBS data can be transmitted with one transmission resource, and a plurality of terminals can receive the MBS data, thereby preventing wastage of transmission resources and efficiently using the transmission resources. In another method, as suggested in FIG. 8, the base station or network in the above may transmit MBS data through a downlink channel (e.g., DL-SCH channel or CCCH or DCCH channel) configured in system information or RRC message (e.g., RRCSetup, RRCResume, RRCReconfiguration, RRCRelease, or a newly defined new RRC message) or a separate transmission resource (frequency or time resource, transmission period, partial bandwidth (or partial bandwidth identifier), bandwidth, dedicated frequency (frequency information or SCell identifier), or subcarrier interval, etc.) or SRBO (common control channel (CCCH)) or SRB1 (downlink control channel (DCCH)) to only RRC connected mode terminals receiving the MBS to receive the MBS data. In the above, the uplink MBS data may be MBS control data, MBS user data, RRC message, RLC control data (RLC control PDU), PDCP control data (PDCP control PDU), MAC control data (MAC CE, Control Element), or a newly defined message. In the first MBS transmission method, the terminal may transmit the uplink MBS data through a separate uplink channel configured in system information, an RRC message (e.g., RRCSetup, RRCResume, RRCReconfiguration, RRCRelease, or a newly defined new RRC message) or a control message (e.g., transmitted in an MBS control data channel) for an MBS channel, or a physical channel or transmission channel (e.g., UL-MBCH, MBS channel) for an MBS service, or a separate transmission resource (frequency or time resource, transmission period, partial bandwidth (or partial bandwidth identifier), bandwidth, dedicated frequency (frequency information or SCell identifier), or subcarrier interval, etc.). For example, the terminal may include a MAC header in the uplink MBS data, configure a logical channel identifier (MBS control data (channel), MBS user data (channel), MBS user data (channel) for a specific MBS service, SRBO (common control channel (CCCH)), SRB1 (downlink control channel (DCCH)), DRB, or MAC control configured or assigned logical channel identifier for the information) in the MAC header to match the purpose (MBS control data or MBS user data or MBS user data for a specific MBS service) of the uplink MBS data, and transmit the uplink MBS data. An RLC header, a PDCP header, or an SDAP header may also be included according to which bearer structure is configured among the bearer structures proposed in FIG. 7. In another method, the terminal may transmit the uplink MBS data in the uplink transmission resource indicated by the PDCCH with an RNTI identifier (RNTI configured for MBS user data (channel), or MBS user data (channel) for a specific MBS service) suitable for the purpose (MBS control data, or MBS user data, or MBS user data for a specific MBS service) of the uplink MBS data. Since the uplink MBS data can be identified by an RNTI identifier, the uplink MBS data may not include a MAC header or a logical channel identifier. In another method, the terminal may include a MAC header in the uplink MBS data, configure a logical channel identifier (MBS control data (channel), MBS user data (channel), MBS user data (channel) for a specific MBS service, SRBO (common control channel (CCCH)), SRB1 (downlink control channel (DCCH)), DRB, or MAC control configured or assigned logical channel identifier for the information) in the MAC header to match the purpose (MBS control data or MBS user data or MBS user data for a specific MBS service) of the uplink MBS data, and transmit the uplink MBS data. An RLC header, a PDCP header, or an SDAP header may also be included according to which bearer structure is configured among the bearer structures proposed in FIG. 7.
- Second MBS transmission method 1i-01: When the terminal receiving the MBS service by the methods proposed in FIG. 8 needs to transmit uplink MBS data according to a network request or the necessity of the terminal itself, only the terminal in the RRC connected mode can transmit uplink MBS data to the base station or the network. In the above, the network or the base station may include a network request in MBS data (e.g., MBS control data, MBS user data, RRC message, RLC control data (RLC control PDU), PDCP control data (PDCP control PDU), MAC control data (MAC CE, Control Element), or a newly defined message) and transmit the same to the terminal, and may transmit or configure an indication (e.g., stopping or resuming service) of the MBS service status or a response request for the MBS service (e.g., information or indicator to request to whether the terminal is receiving a specific MBS service, whether the terminal wants to receive a specific MBS service, preference between the multicast bearer and the unicast bearer or preference for switching (whether the terminal wants to receive the MBS service through the multicast bearer or the MBS service through the unicast bearer)). In the above, as suggested in FIG. 8, the base station or network may transmit MBS data including a request from the network in a separate downlink link channel configured in system information or RRC message (e.g., RRCSetup, RRCResume, RRCReconfiguration, RRCRelease, or a newly defined new RRC message) or control message (e.g., transmitted on the MBS control data channel) for MBS channel, or a physical channel or transmission channel (e.g., MBS channel (MBCH)) for MBS service, or in a separate transmission resource (frequency or time resource, transmission period, partial bandwidth (or partial bandwidth identifier), bandwidth, dedicated frequency (frequency information or SCell identifier), or subcarrier interval, etc.) to allow the terminal of RRC connected mode, or RRC deactivation mode, or RRC idle mode for receiving MBS to receive the MBS data. By transmitting as described above, the MBS data can be transmitted with one transmission resource, and a plurality of terminals can receive the MBS data, thereby preventing wastage of transmission resources and efficiently using the transmission resources. In another method, as suggested in FIG. 8, the base station or network in the above may transmit the MBS data through a downlink channel (e.g., DL-SCH channel or CCCH or DCCH channel) configured in system information or RRC message (e.g., RRCSetup, RRCResume, RRCReconfiguration, RRCRelease, or a newly defined new RRC message) or a separate transmission resource (frequency or time resource, transmission period, partial bandwidth (or partial bandwidth identifier), bandwidth, dedicated frequency (frequency information or SCell identifier), or subcarrier interval, etc.) or SRBO (common control channel (CCCH)) or SRB1 (downlink control channel (DCCH)) to only RRC connected mode terminals receiving the MBS to receive the MBS data. In the above, the uplink MBS data may be MBS control data, MBS user data, RRC message, RLC control data (RLC control PDU), PDCP control data (PDCP control PDU), MAC control data (MAC CE, Control Element), or a newly defined message. In the second MBS transmission method, the RRC connected mode terminal may transmit the uplink MBS data through a separate uplink channel configured in system information, an RRC message (e.g., RRCSetup, RRCResume, RRCReconfiguration, RRCRelease, or a newly defined new RRC message) or a control message (e.g., transmitted in an MBS control data channel) for an MBS channel, or a physical channel or transmission channel (e.g., UL-SCH, uplink shared channel, channel for general data service) for an MBS service, or a separate transmission resource (frequency or time resource, transmission period, partial bandwidth (or partial bandwidth identifier), bandwidth, dedicated frequency (frequency information or SCell identifier), or subcarrier interval, etc.), or a transmission resource allocated to the PDCCH scrambled with the RNTI identifier (e.g., C-RNTI) allocated to the RRC connected mode terminal. In the above, when the RRC connected mode terminal transmits uplink MBS data through the transmission resource allocated to the PDCCH scrambled with the RNTI identifier (e.g., C-RNTI) allocated to the RRC connected mode terminal, the terminal may transmit uplink MBS data through SRBO (common control channel (CCCH)) or SRB1 (downlink control channel (DCCH)) or DRB. For example, the RRC connected mode terminal may include a MAC header in the uplink MBS data, configure a logical channel identifier (MBS control data (channel), MBS user data (channel), MBS user data (channel) for a specific MBS service, SRBO (common control channel (CCCH)), SRB1 (downlink control channel (DCCH)), DRB, or MAC control configured or assigned logical channel identifier for the information) in the MAC header to match the purpose (MBS control data or MBS user data or MBS user data for a specific MBS service) of the uplink MBS data, and transmit the uplink MBS data. An RLC header, a PDCP header, or an SDAP header may also be included according to which bearer structure is configured among the bearer structures proposed in FIG. 7. In another method, the RRC connected mode terminal may transmit the uplink MBS data in the uplink transmission resource indicated by the PDCCH with an RNTI identifier (RNTI configured for MBS user data (channel), or MBS user data (channel) for a specific MBS service) suitable for the purpose (MBS control data, or MBS user data, or MBS user data for a specific MBS service) of the uplink MBS data. Since the uplink MBS data can be identified by an RNTI identifier, the uplink MBS data may not include a MAC header or a logical channel identifier. In another method, the terminal may include a MAC header in the uplink MBS data, configure a logical channel identifier (MBS control data (channel), MBS user data (channel), MBS user data (channel) for a specific MBS service, SRBO (common control channel (CCCH)), SRB 1 (downlink control channel (DCCH)), DRB, or MAC control configured or assigned logical channel identifier for the information) in the MAC header to match the purpose (MBS control data or MBS user data or MBS user data for a specific MBS service) of the uplink MBS data, and transmit the uplink MBS data. An RLC header, a PDCP header, or an SDAP header may also be included according to which bearer structure is configured among the bearer structures proposed in FIG. 7.

In the following of the present disclosure, signaling procedures for a base station or a network to support an MBS service to a terminal and a terminal to receive the MBS service are proposed. As proposed in the following of the present disclosure, the base station may provide the MBS service to the terminal through one signaling procedure among various signaling procedures, or the terminal may receive the MBS service.

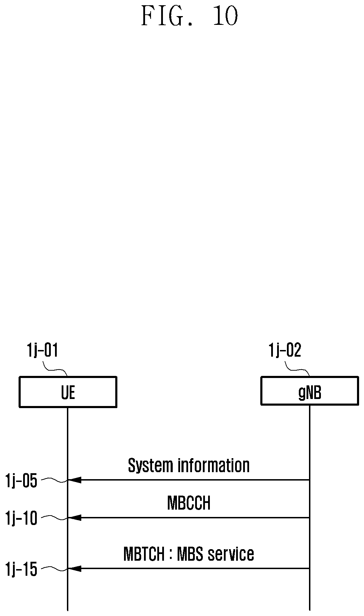

FIG. 10 is a diagram illustrating a first signaling procedure for MBS service support proposed by the present disclosure.

The first signaling procedure for MBS service support proposed in the present disclosure may be characterized in that the MBS service is supported to the terminal based on system information.

In FIG. 10, the terminal 1j-01 may select a suitable cell by performing a cell selection or reselection procedure in the RRC idle mode or RRC inactive mode, receive the system information 1j-05 in the RRC idle mode, or the RRC inactive mode, or the RRC connected mode after camp-on, and receive configuration information for the MBS service in system information. The configuration information for the MBS service may include one or more of the following configuration information. That is, the network may transmit one or more of the following configuration information to support the MBS service in the system information.
- Whether to support MBS service
- Configuration information for a physical channel for the MBS service, or a downlink or uplink transmission channel (e.g., MBCH, MBCCH, MBTCH, or DL-SCH)
- Transmission resource (frequency or time resource, transmission period, partial bandwidth (or partial bandwidth identifier), bandwidth, dedicated frequency (frequency information or SCell identifier), subcarrier interval, subframe number, or an identifier indicating a transmission pattern, etc.) information on which the physical channel or downlink or uplink transmission channel (e.g., MBCH, or MBS control data channel (MBCCH), or MBS user data channel (MBTCH)) is transmitted
- Configuration information for the MBS service supported by the current cell. For example, a list of MBS services or a first identifier (e.g., temporary mobile group identity (TMGI)) or a second identifier (e.g., session identity) for each MBS service may be configured or broadcast, and each logical channel identifier or each bearer identifier or each RNTI identifier information corresponding to the first identifier or the second identifier of each MBS service may be configured or broadcast. In another method, a first identifier (e.g., temporary mobile group identity (TMGI)) or a second identifier (e.g., session identity) or an RNTI identifier for the MBS service may be configured or broadcast for each bearer (or bearer identifier) or each logical channel or each RLC configuration information or each PDCP configuration information. In the above, the first identifier may indicate a public land mobile network (PLMN) serving the MBS or may indicate an MBS service type or session. In the above, the second identifier may indicate a more specific session or type of MBS service. In addition, the configuration information for the MBS service may include transmission resource (frequency or time resource, transmission period, partial bandwidth (or partial bandwidth identifier), bandwidth, dedicated frequency (frequency information or SCell identifier), subcarrier interval, subframe number, or an identifier indicating a transmission pattern, etc.) information in which each MBS service is supported, broadcast, or transmitted.
- In order to receive the MBS service in the bearer structure proposed in FIG. 7, bearer configuration may be included. In addition, indicator configuration information indicating whether to use HARQ reordering, HARQ retransmission, or HARQ ACK or NACK, or indicator configuration information indicating whether to use the RLC reordering function, or transmission resource information to transmit HARQ ACK or NACK in the above, or indicator configuration information indicating whether to use the RLC sequence delivery function, or configuration information for the RLC reorder timer value, or indicator configuration information on whether to use the PDCP out-of-sequence delivery function may be included. In the above, the indicator configuration information indicating whether to use HARQ reordering, HARQ retransmission, or HARQ ACK or NACK, or the indicator configuration information indicating whether to use the RLC reordering function, or the indicator configuration information indicating whether to use the RLC order transfer function, or the configuration information for the RLC reorder timer value, or the configuration information for RLC mode (TM, UM, or AM), or the configuration information on whether to use the data segmentation function in the RLC layer device, or the indicator configuration information on whether to use the PDCP out-of-sequence delivery function may be configured for each MBS service or for each bearer. As another method, the configuration information may be defined as default configuration information so that the terminal may configure some of the functions as an MBS bearer having default functions without the configuration information.
- Indicator configuration information indicating whether a bearer or a bearer identifier supporting (transmitting or receiving) the MBS service is a unicast bearer or a multicast bearer
- MBS dedicated carrier or cell (Cell, SCell, or PCell) related information for MBS service (e.g., frequency or time resource or cell identifier)
- MBS dedicated partial bandwidth information (e.g., downlink partial bandwidth or uplink partial bandwidth information) or partial bandwidth identifier information for MBS service
- In the configuration information, the PDCP serial number or RLC serial number length may also be configured, and as another method, a default length for the RLC serial number or PDCP serial number may be determined.

In the above, when the configuration information for the MBS service in the camp-on cell is not broadcast in the system information, the terminal may transmit a message or an indicator requesting to broadcast the system information for the MBS service in one cell camped on, to the base station or the cell or the network. Upon receiving the message or indicator, the base station or the network may broadcast or transmit configuration information for the MBS service as system information. In this way, the base station can prevent wastage of transmission resources that may occur by always broadcasting MBS service related system information unnecessarily in system information.

The terminal receiving the system information 1j-05 in the above may store or apply the MBS service-related configuration information, search for or determine the MBS service that the terminal is interested in or wants to receive, and receive MBS data (MBS control data or MBS user data) in the transmission resource through which the MBS control data channel or MBS user data channel for the MBS service of interest is transmitted. When the terminal receives the system information in the above, or when the terminal tries to receive the service of interest, or when a service of interest is generated or determined, or when the terminal is in or entered a cell or area supporting MBS service in system information, or when the terminal configures or connects the MBS service (or session), or when configuration information for MBS service or bearer configuration information is received or broadcast in system information or RRC message (e.g., RRCSetup, RRCResume, RRCReconfiguration, RRCRelease, or a newly defined new RRC message), or control message (e.g., transmitted in an MBS control data channel) for MBS channel, the terminal may configure a unicast bearer, a multicast bearer, or an MBS bearer for receiving the MBS service having the above-proposed bearer structure.

In the above, the terminal receives MBS data (e.g., MBS control data) through the MBS control data channel 1j-10 or transmission resource for the MBS service of interest to receive MBS service related configuration information.

The MBS service related configuration information may be transmitted including one or more of the following configuration information for MBS service support.
- Whether to support MBS service
- Configuration information for a physical channel for MBS service or a downlink or uplink transmission channel (e.g., MBCH, MBCCH, MBTCH, DL-SCH)
- Transmission resource (frequency or time resource, transmission period, partial bandwidth (or partial bandwidth identifier), bandwidth, dedicated frequency (frequency information or SCell identifier), subcarrier interval, subframe number or identifier indicating a transmission pattern, etc.) information through which the physical channel or downlink or uplink transmission channel (e.g., MBCH, or MBS control data channel (MBCCH), or MBS user data channel (MBTCH)) is transmitted
- Configuration information for the MBS service supported by the current cell. For example, a list of MBS services or a first identifier (e.g., temporary mobile group identity (TMGI)) or a second identifier (e.g., session identity) for each MBS service may be configured or broadcast, and each logical channel identifier or each bearer identifier or each RNTI identifier information corresponding to the first identifier or the second identifier of each MBS service may be configured or broadcast. In another method, a first identifier (e.g., temporary mobile group identity (TMGI)) or a second identifier (e.g., session identity) or RNTI identifier for the MBS service may be configured or broadcast for each bearer (or bearer identifier) or each logical channel or each RLC configuration information or each PDCP configuration information. In the above, the first identifier may indicate a public land mobile network (PLMN) serving the MBS or may indicate an MBS service type or session. In the above, the second identifier may indicate a more specific session or type of MBS service. In addition, the configuration information for the MBS service may include the transmission resource (frequency or time resource, transmission period, partial bandwidth (or partial bandwidth identifier), bandwidth, dedicated frequency (frequency information or SCell identifier), subcarrier interval, subframe number, or an identifier indicating a transmission pattern, etc.) information in which each MBS service is supported, broadcast, or transmitted.
- In order to receive the MBS service in the bearer structure proposed in FIG. 7, bearer configuration may be included. In addition, indicator configuration information indicating whether to use HARQ reordering, or HARQ retransmission, or HARQ ACK or NACK, or indicator configuration information indicating whether to use the RLC reordering function, or transmission resource information for transmitting HARQ ACK or NACK, or indicator configuration information indicating whether to use the RLC sequence transfer function, or configuration information for the RLC reorder timer value, or indicator configuration information on whether to use the PDCP out-of-sequence delivery function may be included. In the above, the indicator configuration information indicating whether to use HARQ reordering, HARQ retransmission, HARQ ACK, or NACK in the above, or the indicator configuration information indicating whether to use the RLC reordering function, or the indicator configuration information indicating whether to use the RLC sequence delivery function, or the configuration information for RLC reorder timer value, or configuration information for RLC mode (TM, UM, or AM), or the configuration information on whether to use the data segmentation function in the RLC layer device, or the indicator configuration information on whether to use the PDCP out-of-sequence delivery function may be configured for each MBS service or for each bearer. As another method, the configuration information may be defined as default configuration information so that the terminal may configure some of the functions as an MBS bearer having default functions without the configuration information.
- Indicator configuration information indicating whether a bearer or a bearer identifier supporting (transmitting or receiving) the MBS service is a unicast bearer or a multicast bearer.
- MBS dedicated carrier or cell (Cell, SCell, or PCell) related information for MBS service (e.g., frequency or time resource or cell identifier)
- MBS dedicated partial bandwidth information (e.g., downlink partial bandwidth or uplink partial bandwidth information) or partial bandwidth identifier information for MBS service
- In the configuration information, the PDCP serial number or RLC serial number length may also be configured, and as another method, a default length for the RLC serial number or PDCP serial number may be determined.

Upon receiving the MBS service-related configuration information in the above, in order to receive the MBS service that the terminal is interested in or wants to receive, the terminal may check the first identifier, the second identifier, or the RNTI identifier or the logical channel identifier that is configured or allocated for the MBS service that the terminal is interested in or wants to receive, and receive the MBS data by applying the method proposed in FIG. 7 or FIG. 8 of the present disclosure using this through the MBS user data service channel to receive the MBS service (1j-15).

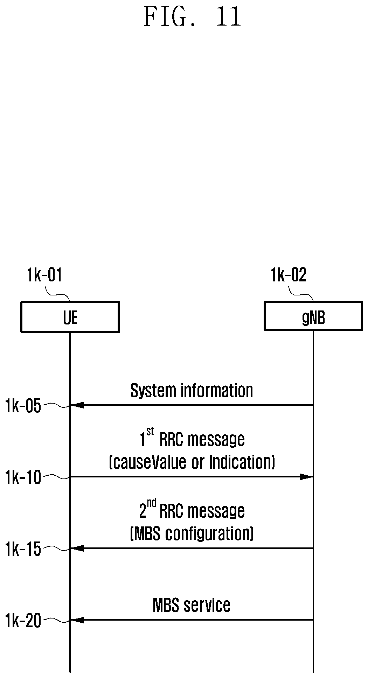

FIG. 11 is a diagram illustrating a second signaling procedure for MBS service support proposed by the present disclosure.

The second signaling procedure for MBS service support proposed in the present disclosure may be characterized in that it is checked whether the terminal is interested in or broadcasts an MBS service based on system information or a connection with the network is configured to indicate to the base station (or network) the MBS service that the terminal is interested in or to receive, or transmit an indication to receive the MBS service, and the MBS service related configuration information is received from the base station (or network) and the MBS service is received. In the second signaling procedure, the terminal may maintain the RRC idle mode, the RRC connected mode, or the RRC deactivated mode (e.g., the MBS service may be received without switching the RRC mode). In another method, it may be characterized in that the terminal instructs the base station (or network) the MBS service that the terminal is interested in or wants to receive, or transmits an indication to receive the MBS service and enters the RRC connected mode in the RRC idle mode or RRC deactivation mode to receive MBS service related configuration information from the base station (or network). Alternatively, after receiving the MBS service related configuration information in the above, the terminal may receive the MBS service in the RRC connected mode, or the MBS service in the RRC idle mode or RRC deactivation mode.

In FIG. 11, the terminal 1k-01 may select a suitable cell by performing a cell selection or reselection procedure in RRC idle mode or RRC inactive mode and camp on, and then receive the system information 1k-05 in the RRC idle mode, or the RRC deactivation mode, or the RRC connected mode and receive the configuration information for the MBS service in the system information. The configuration information for the MBS service may include one or a plurality of the following configuration information. That is, the network may transmit one or more of the following configuration information to support the MBS service in the system information.
- Whether to support MBS service
- Configuration information for a physical channel for MBS service or a downlink or uplink transmission channel (e.g., MBCH, MBCCH, MBTCH, or DL-SCH)
- Transmission resource (frequency or time resource or transmission period or partial bandwidth (or partial bandwidth identifier) or bandwidth or dedicated frequency (frequency information or SCell identifier) or subcarrier interval or subframe number or an identifier indicating a transmission pattern, etc.) information through which the physical channel or downlink or uplink transmission channel (e.g., MBCH or MBS control data channel (MBCCH) or MBS user data channel (MBTCH)) is transmitted.
- Configuration information for the MBS service supported by the current cell. For example, a list of MBS services or a first identifier (e.g., temporary mobile group identity (TMGI)) or a second identifier (e.g., session identity) for each MBS service may be configured or broadcast, and each logical channel identifier or each bearer identifier or each RNTI identifier information corresponding to the first identifier or the second identifier of each MBS service may be configured or broadcast. In another method, a first identifier (e.g., temporary mobile group identity (TMGI)) or a second identifier (e.g., session identity) or an RNTI identifier for the MBS service may be configured or broadcast for each bearer (or bearer identifier), each logical channel, each RLC configuration information, or each PDCP configuration information. In the above, the first identifier may indicate a public land mobile network (PLMN) serving the MBS or may indicate an MBS service type or session. In the above, the second identifier may indicate a more specific session or type of MBS service. In addition, the configuration information for the MBS service may include information on a transmission resource (frequency or time resource, transmission period, partial bandwidth (or partial bandwidth identifier), bandwidth, dedicated frequency (frequency information or SCell identifier), subcarrier interval, subframe number, or an identifier indicating a transmission pattern, etc.) in which each MBS service is supported, broadcast, or transmitted.
- In order to receive the MBS service in the bearer structure proposed in FIG. 7, bearer configuration may be included. In addition, indicator configuration information indicating whether to use HARQ reordering, or HARQ retransmission, or HARQ ACK or NACK, or indicator configuration information indicating whether to use the RLC reordering function, or transmission resource information for transmitting HARQ ACK or NACK, or indicator configuration information indicating whether to use the RLC sequence delivery function, or configuration information for the RLC reorder timer value, or indicator configuration information on whether to use the PDCP out-of-sequence delivery function may be included. In the above, the indicator configuration information indicating whether to use HARQ reordering, HARQ retransmission, or HARQ ACK or NACK in the above, or the indicator configuration information indicating whether to use the RLC reordering function, or the indicator configuration information indicating whether to use the RLC sequence delivery function, or the configuration information for the RLC reorder timer value, or the configuration information for the RLC mode (TM, UM, or AM), or the configuration information on whether to use the data segmentation function in the RLC layer device, or the indicator configuration information on whether to use the PDCP out-of-sequence delivery function may be configured for each MBS service or for each bearer. As another method, the configuration information may be defined as default configuration information so that the terminal may configure some of the functions as an MBS bearer having default functions without the configuration information.
- Indicator configuration information indicating whether a bearer or a bearer identifier supporting (transmitting or receiving) the MBS service is a unicast bearer or a multicast bearer
- MBS dedicated carrier or cell (Cell, SCell, or PCell) related information for MBS service (e.g., frequency or time resource or cell identifier)
- MBS dedicated partial bandwidth information (e.g., downlink partial bandwidth or uplink partial bandwidth information) or partial bandwidth identifier information for MBS service
- In the configuration information, the PDCP serial number or RLC serial number length may also be configured, and as another method, a default length for the RLC serial number or PDCP serial number may be determined.

In the above, when the configuration information for the MBS service in the camp-on cell is not broadcast in the system information, the terminal may transmit a message or an indicator requesting to broadcast system information for an MBS service in a cell that camps on, to a base station, a cell, or a network. Upon receiving the message or indicator, the base station or the network may broadcast or transmit configuration information for the MBS service as system information. In this way, the base station can prevent wastage of transmission resources that may occur by always broadcasting MBS service-related system information unnecessarily in the system information.

In the above, the terminal that has received or checked MBS service-related information as the system information in the above, or the terminal that has identified that the MBS service of interest is broadcast in the current cell through the system information, or the terminal that wants to request an MBS service of interest to the network may perform a random access procedure and transmit the first RRC message to the network. The first RRC message may be an RRC message for a newly defined MBS service, and may be defined as an RRCSetupRequest message, an RRCResumeRequest message, another existing RRC message, MAC control information, RLC control information, or PDCP control information. The terminal may include an indication that it is going to receive the MBS service in the first RRC message, or may include an indicator indicating MBS service reception for the reason of trying to configure an RRC connection with the network, or may indicate including the first identifier, or the second identifier, or the logical channel identifier, or the RNTI identifier, or the bearer identifier of the MBS service that the terminal is interested in or that the terminal intends to receive. In the above, in the first RRC message, the terminal may include an indicator indicating the type (e.g., unicast bearer or multicast bearer) or structure of a bearer to be applied or configured or to be used for the MBS service, or the type (e.g., unicast bearer or multicast bearer) or structure of a preferred bearer, or an indicator indicating in which RRC mode (RRC connected mode, RRC idle mode, or RRC deactivated mode) the terminal wants to receive MBS service support. Alternatively, in the above, the terminal may transmit an indicator for an MBS service that is no longer interested or an MBS service that is about to stop receiving or an MBS service that has stopped receiving, or an indicator for changing the MBS service to another MBS service by including it in the first RRC message. In the above, the indicator included in the first RRC message by the terminal may be determined or indicated based on the system information received in the 1k-05. Also, the terminal may include terminal capability information in the first RRC message. For example, when the terminal is about to receive the MBS service, the terminal may transmit a function or configurable configuration information supported by the terminal capability, or a function or configuration information implemented in the terminal, in the first RRC message, and inform the base station. In the above, when the terminal has previously configured a connection or is storing the terminal identifier allocated from the network, or when a terminal identifier is indicated by an upper layer device (e.g., a NAS layer device, or an RRC layer device), the terminal may transmit the first RRC message including the terminal identifier to allow the network to distinguish or check the terminal. For example, the base station or network may check the terminal based on the terminal identifier included above, may retrieve and check the capability information of the terminal from the core network, or may retrieve and check the configuration information of the terminal from the base station with which the connection was previously configured. In the above, when the terminal receives the system information in the above, tries to receive the service of interest, when the service of interest is generated or determined, when the terminal is in or enters a cell or area supporting the MBS service in system information, or when the terminal establishes or connects the MBS service (or session), the terminal may configure connection with the network and transmit the first RRC message.

If the base station receives the first RRC message in the procedure of 1k-10 in the above, the base station may check the MBS service or terminal capability information that the terminal is interested in or intends to receive.

The base station or the network may transmit a second RRC message 1k-15 to the terminal in order to support or configure the MBS service to the terminal 1k-15. The second RRC message may be an RRC message for a newly defined MBS service, and may be defined as an RRCRelease message, an RRCReconfiguration message, or another existing RRC message.

The second RRC message may include configuration information for the MBS service, or configuration information for the MBS service indicated by the terminal in the first RRC message, or bearer configuration information, or unicast bearer or multicast bearer or MBS bearer configuration information for receiving MBS service.

The second RRC message may include one or more of the following configuration information for MBS service support and may be transmitted.
- Whether to support MBS service
- Configuration information for a physical channel for MBS service or a downlink or uplink transmission channel (e.g., MBCH, MBCCH, MBTCH, or DL-SCH)
- Transmission resource (frequency or time resource or transmission period or partial bandwidth (or partial bandwidth identifier) or bandwidth or dedicated frequency (frequency information or SCell identifier) or subcarrier interval or subframe number or an identifier indicating a transmission pattern, etc.) information through which the physical channel or downlink or uplink transmission channel (e.g., MBCH or MBS control data channel (MBCCH) or MBS user data channel (MBTCH)) is transmitted
- Configuration information for the MBS service supported by the current cell. For example, a list of MBS services or a first identifier (e.g., temporary mobile group identity (TMGI)) or a second identifier (e.g., session identity) for each MBS service may be configured or broadcast, and each logical channel identifier or each bearer identifier or each RNTI identifier information corresponding to the first identifier or the second identifier of each MBS service may be configured or broadcast. In another method, for each bearer (or bearer identifier), or each logical channel, or each RLC configuration information, or each PDCP configuration information, a first identifier (e.g., temporary mobile group identity (TMGI)) or a second identifier (e.g., session identity) or an RNTI identifier for the MBS service may be configured or broadcast. In the above, the first identifier may indicate a public land mobile network (PLMN) serving the MBS, or may indicate an MBS service type or session. In the above, the second identifier may indicate a more specific session or type of MBS service. In addition, the configuration information for the MBS service may include information on a transmission resource (frequency or time resource, transmission period, partial bandwidth (or partial bandwidth identifier), bandwidth, dedicated frequency (frequency information or SCell identifier), subcarrier interval, subframe number, or an identifier indicating a transmission pattern, etc.) in which each MBS service is supported, broadcast, or transmitted.
- In order to receive the MBS service in the bearer structure proposed in FIG. 7, bearer configuration may be included. In addition, in the above, indicator configuration information indicating whether to use HARQ reordering, or HARQ retransmission, or HARQ ACK or NACK, or indicator configuration information indicating whether to use the RLC reordering function, or transmission resource information for transmitting HARQ ACK or NACK, or indicator configuration information indicating whether to use the RLC sequence delivery function, or configuration information for RLC reordering timer value, or indicator configuration information for using PDCP out-of-sequence delivery function may be included. In the above, the indicator configuration information indicating whether to use HARQ reordering, or HARQ retransmission, or HARQ ACK or NACK, or the indicator configuration information indicating whether to use the RLC reordering function, or the indicator configuration information indicating whether to use the RLC sequence delivery function, or the configuration information for the RLC reorder timer value, or the configuration information for RLC mode (TM, UM, or AM), or the configuration information on whether to use the data segmentation function in the RLC layer device, or the indicator configuration information on whether to use the PDCP out-of-sequence delivery function may be configured for each MBS service or for each bearer. As another method, the configuration information may be defined as default configuration information so that the terminal may configure some of the functions as an MBS bearer having default functions without the configuration information.
- Indicator configuration information indicating whether a bearer or a bearer identifier supporting (transmitting or receiving) the MBS service is a unicast bearer or a multicast bearer
- Indicator or configuration information to transition to RRC idle mode or RRC disabled mode or RRC connected mode
- MBS service configuration information or bearer configuration information proposed above for receiving MBS service in RRC idle mode
- MBS service configuration information or bearer configuration information suggested above for receiving MBS service in RRC deactivation mode
- MBS dedicated carrier or cell (Cell, SCell, or PCell) related information for MBS service (e.g., frequency or time resource or cell identifier)
- MBS dedicated partial bandwidth information (e.g., downlink partial bandwidth or uplink partial bandwidth information) or partial bandwidth identifier information for MBS service

In the configuration information, the PDCP serial number or RLC serial number length may also be configured, and as another method, a default length for the RLC serial number or PDCP serial number may be determined.

Upon receiving the second RRC message, the terminal may store or apply the MBS service-related configuration information, search for or determine the MBS service that the terminal is interested in or wants to receive, and may receive the MBS data (MBS control data or MBS user data) in the transmission resource through which the MBS control data channel or the MBS user data channel for the MBS service of interest is transmitted. When the terminal receives the system information or tries to receive the service of interest, or when a service of interest is generated or determined, or when the terminal is in or entered a cell or area supporting MBS service in system information, or when an MBS service (or session) is configured or connected, or when configuration information for MBS service or bearer configuration information is received or broadcast in system information or RRC message (e.g., RRCSetup, RRCResume, RRCReconfiguration, RRCRelease, or a newly defined new RRC message) or control message (e.g., transmitted in the MBS control data channel) for MBS channel, the terminal may configure a unicast bearer, a multicast bearer, or an MBS bearer for receiving the MBS service having the above-proposed bearer structure.

In the above, the terminal may receive MBS data (e.g., MBS control data) through the MBS control data channel or transmission resource for the MBS service of interest to receive MBS service-related configuration information.

In the above, upon receiving the MBS service-related configuration information in the above, In order to receive the MBS service that the terminal is interested in or intends to receive, the terminal may check the first identifier or the second identifier or the RNTI identifier or the logical channel identifier configured or allocated for the MBS service that the terminal is interested in or wants to receive, and may receive MBS data by applying the method proposed in FIG. 7 or FIG. 8 of the present disclosure through the MBS user data service channel 1k-20, using this.

In the above, it may be characterized in that the encryption procedure or the integrity protection procedure is not applied to the first RRC message or the second RRC message. In another method, it may be characterized in that in order to enhance security, the encryption procedure or integrity protection procedure is not applied to the first RRC message or the second RRC message, and the encryption procedure or integrity protection procedure is applied to the first RRC message or the second RRC message. In another method, it may be characterized in that in order to further strengthen security, an encryption procedure or integrity protection procedure is applied to the first RRC message or the second RRC message, and an encryption procedure or integrity protection procedure is applied to the first RRC message or the second RRC message.

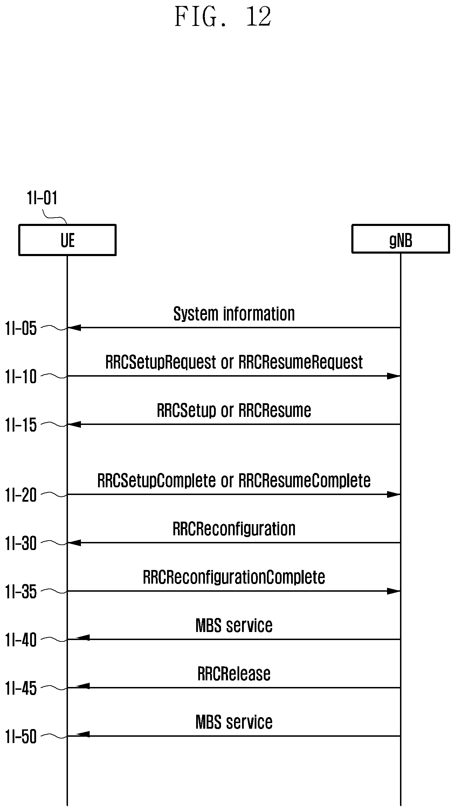

FIG. 12 is a diagram illustrating a third signaling procedure for MBS service support proposed in the present disclosure.

The third signaling procedure for the MBS service support proposed in the present disclosure may be characterized in that the terminal checks whether the MBS service that the terminal is interested in or broadcasts is broadcast or configures a connection with the network, based on the system information, instructs the base station (or network) the MBS service that the terminal is interested in or to receive, or transmits an indication to receive the MBS service, and receives the MBS service related configuration information from the base station (or network) and receives the MBS service. In the third signaling procedure, the terminal may maintain an RRC idle mode, an RRC connected mode, or an RRC deactivation mode. In another method, it may be characterized in that the terminal indicates to the base station (or network) the MBS service that the terminal is interested in or wants to receive, or transmits an indication to receive the MBS service, and enters the RRC connected mode in the RRC idle mode or RRC deactivation mode in order to receive MBS service-related configuration information from the base station (or network). Alternatively, after receiving the MBS service-related configuration information in the above, the terminal may receive the MBS service in the RRC connected mode or the MBS service in the RRC idle mode or RRC deactivation mode.

In FIG. 12, after performing a cell selection or reselection procedure in the RRC idle mode or RRC deactivation mode to select a suitable cell and camping on, the terminal 11-01 may receive the system information (11-05) in the RRC deactivation mode or the RRC connected mode, and may receive configuration information for the MBS service in the system information. The configuration information for the MBS service may include one or more of the following configuration information. That is, the network may transmit one or more of the following configuration information to support the MBS service in the system information.
- Whether to support MBS service
- Configuration information for a physical channel for MBS service or a downlink or uplink transmission channel (e.g., MBCH, MBCCH, MBTCH, or DL-SCH)
- Transmission resource (frequency or time resource, transmission period, partial bandwidth (or partial bandwidth identifier), bandwidth, dedicated frequency (frequency information or SCell identifier), subcarrier interval, subframe number, or an identifier indicating a transmission pattern, etc.) information through which the physical channel or downlink or uplink transmission channel (e.g., MBCH or MBS control data channel (MBCCH) or MBS user data channel (MBTCH)) is transmitted
- Configuration information for the MBS service supported by the current cell. For example, a list of MBS services or a first identifier (e.g., temporary mobile group identity (TMGI)) or a second identifier (e.g., session identity) for each MBS service may be configured or broadcast, and each logical channel identifier or each bearer identifier or each RNTI identifier information corresponding to the first identifier or the second identifier of each MBS service may be configured or broadcast. As another method, the first identifier (e.g., temporary mobile group identity (TMGI)) or the second identifier (e.g., session identity) or an RNTI identifier for the MBS service may be configured or broadcast for each bearer (or bearer identifier) or each logical channel or each RLC configuration information or each PDCP configuration information. In the above, the first identifier may indicate a Public Land Mobile Network (PLMN) serving the MBS or may indicate an MBS service type or session. In the above, the second identifier may indicate a more specific session or type of MBS service. In addition, the configuration information for the MBS service may include transmission resource (frequency or time resource, transmission period, partial bandwidth (or partial bandwidth identifier), bandwidth, dedicated frequency (frequency information or SCell identifier), subcarrier interval, subframe number, or an identifier indicating a transmission pattern, etc.) information through which each MBS service is supported, broadcast, or transmitted.
- In the bearer structure proposed in FIG. 7, bearer configuration may be included to receive the MBS service. In addition, indicator configuration information indicating whether to use HARQ reordering, or HARQ retransmission, or HARQ ACK or NACK, or indicator configuration information indicating whether to use the RLC reordering function, or transmission resource information for transmitting HARQ ACK or NACK, or indicator configuration information indicating whether to use the RLC sequence delivery function, or configuration information for the RLC reorder timer value, or indicator configuration information on whether to use the PDCP out-of-sequence delivery function may be included. In the above, the indicator configuration information indicating whether to use HARQ reordering, HARQ retransmission, or HARQ ACK or NACK, or the indicator configuration information indicating whether to use the RLC reordering function, or the indicator configuration information indicating whether to use the RLC sequence delivery function, or the configuration information for the RLC reorder timer value, or the configuration information for RLC mode (TM, UM, or AM), or the configuration information on whether to use the data segmentation function in the RLC layer device, or the indicator configuration information on whether to use the PDCP out-of-sequence delivery function may be configured for each MBS service or for each bearer. As another method, the configuration information may be defined as default configuration information so that the terminal may configure some of the functions as an MBS bearer having default functions without the configuration information.
- Indicator configuration information indicating whether a bearer or a bearer identifier supporting (transmitting or receiving) MBS service is a unicast bearer or a multicast bearer
- MBS dedicated carrier or cell (Cell, SCell, or PCell) related information for MBS service (e.g., frequency or time resource or cell identifier)
- MBS dedicated partial bandwidth information (e.g., downlink partial bandwidth or uplink partial bandwidth information) or partial bandwidth identifier information for MBS service
- In the configuration information, the PDCP serial number or RLC serial number length may also be configured, and as another method, a default length for the RLC serial number or PDCP serial number may be determined.

In the above, if the configuration information for the MBS service in one cell camped on is not broadcast in the system information, the terminal may transmit a message or an indicator requesting to broadcast system information for an MBS service in a cell that camps on, to a base station, cell, or network. Upon receiving the message or indicator, the base station or the network may broadcast or transmit configuration information for the MBS service as system information. In this way, the base station can prevent wastage of transmission resources that may occur by always broadcasting MBS service-related system information unnecessarily in the system information.

The terminal that has received or confirmed the MBS service-related information as the system information in the above, or the terminal that has confirmed that the MBS service of interest is broadcast in the current cell through the system information, or the terminal that intends to request the MBS service of interest to the network may perform a random access procedure and transmit a first RRC message to the network. The first RRC message may be an RRC message for a newly defined MBS service, and may be defined as an RRCSetupRequest message, an RRCResumeRequest message, or another existing RRC message. The terminal may include an indicator indicating that it is going to receive the MBS service in the first RRC message, or may include an indicator indicating that it is going to receive the MBS service for the reason of trying to configure an RRC connection with the network, or in the above, when the terminal has previously configure a connection or is storing the terminal identifier (e.g., a terminal identifier allocated to the core network (5G-S-TMSI) or a terminal identifier for RRC connection resumption allocated from a base station (short I-RNTI or I-RNTI)) allocated from the network, or when the terminal identifier is indicated by an upper layer device (e.g., NAS layer device or RRC layer device), the terminal may transmit the first RRC message including the terminal identifier to allow the network to distinguish or identify the terminal. For example, the base station or the network may check the terminal based on the terminal identifier included above and retrieve and confirm the capability information of the terminal from the core network, or may retrieve and check the configuration information of the terminal or the terminal capability information from the base station with which the connection was previously configured. In the above, when the terminal receives the system information in the above, tries to receive the service of interest, when the service of interest is generated or determined, when the terminal is in or enters a cell or area supporting the MBS service in system information, or when the terminal establishes or connects the MBS service (or session), the terminal may configure connection with the network and transmit the first RRC message.

When the base station receives the first RRC message in the procedure of 11-10 in the above, the base station may check the MBS service or terminal capability information that the terminal is interested in or intends to receive.

The base station or the network may transmit a second RRC message (11-15) to the terminal in order to support or configure the MBS service to the terminal (11-15). The second RRC message may be an RRC message for a newly defined MBS service, and may be defined as an RRCSetup message, an RRCResume message, or another existing RRC message.

The second RRC message may include configuration information for MBS service, configuration information for the MBS service indicated by the terminal in the first RRC message, bearer configuration information, or unicast bearer or multicast bearer or MBS bearer configuration information for MBS service reception.

The second RRC message may include one or more of the following configuration information for MBS service support and may be transmitted.
- Whether to support MBS service
- Configuration information for a physical channel for MBS service or a downlink or uplink transmission channel (e.g., MBCH, MBCCH, MBTCH, or DL-SCH)
- Transmission resource (frequency or time resource, transmission period, partial bandwidth (or partial bandwidth identifier), bandwidth, dedicated frequency (frequency information or SCell identifier), subcarrier interval, subframe number, or an identifier indicating a transmission pattern, etc.) information through which the physical channel or downlink or uplink transmission channel (e.g., MBCH or MBS control data channel (MBCCH) or MBS user data channel (MBTCH)) is transmitted
- Configuration information for the MBS service supported by the current cell. For example, a list of MBS services or a first identifier (e.g., temporary mobile group identity (TMGI)) or a second identifier (e.g., session Identity) for each MBS service may be configured or broadcast, and each logical channel identifier, each bearer identifier, or each RNTI identifier information corresponding to the first identifier or the second identifier of each MBS service may be configured or broadcast. In another method, the first identifier (e.g., temporary mobile group identity (TMGI)) or the second identifier (e.g., session Identity) or an RNTI identifier for each bearer (or bearer identifier), or each logical channel, or each RLC configuration information, or each PDCP configuration information for the MBS service may be configured or broadcast. In the above, the first identifier may indicate a Public Land Mobile Network (PLMN) serving the MBS or may indicate an MBS service type or session. In the above, the second identifier may indicate a more specific session or type of MBS service. In addition, the configuration information for the MBS service may include transmission resource (frequency or time resource, transmission period, partial bandwidth (or partial bandwidth identifier), bandwidth, dedicated frequency (frequency information or SCell identifier), subcarrier interval, subframe number, or an identifier indicating a transmission pattern, etc.) information on which each MBS service is supported, broadcast, or transmitted.
- In order to receive the MBS service in the bearer structure proposed in FIG. 7, bearer configuration may be included. In addition, indicator configuration information indicating whether to use HARQ reordering, or HARQ retransmission, or HARQ ACK or NACK, or indicator configuration information indicating whether to use the RLC reordering function, or transmission resource information for transmitting HARQ ACK or NACK, or indicator configuration information indicating whether to use the RLC sequence delivery function, or configuration information on the RLC reordering timer value or indicator configuration information on whether to use the PDCP out-of-sequence delivery function may be included. In the above, the indicator configuration information indicating whether to use HARQ reordering, or HARQ retransmission, or HARQ ACK or NACK, or the indicator configuration information indicating whether to use the RLC reordering function, or the indicator configuration information indicating whether to use the RLC sequence delivery function, or the configuration information for the RLC reorder timer value, or the configuration information for RLC mode (TM, UM, or AM), or the configuration information on whether to use the data segmentation function in the RLC layer device, or the indicator configuration information on whether to use the PDCP out-of-sequence delivery function may be configured for each MBS service or for each bearer. As another method, the configuration information may be defined as default configuration information so that the terminal may configure some of the functions as an MBS bearer having default functions without the configuration information.
- Indicator configuration information indicating whether a bearer or a bearer identifier supporting (transmitting or receiving) the MBS service is a unicast bearer or a multicast bearer
- MBS dedicated carrier or cell (Cell, SCell, or PCell) related information for MBS service (e.g., frequency or time resource or cell identifier)
- MBS dedicated partial bandwidth information (e.g., downlink partial bandwidth or uplink partial bandwidth information) or partial bandwidth identifier information for MBS service
- In the configuration information, the PDCP serial number or RLC serial number length may also be configured, and as another method, a default length for the RLC serial number or PDCP serial number may be determined.

In the above, when the terminal receives system information or tries to receive a service of interest, or when a service of interest is generated or determined, or when the terminal is in or entered a cell or area supporting the MBS service in system information, or when the terminal configures or connects the MBS service (or session), or when configuration information for MBS service or bearer configuration information is received or broadcast in system information or RRC message (e.g., RRCSetup, RRCResume, RRCReconfiguration, RRCRelease, or newly defined new RRC message) or control message for MBS channel (e.g., transmitted in MBS control data channel), the terminal may configure a unicast bearer, a multicast bearer, or an MBS bearer for receiving the MBS service having the above-proposed bearer structure.

When the terminal receives the second RRC message, the terminal may apply the configuration information included in the second RRC message (e.g., RRCSetupComplete or RRCResumeComplete), and transmit a third RRC message to the base station or network in response thereto (11-20).

In the third RRC message, the terminal may include an indicator that it is going to receive the MBS service in the first RRC message, or may include an indicator instructing the reception of the MBS service for the reason of trying to configure an RRC connection with the network, or may indicate by including the first identifier or the second identifier or the logical channel identifier or the RNTI identifier or the bearer identifier of the MBS service, which the terminal is interested in or the terminal intends to receive. In the above, the terminal may include an indicator indicating the type (e.g., unicast bearer or multicast bearer) or structure of a bearer that should be applied or configured or used for the MBS service in the first RRC message, or the type (e.g., unicast bearer or multicast bearer) or structure of a preferred bearer, or an indicator indicating in which RRC mode (RRC connected mode, RRC idle mode, or RRC deactivation mode) the terminal wants to receive the MBS service. Alternatively, in the above, the terminal may transmit the first RRC message including an indicator for the MBS service that it is no longer interested in or the MBS service to stop receiving, or an indicator for the MBS service that has stopped receiving, or an indicator to change the MBS service to another MBS service. In the above, the indicator included in the first RRC message by the terminal may be determined or indicated based on the system information received in 11-05.

The base station may transmit the fourth RRC message (e.g., RRCReconfiguration (11-30)) to the terminal in the above to support the MBS service to the terminal based on the preference reported by the terminal or the indicated indicator or the base station implementation, or to configure or reconfigure the bearer for the MBS service that the terminal is receiving, or to configure or reconfigure MBS service-related configuration information. For example, the fourth RRC message may include configuration information (e.g., an indicator to switch from a unicast bearer to a multicast bearer, an indicator to switch from a multicast bearer to a unicast bearer, or corresponding bearer configuration information) for changing the bearer type, logical channel identifier information changed or updated for each MBS service, RNTI identifier information, or a first identifier or second identifier information for an MBS service, etc.

The fourth RRC message may include the following information or a part.
- Whether to support MBS service
- Configuration information for a physical channel or a downlink or uplink transmission channel (e.g., MBCH, MBCCH, MBTCH, or DL-SCH) for MBS service
- Transmission resource (frequency or time resource, transmission period, partial bandwidth (or partial bandwidth identifier), bandwidth or dedicated frequency (frequency information or SCell identifier), subcarrier interval, subframe number, or identifier indicating a transmission pattern, etc.) information through which the physical channel or downlink or uplink transmission channel (e.g., MBCH or MBS control data channel (MBCCH) or MBS user data channel (MBTCH)) is transmitted
- Configuration information for the MBS service supported by the current cell. For example, a list of MBS services or a first identifier (e.g., temporary mobile group identity (TMGI)) or a second identifier (e.g., session identity) for each MBS service may be configured or broadcast, and each logical channel identifier or each bearer identifier or each RNTI identifier information corresponding to the first identifier or the second identifier of each MBS service may be configured or broadcast. In another method, the first identifier (e.g., temporary mobile group identity (TMGI)) or the second identifier (e.g., session Identity) or an RNTI identifier for the MBS service may be configured or broadcast for each bearer (or bearer identifier) or each logical channel or each RLC configuration information or each PDCP configuration information. In the above, the first identifier may indicate a public land mobile network (PLMN) serving the MBS or may indicate an MBS service type or session. In the above, the second identifier may indicate a more specific session or type of MBS service. In addition, the configuration information for the MBS service may include information on a transmission resource (frequency or time resource, transmission period, partial bandwidth (or partial bandwidth identifier), bandwidth, dedicated frequency (frequency information or SCell identifier), subcarrier interval, subframe number, or an identifier indicating a transmission pattern, etc.) in which each MBS service is supported, broadcast, or transmitted.
- In order to receive the MBS service in the bearer structure proposed in FIG. 7, bearer configuration may be included. In addition, indicator configuration information indicating whether to use HARQ reordering, or HARQ retransmission, or HARQ ACK or NACK, or indicator configuration information indicating whether to use the RLC reordering function, or transmission resource information for transmitting HARQ ACK or NACK, or indicator configuration information indicating whether to use the RLC sequence delivery function, or configuration information for the RLC reorder timer value, or indicator configuration information on whether to use the PDCP out-of-sequence delivery function may be included. The indicator configuration information indicating whether to use HARQ reordering, HARQ retransmission, or HARQ ACK or NACK in the above, or the indicator configuration information indicating whether to use the RLC reordering function, or the indicator configuration information indicating whether to use the RLC sequence delivery function, or the configuration information for the RLC reorder timer value, or the configuration information for RLC mode (TM, UM, or AM), or the configuration information on whether to use the data segmentation function in the RLC layer device, or the indicator configuration information on whether to use the PDCP out-of-sequence delivery function may be configured for each MBS service or for each bearer. As another method, the configuration information may be defined as default configuration information so that the terminal may configure some of the functions as an MBS bearer having default functions without the configuration information.
- Indicator configuration information indicating whether a bearer or a bearer identifier supporting (transmitting or receiving) the MBS service is a unicast bearer or a multicast bearer.
- Indicator configuration information indicating whether it is a unicast bearer or a multicast bearer for a bearer or bearer identifier supporting (transmitting or receiving) MBS service
- Indicator or configuration information to transition to RRC idle mode or RRC disabled mode or RRC connected mode
- MBS service configuration information or bearer configuration information suggested above for receiving MBS service in RRC idle mode
- MBS service configuration information or bearer configuration information suggested above for receiving MBS service in RRC deactivation mode
- MBS dedicated carrier or cell (Cell, SCell, or PCell) related information for MBS service (e.g., frequency or time resource or cell identifier)
- MBS dedicated partial bandwidth information (e.g., downlink partial bandwidth or uplink partial bandwidth information) or partial bandwidth identifier information for MBS service
- In the configuration information, the PDCP serial number or RLC serial number length may also be configured, and as another method, a default length for the RLC serial number or PDCP serial number may be determined.

After receiving the fourth RRC message and the terminal stores or applies the MBS service-related configuration information, the terminal may configure a fifth RRC message (e.g., RRCReconfigurationComplete (11-35)) to indicate successful configuration or reconfiguration and transmit it to the base station.

Upon receiving the MBS service-related configuration information in the above, in order to receive the MBS service of interest or intended to receive in the RRC connected mode, the terminal may check the first identifier or the second identifier or the RNTI identifier or the logical channel identifier configured or allocated for the MBS service it is interested in or wants to receive, and using this, the terminal may receive MBS data by applying the method proposed in FIG. 7 or FIG. 8 of the present disclosure through the MBS user data service channel (11-40).

In the above, the terminal may receive MBS data (e.g., MBS control data) through an MBS control data channel or transmission resource for an MBS service of interest to receive MBS service-related configuration information.

In the above, when the base station attempts to transition the terminal to the RRC deactivation mode or the RRC idle mode (e.g., according to the implementation of the base station or according to the request of the terminal or the instruction of the terminal), the base station may configure a sixth RRC message (e.g., RRCRelease message (11-45)) and transmit the same to the terminal to transition to the RRC idle mode or the RRC deactivation mode. The sixth RRC message (11-45) may include the following information or some of the following information so that the terminal can continue to receive the MBS service even in the RRC idle mode or RRC deactivated mode.
- Whether to support MBS service
- Configuration information for a physical channel or a downlink or uplink transmission channel (e.g., MBCH, MBCCH, MBTCH, or DL-SCH) for MBS service
- Transmission resource (frequency or time resource, transmission period, partial bandwidth (or partial bandwidth identifier), bandwidth or dedicated frequency (frequency information or SCell identifier), subcarrier interval, subframe number, or identifier indicating a transmission pattern, etc.) information through which the physical channel or downlink or uplink transmission channel (e.g., MBCH or MBS control data channel (MBCCH) or MBS user data channel (MBTCH)) is transmitted
- Configuration information for the MBS service supported by the current cell. For example, a list of MBS services or a first identifier (e.g., temporary mobile group identity (TMGI)) or a second identifier (e.g., session Identity) for each MBS service may be configured or broadcast, and each logical channel identifier or each bearer identifier or each RNTI identifier information corresponding to the first identifier or the second identifier of each MBS service may be configured or broadcast. In another method, the first identifier (e.g., temporary mobile group identity (TMGI)) or the second identifier (e.g., session identity) or an RNTI identifier for the MBS service may be configured or broadcast for each bearer (or bearer identifier) or each logical channel or each RLC configuration information or each PDCP configuration information. In the above, the first identifier may indicate a public land mobile network (PLMN) serving the MBS or may indicate an MBS service type or session. In the above, the second identifier may indicate a more specific session or type of MBS service. In addition, the configuration information for the MBS service may include information on a transmission resource (frequency or time resource, transmission period, partial bandwidth (or partial bandwidth identifier), bandwidth, dedicated frequency (frequency information or SCell identifier), subcarrier interval, subframe number, or an identifier indicating a transmission pattern, etc.) in which each MBS service is supported, broadcast, or transmitted.
- In order to receive the MBS service in the bearer structure proposed in FIG. 7, bearer configuration may be included. In addition, indicator configuration information indicating whether to use HARQ reordering, or HARQ retransmission, or HARQ ACK or NACK, or indicator configuration information indicating whether to use the RLC reordering function, or transmission resource information for transmitting HARQ ACK or NACK, or indicator configuration information indicating whether to use the RLC sequence delivery function, or configuration information for the RLC reorder timer value, or indicator configuration information on whether to use the PDCP out-of-sequence delivery function may be included. The indicator configuration information indicating whether to use HARQ reordering, HARQ retransmission, or HARQ ACK or NACK in the above, or the indicator configuration information indicating whether to use the RLC reordering function, or the indicator configuration information indicating whether to use the RLC sequence delivery function, or the configuration information for the RLC reorder timer value, or the configuration information for RLC mode (TM, UM, or AM), or the configuration information on whether to use the data segmentation function in the RLC layer device, or the indicator configuration information on whether to use the PDCP out-of-sequence delivery function may be configured for each MBS service or for each bearer. As another method, the configuration information may be defined as default configuration information so that the terminal may configure some of the functions as an MBS bearer having default functions without the configuration information.
- Indicator configuration information indicating whether a bearer or a bearer identifier supporting (transmitting or receiving) the MBS service is a unicast bearer or a multicast bearer.
- Indicator configuration information indicating whether a bearer or a bearer identifier supporting (transmitting or receiving) the MBS service is a unicast bearer or a multicast bearer.
- Indicator or configuration information to transition to RRC idle mode or RRC disabled mode or RRC connected mode
- MBS service configuration information or bearer configuration information suggested above for receiving MBS service in RRC idle mode
- MBS service configuration information or bearer configuration information suggested above for receiving MBS service in RRC deactivation mode
- MBS dedicated carrier or cell (Cell, SCell, or PCell) related information for MBS service (e.g., frequency or time resource or cell identifier)
- MBS dedicated partial bandwidth information (e.g., downlink partial bandwidth or uplink partial bandwidth information) or partial bandwidth identifier information for MBS service
- In the configuration information, the PDCP serial number or RLC serial number length may also be configured, and as another method, a default length for the RLC serial number or PDCP serial number may be determined.

Upon receiving the MBS service-related configuration information in the above, in the RRC idle mode or RRC deactivation mode, in order to receive the MBS service that the terminal is interested in or intends to receive, the terminal may check the first identifier or the second identifier or the RNTI identifier or the logical channel identifier configured or allocated for the MBS service it is interested in or wants to receive, and using this, may receive MBS data by applying the method proposed in FIG. 7 or FIG. 8 of the present disclosure through the MBS user data service channel to receive the MBS service (11-50).

In the above, the terminal transmits a first RRC message (11-10) for MBS service reception, the terminal may receive a second RRC message (11-15), transmit a message of a third RRC message (1l-20) again, receive the fourth RRC message, transmit the fifth RRC message, and receive the MBS service in the RRC connected mode. Alternatively, thereafter, the sixth RRC message (11-45) may be received and the MBS service may be received in the RRC idle mode or the RRC inactive mode.

In another method, the terminal may transmit a first RRC message (11-10) for MBS service reception, receive the second RRC message 11-15 (switching to the RRC connected mode) and transmit the message of the third RRC message (11-20) again, and receive the MBS service in the RRC idle mode or the RRC deactivated mode by receiving the sixth RRC message (11-45) and switching to the RRC idle mode or RRC deactivated mode.

In the above, it may be characterized in that the encryption procedure or the integrity protection procedure is not applied to the first RRC message or the second RRC message. In another way, it may be characterized in that, in order to enhance security, an encryption procedure or integrity protection procedure is not applied to the first RRC message or the second RRC message, and an encryption procedure or integrity protection procedure is applied to the first RRC message or the second RRC message. In another method, it may be characterized in that, in order to enhance security, an encryption procedure or integrity protection procedure is applied to the first RRC message or the second RRC message, and an encryption procedure or integrity protection procedure is applied to the first RRC message or the second RRC message. In the above, an encryption procedure or an integrity protection procedure may be applied to the third RRC message. In addition, the encryption procedure or the integrity protection procedure may be applied to the fourth RRC message, the fifth RRC message, or the sixth RRC message.

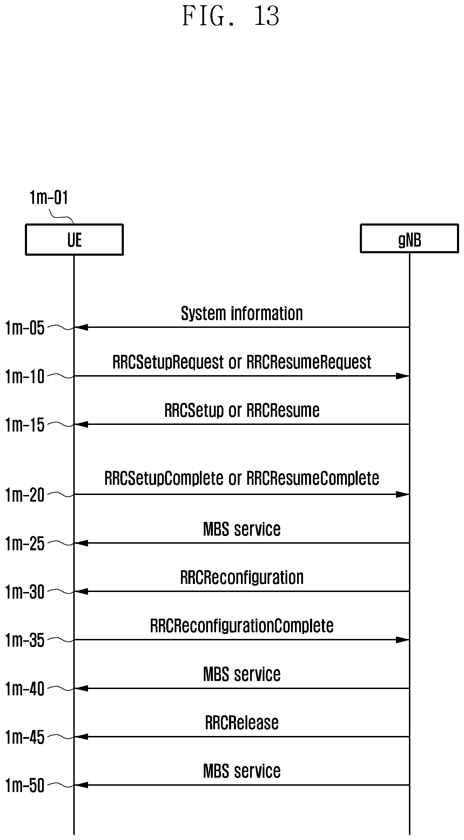

FIG. 13 is a diagram illustrating a fourth signaling procedure for MBS service support proposed by the present disclosure.

The fourth signaling procedure for MBS service support proposed in the present disclosure may be characterized in that, based on the system information, the terminal checks whether the MBS service that the terminal is interested in or broadcasts or configures a connection with the network to instruct the base station (or network) the MBS service that the terminal is interested in or wants to receive, transmits an indication to receive the MBS service, receives MBS service related configuration information from the base station (or network), and receives the MBS service. In the fourth signaling procedure, the terminal may maintain the RRC idle mode, the RRC connected mode, or the RRC deactivation mode. In another method, the terminal indicates to the base station (or network) the MBS service that the terminal is interested in or wants to receive, or transmits an indication to receive the MBS service, and enters the RRC connected mode in the RRC idle mode or RRC deactivation mode to receive MBS service-related configuration information from the base station (or network). Alternatively, after receiving the MBS service-related configuration information in the above, the terminal may receive the MBS service in the RRC connected mode or the MBS service in the RRC idle mode or RRC deactivation mode.

In FIG. 13, the terminal 1m-01 may select a suitable cell by performing a cell selection or reselection procedure in RRC idle mode or RRC deactivation mode and camps on, then, receives the system information (1m-05) in the RRC idle mode or RRC deactivation mode or RRC connected mode, and receive configuration information for the MBS service in system information. The configuration information for the MBS service may include one or more of the following configuration information. That is, the network may transmit one or more of the following configuration information to support the MBS service in the system information.
- Whether to support MBS service
- Configuration information for a physical channel or a downlink or uplink transmission channel (e.g., MBCH, MBCCH, MBTCH, or DL-SCH) for MBS service
- Transmission resource (frequency or time resource, transmission period, partial bandwidth (or partial bandwidth identifier), bandwidth or dedicated frequency (frequency information or SCell identifier), subcarrier interval, subframe number, or identifier indicating a transmission pattern, etc.) information through which the physical channel or downlink or uplink transmission channel (e.g., MBCH or MBS control data channel (MBCCH) or MBS user data channel (MBTCH)) is transmitted
- Configuration information for the MBS service supported by the current cell. For example, a list of MBS services or a first identifier (e.g., temporary mobile group identity) or a second identifier (e.g., session identity) for each MBS service may be configured or broadcast, and each logical channel identifier or each bearer identifier or each RNTI identifier information corresponding to the first identifier or the second identifier of each MBS service may be configured or broadcast. As another method, the first identifier (e.g., temporary mobile group identity) or the second identifier (e.g., session identity) or an RNTI identifier for the MBS service may be configured or broadcast for each bearer (or bearer identifier) or each logical channel or each RLC configuration information or each PDCP configuration information. In the above, the first identifier may indicate a public land mobile network (PLMN) serving the MBS or may indicate an MBS service type or session. In the above, the second identifier may indicate a more specific session or type of MBS service. In addition, the configuration information for the MBS service may include information on a transmission resource (frequency or time resource, transmission period, partial bandwidth (or partial bandwidth identifier), bandwidth, dedicated frequency (frequency information or SCell identifier), subcarrier interval, subframe number, or an identifier indicating a transmission pattern, etc.) in which each MBS service is supported, broadcast, or transmitted.
- In order to receive the MBS service in the bearer structure proposed in FIG. 7, bearer configuration may be included. In addition, indicator configuration information indicating whether to use HARQ reordering, or HARQ retransmission, or HARQ ACK or NACK, or indicator configuration information indicating whether to use the RLC reordering function, transmission resource information for transmitting HARQ ACK or NACK, indicator configuration information indicating whether to use the RLC sequence delivery function, configuration information for the RLC reorder timer value, or indicator configuration information on whether to use the PDCP out-of-sequence delivery function may be included. In the above, the indicator configuration information indicating whether to use HARQ reordering, HARQ retransmission, or HARQ ACK or NACK, the indicator configuration information indicating whether to use the RLC reordering function, the indicator configuration information indicating whether to use the RLC sequence delivery function, the configuration information for the RLC reorder timer value, the configuration information for RLC mode (TM, UM, or AM), the configuration information on whether to use the data segmentation function in the RLC layer device, or the indicator configuration information on whether to use the PDCP out-of-sequence delivery function may be configured for each MBS service or for each bearer. As another method, the configuration information may be defined as default configuration information so that the terminal may configure some of the functions as an MBS bearer having default functions without the configuration information.
- Indicator configuration information indicating whether a bearer or a bearer identifier supporting (transmitting or receiving) the MBS service is a unicast bearer or a multicast bearer.
- MBS dedicated carrier or cell (Cell, SCell, or PCell) related information for MBS service (e.g., frequency or time resource or cell identifier)
- MBS dedicated partial bandwidth information (e.g., downlink partial bandwidth or uplink partial bandwidth information) or partial bandwidth identifier information for MBS service
- In the configuration information, the PDCP serial number or RLC serial number length may also be configured, and as another method, a default length for the RLC serial number or PDCP serial number may be determined.

In the above, if the configuration information for the MBS service in the camp-on cell is not broadcast in the system information, the terminal may transmit a message or an indicator requesting to broadcast system information for an MBS service in a cell that camps on, to a base station, cell, or network. Upon receiving the message or indicator, the base station or the network may broadcast or transmit configuration information for the MBS service as system information. In this way, the base station can prevent wastage of transmission resources that may occur by always broadcasting the MBS service-related system information unnecessarily in the system information.

The terminal that has received or confirmed the MBS service-related information as the system information in the above, the terminal that has confirmed that the MBS service of interest is broadcast in the current cell through the system information, or the terminal that intends to request an MBS service of interest to the network may perform a random access procedure and transmit a first RRC message to the network. The first RRC message may be an RRC message for a newly defined MBS service, and may be defined as an RRCSetupRequest message, an RRCResumeRequest message, or another existing RRC message. The terminal may indicate by including an indicator that it is going to receive the MBS service, including an indicator indicating MBS service reception in the first RRC message for the reason that it intends to configure an RRC connection with the network, or including the first identifier or the second identifier or the logical channel identifier or the RNTI identifier or the bearer identifier of the MBS service that the terminal is interested in or the terminal intends to receive. In the above, in the first RRC message, the terminal may include an indicator indicating the type (e.g., unicast bearer or multicast bearer) or structure of a bearer that should be applied or should be configured or used for the MBS service or the type (e.g., unicast bearer or multicast bearer) or structure of a preferred bearer, or an indicator indicating in which RRC mode (RRC connected mode, RRC idle mode, or RRC deactivation mode) the terminal wants to receive the MBS service. Alternatively, in the above, the terminal may transmit the first RRC message including an indicator for the MBS service that is no longer interested, or an MBS service that is about to stop receiving, or an MBS service that has stopped receiving, or an indicator to change the MBS service to another MBS service. In the above, the indicator included in the first RRC message by the terminal may be determined or indicated based on the system information received in the 1m-05. In addition, the terminal may report the MBS service-related terminal capability information to the base station or the network through a separate RRC message. For example, when the base station transmits an RRC message asking for terminal capability information to the terminal, when the terminal tries to receive the MBS service in response to the RRC message asking for the terminal capability information, the function or configurable configuration information supported by the terminal capability or the function or configuration information implemented in the terminal may be included in the terminal capability response RRC message and transmitted to the base station or the network. In the above, when the terminal has previously configured a connection or is storing the terminal identifier allocated from the network (e.g., a terminal identifier allocated to the core network (5G-S-TMSI) or a terminal identifier for RRC connection resumption allocated from a base station (short) I-RNTI or I-RNTI)), or when the terminal identifier is indicated by an upper layer device (e.g., NAS layer device or RRC layer device), the terminal may transmit the first RRC message including the terminal identifier to allow the network to identify or identify the terminal. For example, the base station or the network may distinguish or check the terminal based on the terminal identifier included above and retrieve and confirm the capability information of the terminal from the core network, or may retrieve and confirm the configuration information of the terminal or the terminal capability information from the base station with which the connection was previously configured. In the above, when the terminal receives the system information in the above, tries to receive the service of interest, when the service of interest is generated or determined, when the terminal is in or enters a cell or area supporting the MBS service in system information, or when the terminal establishes or connects the MBS service (or session), the terminal may configure connection with the network and transmit the first RRC message.

When the base station receives the first RRC message in the procedure of 1m-10 in the above, the base station may identify the MBS service or terminal capability information that the terminal is interested in or intends to receive.

The base station or the network may transmit a second RRC message (1m-15) to the terminal in order to support or configure the MBS service to the terminal (1m-15). The second RRC message may be an RRC message for a newly defined MBS service, and may be defined as an RRCSetup message, an RRCResume message, or another existing RRC message.

The second RRC message may include configuration information for MBS service, configuration information for the MBS service indicated by the terminal in the first RRC message, bearer configuration information or unicast bearer or multicast bearer, or MBS bearer configuration information for MBS service reception.

The second RRC message may include one or more of the following configuration information for MBS service support and may be transmitted.
- Whether to support MBS service
- Configuration information for a physical channel or a downlink or uplink transmission channel (e.g., MBCH, MBCCH, MBTCH, or DL-SCH) for MBS service
- Transmission resource (frequency or time resource, transmission period, partial bandwidth (or partial bandwidth identifier), bandwidth, dedicated frequency (frequency information or SCell identifier), subcarrier interval, subframe number, or an identifier indicating a transmission pattern, etc.) information through which the physical channel or downlink or uplink transmission channel (e.g., MBCH or MBS control data channel (MBCCH) or MBS user data channel (MBTCH)) is transmitted.
- Configuration information for the MBS service supported by the current cell. For example, configure or broadcast a list of MBS services or a first identifier (e.g., temporary mobile group identity (TMGI)) or a second identifier (e.g., session identity) for each MBS service, and each logical channel identifier or each bearer identifier or each RNTI identifier information corresponding to the first identifier or the second identifier of each MBS service may be configured or broadcast. In another method, a first identifier (e.g., temporary mobile group identity (TMGI)) or a second identifier (e.g., session identity) or an RNTI identifier for the MBS service may be configured or broadcast for each bearer (or bearer identifier) or each logical channel or each RLC configuration information or each PDCP configuration information. In the above, the first identifier may indicate a public land mobile network (PLMN) serving the MBS or may indicate an MBS service type or session. In the above, the second identifier may indicate a more specific session or type of MBS service. In addition, the configuration information for the MBS service may include transmission resource (frequency or time resource, transmission period, partial bandwidth (or partial bandwidth identifier), bandwidth, dedicated frequency (frequency information or SCell identifier), subcarrier interval, subframe number, or an identifier indicating a transmission pattern, etc.) information in which each MBS service is supported, broadcast, or transmitted.
- In order to receive the MBS service in the bearer structure proposed in FIG. 7, bearer configuration may be included. In addition, indicator configuration information indicating whether to use HARQ reordering, HARQ retransmission, or HARQ ACK or NACK, or indicator configuration information indicating whether to use the RLC reordering function, or transmission resource information for transmitting HARQ ACK or NACK, or indicator configuration information indicating whether to use the RLC sequence delivery function, or configuration information for the RLC reorder timer value, or indicator configuration information on whether to use the PDCP out-of-sequence delivery function may be included. In the above, the indicator configuration information indicating whether to use HARQ reordering, HARQ retransmission, or the HARQ ACK or NACK, or the indicator configuration information indicating whether to use the RLC reordering function, or the indicator configuration information indicating whether to use the RLC sequence delivery function, or the configuration information for the RLC reorder timer value, or the configuration information for RLC mode (TM, UM, or AM), or the configuration information on whether to use the data segmentation function in the RLC layer device, or the indicator configuration information on whether to use the PDCP out-of-sequence delivery function may be configured for each MBS service or for each bearer. As another method, the configuration information may be defined as default configuration information so that the terminal may configure some of the functions as an MBS bearer having default functions without the configuration information.
- Indicator configuration information indicating whether a bearer or a bearer identifier supporting (transmitting or receiving) the MBS service is a unicast bearer or a multicast bearer.
- MBS dedicated carrier or cell (Cell, SCell, or PCell) related information for MBS service (e.g., frequency or time resource or cell identifier)
- MBS dedicated partial bandwidth information (e.g., downlink partial bandwidth or uplink partial bandwidth information) or partial bandwidth identifier information for MBS service
- In the configuration information, the PDCP serial number or RLC serial number length may also be configured, and as another method, a default length for the RLC serial number or PDCP serial number may be determined.

In the above, the terminal that has received the second RRC message may store or apply the MBS service related configuration information to search for or determine the MBS service that it is interested in or wants to receive, and may receive MBS data (MBS control data or MBS user data) in the transmission resource through which the MBS control data channel or the MBS user data channel for the MBS service of interest is transmitted. When the terminal receives the system information above or when it tries to receive the service of interest, or a service of interest is generated or determined, or when the terminal is in or enters a cell or area supporting the MBS service in system information, or when the terminal configures or connects the MBS service (or session), or when the terminal receives or broadcasts configuration information or bearer configuration information for the MBS service in the system information or RRC message (e.g., RRCSetup, RRCResume, RRCReconfiguration, RRCRelease, or a newly defined new RRC message) or the control message for the MBS channel (e.g., transmitted in the MBS control data channel), the terminal may configure a unicast bearer, a multicast bearer, or an MBS bearer for receiving the MBS service having the above-proposed bearer structure.

When the terminal receives the second RRC message, the terminal may apply the configuration information included in the second RRC message and transmit a third RRC message (e.g., RRCSetupComplete or RRCResumeComplete) to the base station or the network in response thereto (1m-20).

In the above, the terminal may receive MBS data (e.g., MBS control data) through an MBS control data channel or transmission resource for an MBS service of interest to receive MBS service related configuration information.

When receiving the MBS service-related configuration information in the above, in order to receive the MBS service that the terminal is interested in or intends to receive, the terminal may identify the first identifier or the second identifier or the RNTI identifier or the logical channel identifier configured or allocated for the MBS service it is interested in or wants to receive, and using this, the terminal may receive MBS data by applying the method proposed in FIG. 7 or FIG. 8 of the present disclosure through the MBS user data service channel (1m-25).

The base station may transmit a fourth RRC message (e.g., RRCReconfiguration, 1m-30) to the terminal in order to reconfigure the MBS service-related configuration information or the reconfiguration of the bearer through which the terminal is receiving the MBS service, based on the preference reported by the terminal or the indicated indicator or base station implementation. For example, the fourth RRC message may include configuration information (e.g., an indicator to switch from a unicast bearer to a multicast bearer or an indicator to switch from a multicast bearer to a unicast bearer, or bearer configuration information corresponding thereto) for changing the bearer type, logical channel identifier information changed or updated for each MBS service, RNTI identifier information, or a first identifier or second identifier information for an MBS service, etc.

After receiving the fourth RRC message and the terminal stores or applies the MBS service-related configuration information, the terminal may configure a fifth RRC message (e.g., RRCReconfigurationComplete, 1m-35) to indicate successful reconfiguration and transmit it to the base station.

In the above, the terminal may receive MBS data (e.g., MBS control data) through an MBS control data channel or transmission resource for an MBS service of interest to receive MBS service related configuration information.

When receiving the MBS service-related configuration information in the above, in order to receive the MBS service that the terminal is interested in or wants to receive, the terminal may identify the first identifier or the second identifier or the RNTI identifier or the logical channel identifier configured or allocated for the MBS service it is interested in or wants to receive, and using this, may receive the MBS service by applying the method proposed in FIG. 7 or FIG. 8 of the present disclosure through the MBS user data service channel (1m-40).

In the above, when the base station attempts to transition the terminal to the RRC deactivation mode or the RRC idle mode (e.g., according to the implementation of the base station or according to the request of the terminal or the instruction of the terminal), the base station may configure a sixth RRC message (e.g., RRCRelease message, 1m-45) and transmit it to the terminal to transition to the RRC idle mode or the RRC inactive mode. The sixth RRC message (1m-45) may include the following information or some of the following information so that the terminal can continue to receive the MBS service even in the RRC idle mode or RRC deactivated mode.
- Whether to support MBS service
- Configuration information for a physical channel or a downlink or uplink transmission channel (e.g., MBCH, MBCCH, MBTCH, or DL-SCH) for MBS service
- Transmission resource (frequency or time resource, transmission period, partial bandwidth (or partial bandwidth identifier), bandwidth, dedicated frequency (frequency information or SCell identifier), subcarrier interval, subframe number, or an identifier indicating a transmission pattern, etc.) information through which the physical channel or downlink or uplink transmission channel (e.g., MBCH or MBS control data channel (MBCCH) or MBS user data channel (MBTCH)) is transmitted
- Configuration information for the MBS service supported by the current cell. For example, a list of MBS services or a first identifier (e.g., temporary mobile group identity (TMGI)) or a second identifier (e.g., session identity) for each MBS service may be configured or broadcast, and each logical channel identifier or each bearer identifier or each RNTI identifier information corresponding to the first identifier or the second identifier of each MBS service may be configured or broadcast. As another method, a first identifier (e.g., temporary mobile group identity (TMGI)) or a second identifier (e.g., session identity) or an RNTI identifier for the MBS service may be configured or broadcast for each bearer (or bearer identifier) or each logical channel or each RLC configuration information or each PDCP configuration information. In the above, the first identifier may indicate a public land mobile network (PLMN) serving the MBS or may indicate an MBS service type or session. In the above, the second identifier may indicate a more specific session or type of MBS service. In addition, the configuration information for the MBS service may include transmission resource (frequency or time resource, transmission period, partial bandwidth (or partial bandwidth identifier), bandwidth, dedicated frequency (frequency information or SCell identifier), subcarrier interval, subframe number, or an identifier indicating a transmission pattern, etc.) information in which each MBS service is supported, broadcast, or transmitted.
- In order to receive the MBS service in the bearer structure proposed in FIG. 7, bearer configuration may be included. In addition, indicator configuration information indicating whether to use HARQ reordering, HARQ retransmission, or HARQ ACK or NACK, or indicator configuration information indicating whether to use the RLC reordering function, or transmission resource information for transmitting HARQ ACK or NACK, or indicator configuration information indicating whether to use the RLC sequence delivery function, or configuration information for the RLC reorder timer value, or indicator configuration information on whether to use the PDCP out-of-sequence delivery function may be included. In the above, the Indicator configuration information indicating whether to use HARQ reordering, or HARQ retransmission, or HARQ ACK or NACK, or the indicator configuration information indicating whether to use the RLC reordering function, or the indicator configuration information indicating whether to use the RLC sequence delivery function, or the configuration information for the RLC reorder timer value, or the configuration information for RLC mode (TM, UM, or AM), or the configuration information on whether to use the data segmentation function in the RLC layer device, or the indicator configuration information on whether to use the PDCP out-of-sequence delivery function may be configured for each MBS service or for each bearer. As another method, the configuration information may be defined as default configuration information so that the terminal may configure some of the functions as an MBS bearer having default functions without the configuration information.
- Indicator configuration information indicating whether a bearer or a bearer identifier supporting (transmitting or receiving) MBS service is a unicast bearer or a multicast bearer.
- Indicator configuration information indicating whether a bearer or a bearer identifier supporting (transmitting or receiving) the MBS service is a unicast bearer or a multicast bearer.
- Indicator or configuration information to transition to RRC idle mode or RRC disabled mode or RRC connected mode
- MBS service configuration information or bearer configuration information suggested above for receiving MBS service in RRC idle mode
- MBS service configuration information or bearer configuration information suggested above for receiving MBS service in RRC deactivation mode
- MBS dedicated carrier or cell (Cell, SCell, or PCell) related information for MBS service (e.g., frequency or time resource or cell identifier)
- MBS dedicated partial bandwidth information (e.g., downlink partial bandwidth or uplink partial bandwidth information) or partial bandwidth identifier information for MBS service
- In the configuration information, the PDCP serial number or RLC serial number length may also be configured, and as another method, a default length for the RLC serial number or PDCP serial number may be determined.

Upon receiving the MBS service-related configuration information in the above, in order to receive the MBS service that the terminal is interested in or wants to receive, the terminal may identify the first identifier or the second identifier or the RNTI identifier or the logical channel identifier configured or allocated for the MBS service it is interested in or wants to receive, and using this, may receive the MBS service by applying the method proposed in FIG. 7 or FIG. 8 of the present disclosure through the MBS user data service channel (1m-50).

In the above, the terminal may transmit a first RRC message (1m-10) for MBS service reception, receive a second RRC message (1m-15), transmit a message of a third RRC message (1m-20) again, and receive the fourth RRC message, transmit the fifth RRC message, and receive the MBS service in the RRC connected mode. Alternatively, thereafter, the sixth RRC message (1m-45) may be received and the MBS service may be received in the RRC idle mode or the RRC inactive mode.

In another method, in the above, the terminal may transmit a first RRC message (1m-10) for MBS service reception, receive a second RRC message (1m-15) (switched to RRC connected mode), transmit the message of the third RRC message (1m-20) again, and receive the MBS service in the RRC idle mode or RRC deactivated mode by receiving the sixth RRC message (1m-45) and switching to the RRC idle mode or RRC deactivated mode.

In the above, it may be characterized in that the encryption procedure or the integrity protection procedure is not applied to the first RRC message or the second RRC message. In another method, it may be characterized in that, in order to enhance security, the encryption procedure or integrity protection procedure is not applied to the first RRC message or the second RRC message, and the encryption procedure or integrity protection procedure is applied to the first RRC message or the second RRC message. In another method, it may be characterized in that, in order to further strengthen security, an encryption procedure or integrity protection procedure is applied to the first RRC message or the second RRC message, and an encryption procedure or integrity protection procedure is applied to the first RRC message or the second RRC message. In the above, an encryption procedure or an integrity protection procedure may be applied to the third RRC message. In addition, the encryption procedure or the integrity protection procedure may be applied to the fourth RRC message, the fifth RRC message, or the sixth RRC message.

In the next-generation mobile communication system of the present disclosure, the first signaling procedure or the second signaling procedure or the third signaling procedure or the fourth signaling procedure for supporting the MBS service proposed in the present disclosure is supported.

The present disclosure is characterized in that the base station may configure the order transfer function for the receiving RLC layer device, for an AM or UM bearer (e.g., MBS bearer or unicast bearer or multicast bearer) configured to the terminal as an indicator or default function of an RRC message or MBS control message or RLC control PDU or MAC control information. When a long retransmission of the RLC layer device is required, or when data loss is fatal to the service, the base station may configure or activate the order transfer function to the receiving RLC layer device as described above. In the above, the terminal may basically apply the out-of-sequence transfer function to the receiving RLC layer device when there is no order transfer function indicator or when the order transfer function is not configured.

In the above, the terminal may fall back from the out-of-sequence delivery function to the out-of-sequence delivery function when the timer expires when the timer value is configured or by the indicator of the RRC message or MBS control message or RLC control PDU or MAC control information. The timer value may be indicated by the base station through the RRC message or the MBS control message.

In the case of the UM bearer (e.g., MBS bearer, unicast bearer, or multicast bearer) to which the RLC UM layer device is connected or configured, the overhead may be reduced by having different RLC header structures according to the configuration information configured as follows, and the RLC layer device may process data efficiently.

- It may be characterized in that the RLC header does not include the RLC serial number for undivided complete data (RLC SDU or RLC PDU), when the in-sequence delivery is not configured, or when using out-of-sequence delivery, or when it is not a bearer that supports the MBS service, or in a case of the RLC layer device of the bearer where the MBS service is not configured, and it may be characterized in that the RLC header includes an RLC serial number for the divided data (RLC SDU or RLC PDU). In addition, it may be characterized in that the segment offset (SO) field (byte indicating the segmented position) does not include the SO field in the RLC header for unsegmented complete data (RLC SDU or RLC PDU) or segmented first data (first segment of RLC SDU or RLC PDU including a first segment). In addition, it may be characterized in that the segment offset (SO) field (byte indicating the segmented position) includes the SO field in the RLC header for the segmented data (e.g., middle segment or last segment) except for unsegmented complete data (RLC SDU or RLC PDU) or segmented first data (first segment of RLC SDU or RLC PDU including a first segment).
- It may be characterized by including the RLC serial number in the RLC header even for undivided complete data (RLC SDU or RLC PDU) when the in-sequence delivery is configured, when the in-sequence delivery is used, or when the out-of-sequence delivery is not used, in the case of a bearer supporting the MBS service, or in the case of the RLC layer device of the bearer in which the MBS service is configured, or may be characterized by including the RLC serial number in the RLC header even for the divided data (RLC SDU or RLC PDU). In addition, it may be characterized in that the segment offset (SO) field (byte indicating the segmented position) does not include the SO field in the RLC header for the unsegmented complete data (RLC SDU or RLC PDU) or segmented first data (first segment of RLC SDU or RLC PDU including a first segment). In addition, it may be characterized in that the segment offset (SO) field (byte indicating the segmented position) includes the SO field in the RLC header for the segmented data (e.g., middle segment or last segment) except for unsegmented complete data (RLC SDU or RLC PDU) or segmented first data (first segment of RLC SDU or RLC PDU including a first segment).

In the case of an AM bearer (e.g., an MBS bearer or a unicast bearer or a multicast bearer) to which the RLC AM layer device is connected or configured in the above, the overhead may be reduced by having different RLC header structures according to the configuration information configured as follows, and the RLC layer device can process data efficiently.
- It may be characterized by including the RLC serial number in the RLC header even for segmented complete data (RLC SDU or RLC PDU) when in-sequence delivery is not configured, or when out-of-sequence delivery is used, or when in-sequence delivery is configured, or when in-sequence delivery is used, or out-of-sequence delivery is not used, or in the case of a bearer supporting the MBS service, or in the case of the RLC layer device of the bearer in which the MBS service is configured, and may be characterized by including the RLC serial number in the RLC header even for the segmented data (RLC SDU or RLC PDU). In addition, it may be characterized in that the segment offset (SO) field (byte indicating the segmented position) does not include the SO field in the RLC header for the unsegmented complete data (RLC SDU or RLC PDU) or segmented first data (first segment of RLC SDU or RLC PDU including a first segment). In addition, it may be characterized in that the segment offset (SO) field (byte indicating the segmented position) includes the SO field in the RLC header for the segmented data (e.g., middle segment or last segment) except for unsegmented complete data (RLC SDU or RLC PDU) or segmented first data (first segment of RLC SDU or RLC PDU including a first segment).

In the following of the present disclosure, the RLC UM mode and the RLC AM mode are specifically described and proposed in the first embodiment of the reception RLC layer device operation proposed by the present disclosure.

The first embodiment of the operation of the reception RLC layer device proposed in the present disclosure is characterized in that the out-of-order forwarding function is performed as a default operation.

First, variables used for the window operation of the receiving RLC layer device in the RLC UM mode may be defined as follows.
- RX_Next_Reassembly: A state variable indicating the lowest or earliest RLC serial number among data (RLC PDU or RLC SDU) for which reassembly is considered in the receiving RLC layer device.
- RX_Timer_Trigger: A state variable indicating the RLC serial number following the RLC serial number that triggered the RLC reassembly timer.
- RX_Next_Highest: A state variable indicating the RLC serial number next to the highest RLC serial number among received data.

The detailed operation of the (1-1)^{th} embodiment when the receiving RLC layer device of the present disclosure operates in the RLC UM mode is as follows.

The receiving RLC layer device may operate as follows when receiving a UMD PDU from a lower layer device.
- If the RLC serial number is not included in the header of the UMD PDU received above,
   ■ The RLC header is removed and the RLC SDU is delivered to an upper layer device.
- Otherwise (if the RLC serial number is included in the header of the UMD PDU received above), if the RLC sequence number is greater than or equal to (RX_Next_Highest - UM_Window_Size) and less than RX_Next_Reassembly,
   ■ The received UMD PDU is discarded.
- Otherwise, if the above is not the case (if the RLC serial number is included in the header of the UMD PDU received above and the RLC sequence number is less than (RX_ _Next _Highest - UM_Window_Size) or equal to or greater than RX_Next_Reassembly)
   ■ The received UMD PDU is stored in the receiving buffer.

For the UMD PDU stored in the buffer in the above procedure, the receiving RLC layer device operates as follows. That is, when a UMD PDU having an RLC serial number of x is stored in the buffer, the receiving RLC layer device operates as follows.
- If all segments with the value of RLC serial number x have been received,
   ■ All segments having the RLC serial number x may be reassembled to form an RLC SDU, the RLC header may be removed, and the RLC SDU may be delivered to an upper layer device.
   ■ If the value of x in the above is the same as the value of RX_Next_Reassembly,
   ◆ Among the data that have not yet reassembled the RX_Next_Reassembly variable and have not been delivered to the upper layer, the RLC serial number of the first (or lowest RLC serial number among data having a larger RLC serial number value) having an RLC serial number value greater than the current RX_Next_Reassembly value is updated.
- If the value of the RLC serial number x is outside the RLC reassembly window,
   ■ The RX_Next_Highest variable is updated to x +1.
   ■ And all data corresponding to the RLC serial number outside the RLC reassembly window are discarded.
   ■ If the RX_Next_Reassembly value is outside the RLC reassembly window,
   ◆ It is configured to the RLC serial number of the first (or having the lowest RLC serial number among data with a large RLC serial number value) data that has an RLC serial number value equal to or greater than the current (RX_Next_Highest - UM_Window_Size) value among the data that have not yet reassembled the RX_Next_Reassembly variable and have not been passed to an upper layer.
- If RLC reassembly timer is running,
   ■ If the RX_Timer_Trigger value is less than or equal to the RX_Next_Reassumbly value
   ■ Alternatively, if the RX_Timer_Trigger value is outside the RLC reassembly window, and the RX_Timer_Trigger value is not equal to the RX_Next _Highest value,
   ■ Alternatively, if the value of RX _Next Highest is equal to RX_Next_Reassembly+1 and there is no segment lost before the last byte among all currently received segments for the RLC SDU having the value of RX_Next Reassembly as the RLC serial number,
   ◆ The RLC reassembly timer is stopped and initialized.
- If the RLC reassembly timer is not running (including the case where the RLC reassembly timer is stopped by the above procedure),
   ■ If the RX_Next _Highest value is greater than RX_Next_Reassumbly+1,
   ■ Alternatively, if the RX_Next_Highest value is equal to RX_Next_Reassembly+1 and there is at least one segment lost before the last byte among all currently received segments for the RLC SDU having the RX_Next_Reassembly value as the RLC serial number,
   ◆ The RLC reassembly timer is started.
   ◆ And the RX _Timer_Trigger variable is configured to the RX_Next _Highest value.

In the above procedure, if the RLC reassembly timer expires, the receiving RLC layer device operates as follows.
- The RX_Next_Reassembly variable is updated with the RLC serial number value of the first (or lowest RLC serial number) data that has not yet been reassembled with an RLC serial number greater than or equal to the RX _Timer_Trigger value.
- All segments having an RLC serial number smaller than the updated RX_Next_Reassembly value are discarded.
- If the RX_Next_Highest value is greater than RX_Next_Reassumbly +1,
- Alternatively, if the RX_Next_Highest value is equal to RX_Next_Reassembly+1 and there is at least one segment lost before the last byte among all currently received segments for an RLC SDU having the RX_Next_Reassembly value as the RLC serial number,
   ■ The RLC reassembly timer is started.
   ■ And the RX _Timer_Trigger variable is configured to the RX_Next _Highest value.

In the (1-1)^{th} operation of the receiving RLC layer device with the RLC UM mode configured in the present disclosure, if the RLC SDU is completely transmitted without dividing the RLC SDU when the transmitting RLC layer device transmits data (RLC SDU or RLC PDU), if a 6-bit RLC serial number is configured in the RLC layer device, data can be transmitted by including only the SI field (indicating the complete data, or the first segment, or the last segment, or an intermediate segment that is neither the first nor the last) without the RLC serial number in the RLC header. However, if the RLC SDU is segmented and the segment is transmitted, the first segment may be transmitted including the RLC serial number and the SI field in the RLC header, and in the case of the other middle or last segment, the RLC serial number, SI field, and SO field (indicating the first byte divided from the RLC SDU) may be included in the RLC header and transmitted.

In addition, when transmitting data (RLC SDU or RLC PDU), if the RLC SDU is completely transmitted without dividing the RLC SDU, if a 12-bit RLC serial number is configured in the RLC layer device, the transmitting RLC layer device transmitting RLC layer device may transmit data including only the SI field without the RLC serial number in the RLC header. However, if the RLC SDU is segmented and the segment is transmitted, the first segment may be transmitted including the RLC serial number and the SI field in the RLC header, and in the case of the other middle or last segment, the RLC header may include the RLC serial number, SI field, and SO field (indicating the first byte divided from the RLC SDU) and may be transmitted.

When the receiving RLC layer device of the present disclosure operates in the RLC AM mode, the detailed operation of the (1-2)^{th} embodiment is as follows. In the RLC AM mode, the RLC layer device implements the ARQ function, device receives the RLC status report from the receiving end (indicating whether or not the data is successfully transferred by the RLC serial number) and retransmits the unsuccessfully transferred data to prevent data loss.

First, variables used for the window operation of the receiving RLC layer device in the RLC AM mode may be defined as follows.
- RX_Next: A state variable indicating the RLC serial number next to the highest or last RLC serial number among completely received data for reassembly.
- RX _Next Status_Trigger: A status variable indicating the next RLC serial number that triggered the RLC reassembly timer.
- RX_Next_Highest: A state variable indicating the RLC serial number next to the highest RLC serial number among received data.
- RX _Next _Highest Status: A status variable indicating the highest RLC serial number that can be indicated by ACK_SN (e.g., the RLC serial number following the highest successfully received RLC serial number) in the RLC status report when configuring the RLC status report.

The receiving RLC layer device may operate as follows when receiving an AMD PDU including y to z bytes of an RLC SDU having an RLC serial number value as x from a lower layer device.
- If the RLC serial number x of the AMD PDU received above is outside the RLC reception window,
- Or, if an AMD PDU containing bytes y to bytes z of the RLC SDU with the RLC serial number value x has been received before,
   ■ The received AMD PDU is discarded.
- Otherwise, unless the above,
   ■ The received AMD PDU is stored in a reception buffer.
   ■ If the portion or segment included in the AMD PDU has been previously received,
   ◆ The portion or segment included in the AMD PDU is considered to have been received and discarded.

In the above procedure, the receiving RLC layer device operates as follows for the AMD PDU stored in the buffer. That is, when an AMD PDU having an RLC serial number of x is stored in the buffer, the receiving RLC layer device operates as follows.
- If the value of RLC serial number x is equal to or greater than the value of RX_Next_Highest,
   ■ The RX _Next Highest value is updated to x+1.
- If all bytes of the RLC SDU corresponding to the value of RLC serial number x are received,
   ■ The data or segments corresponding to the value of the RLC serial number x are reassembled to form an RLC SDU, the RLC header is removed, and the reassembled RLC SDU is delivered to an upper layer device.
   ■ If the value of x is equal to RX_Highest_Status
   ◆ The RX _Highest Status variable is updated with the RLC serial number value of the first (lowest RLC serial number) data that is larger than the current RX _Highest Status value and has not yet completely received all bytes.
   ■ If the value of x is equal to RX_Next,
   ◆ The RX_Next variable is updated with the RLC serial number value of the first (lowest RLC serial number) data that is greater than the current RX_Next value and has not yet completely received all bytes.
- If RLC rebuild timer is running,
   ■ If the RX_Next_Status_Trigger value is the same as the RX_Next value
   ■ Or, if the RX_Next_Status_Trigger value is equal to RX_Next+1 and there is no segment lost before the last byte of all currently received segments for the RLC SDU having the RX_Next value as the RLC serial number,
   ■ Or, if the RX_Next_Status_Trigger value is outside the RLC receive window, and the RX_Next_Status_Trigger value is not equal to the RX_Next+AM_Window_Size value,
   ◆ The RLC reassembly timer is stopped and initialized.
- If the RLC reassembly timer is not running (including the case where the RLC reassembly timer is stopped by the above procedure)
   ■ If the RX_Next_Highest value is greater than RX_Next+1
   ■ Or, if the RX _Next _Highest value is equal to RX_Next +1, and there is at least one segment lost before the last byte among all currently received segments for the RLC SDU having the RX_Next value as the RLC serial number
   ◆ The RLC rebuild timer is stared.
   ◆ And the RX _Next Status _Trigger variable is configured to the RX _Next Highest value.

In the above procedure, if the RLC reassembly timer expires, the receiving RLC layer device operates as follows.
- The RX_Highest_Status variable is updated to the RLC serial number value of the first (or lowest RLC serial number) data that has not yet been fully received with an RLC serial number equal to or greater than the RX _Next Status_Trigger value.
- If the RX_Next_Highest value is greater than RX_Next +1
- or if there is at least one segment lost before the last byte among all currently received segments for an RLC SDU with RX_Next _Highest value equal to RX_Next +1 and RX_Next value as RLC serial number
   ◆ The RLC rebuild timer is started.
   ◆ And the RX _Next Status _Trigger variable is configured to the RX _Next Highest value.

In the (1-2)^{th} embodiment of the operation of the receiving RLC layer device in which the RLC AM mode proposed in the present disclosure is configured, when transmitting data (RLC SDU or RLC PDU), if the RLC SDU is completely transmitted without dividing the RLC SDU, or if the first segment divided in the RLC SDU is transmitted, if a 12-bit RLC serial number is configured in the RLC layer device, the transmitting RLC layer device may transmit data including only the RLC serial number and the SI field (indicating complete data, first segment, last segment, or intermediate segment that is neither first nor last) in the RLC header. However, if the RLC SDU is segmented and the segment is transmitted, if the middle or last segment is transmitted, the RLC header includes the RLC serial number, SI field, and SO field (indicating the first byte divided from the RLC SDU) to be transmitted.

In addition, when the transmitting RLC layer device transmits data (RLC SDU or RLC PDU) in the (1-2)^{th} operation, which is the operation of the receiving RLC layer device in which the RLC AM mode proposed in the present disclosure is configured, if the RLC SDU is completely transmitted without dividing the RLC SDU, or if the first segment divided in the RLC SDU is transmitted when the transmitting RLC layer device transmits data (RLC SDU or RLC PDU), if an 18-bit RLC serial number is configured in the RLC layer device, the transmitting RLC layer device may transmit data including only the RLC serial number and the SI field (indicating complete data, first segment, last segment, or intermediate segment that is neither first nor last) in the RLC header. However, when the RLC SDU is segmented and the segment is transmitted, if the middle or last segment is used, the RLC header may include the RLC serial number, the SI field (indicating the first byte divided from the RLC SDU), and the SO field.

In the following of the present disclosure, the RLC UM mode and the RLC AM mode are specifically described and proposed in the second embodiment of the reception RLC layer device operation proposed by the present disclosure.

In the second embodiment, when the in-sequence delivery is configured, when the in-sequence delivery is used, when the out-of-sequence delivery is not used, or in a case of bearers supporting the MBS service, or in the case of the RLC layer device of the bearer in which the MBS service is configured, the operation of the receiving RLC layer device is proposed.

The second embodiment of the reception RLC layer device operation proposed in the present disclosure is characterized in that, if the out-of-order delivery function is performed as a default operation, but the out-of-order delivery function is configured or activated for RRC message, MBS control message, MAC control information, or RLC control PDU, data is aligned based on the RLC serial number and deliver the data to the upper layer. In addition, the second embodiment is characterized in that, when the out-of-sequence delivery is applied, segments outside the RLC reassembly window are immediately discarded, but when the order transfer function is configured or activated, segments outside the window are not immediately discarded, and segments outside the window are reassembled, when the complete RLC SDU is reassembled, the RLC SDUs are delivered to the upper layer device in ascending order of the RLC serial number, the segments that have not been reassembled as a complete RLC SDU are discarded. In addition, it is characterized in that, when the order forwarding function is configured or activated, even if all bytes are received for the RLC SDU corresponding to the RLC serial number, it is not immediately reassembled and delivered to the upper layer, but is reassembled after being sorted in the RLC serial number order and the RLC SDUs are delivered in ascending order of the RLC serial number to the upper layer, and it is characterized in that, when the out-of-order delivery function is applied, when all bytes are received for the RLC SDU corresponding to the RLC serial number, the bytes are reassembled and delivered to the upper layer.

First, variables used for the window operation of the receiving RLC layer device in the RLC UM mode may be defined as follows.
- RX_Next_Reassembly: A state variable indicating the lowest or earliest RLC serial number among data (RLC PDU or RLC SDU) for which reassembly is considered in the receiving RLC layer device.
- RX_Timer_Trigger: A state variable indicating the RLC serial number following the RLC serial number that triggered the RLC reassembly timer.
- RX_Next_Highest: A state variable indicating the RLC serial number next to the highest RLC serial number among received data.

The detailed operation of the (2-1)^{th} embodiment when the receiving RLC layer device of the present disclosure operates in the RLC UM mode is as follows.

The receiving RLC layer device may operate as follows when receiving a UMD PDU from a lower layer device.
- If the RLC serial number is not included in the header of the UMD PDU received above,
   ■ The RLC header is removed and the RLC SDU is delivered to an upper layer device.
- Otherwise (if the RLC serial number is included in the header of the UMD PDU received above), if the RLC sequence number is greater than or equal to (RX_Next_Highest - UM_Window_Size) and less than RX_Next_Reassembly
   ■ The received UMD PDU is discarded.
- Otherwise (If the RLC serial number is included in the header of the UMD PDU received above, and the RLC sequence number is less than (RX _Next _Highest - UM_Window _Size) or equal to or greater than RX_Next_Reassembly)
   ■ The received UMD PDU is stored in a receiving buffer.

In the above procedure, the receiving RLC layer device operates as follows for the UMD PDU stored in the buffer. That is, when a UMD PDU having an RLC serial number of x is stored in the buffer, the receiving RLC layer device operates as follows.
- If all segments with the value of RLC serial number x have been received,
   ■ If the sequence forwarding function is not configured or if the MBS service is not a configured bearer,
   ◆ All segments having the value of the RLC serial number x may be reassembled to form an RLC SDU, the RLC header may be removed, and the RLC SDU may be delivered to an upper layer device.
   ■ If the value of x in the above is the same as the value of RX_Next_Reassembly,
   ◆ The RX_Next_Reassembly variable is updated with the RLC serial number of the first data having an RLC serial number value greater than the current RX_Next_Reassembly value (or having the lowest RLC serial number among data having a larger RLC serial number value) among the data that has not yet been reassembled and passed to the upper layer.
   ◆ If UMD PDUs having an RLC serial number smaller than the updated RX_Next_Reassembly value are reassembled into RLC SDUs, the RLC header is removed, and the reassembled RLC SDUs have not been previously delivered to the upper layer, they are delivered to the upper layer device in ascending order of the RLC serial number.
- If the value of the RLC serial number x is outside the RLC reassembly window,
   ■ The RX_Next_Highest variable is updated to x +1.
   ■ If the ordering function is not configured or if the MBS service is not a configured bearer,
   ◆ In addition, all data corresponding to the RLC serial number outside the RLC reassembly window are discarded.
   ■ In the above, if UMD PDUs having RLC serial numbers outside the RLC reassembly window are reassembled into RLC SDUs, the RLC header is removed, and the reassembled RLC SDUs have not been previously delivered to an upper layer, they are delivered to the upper layer device in ascending order of the RLC serial number.
   ■ If the RX_Next_Reassembly value is outside the RLC reassembly window,
   ◆ The RX_Next_Reassembly variable is configured to the RLC serial number of the first (or the lowest RLC serial number among data having a larger RLC serial number value) having an RLC serial number value equal to or greater than the current (RX _Next _Highest - UM_Window _Size) value among the data that has not yet been reassembled and passed to the upper layer.
- If RLC reassembly timer is running
   ■If the RX_Timer_Trigger value is less than or equal to the RX_Next_Reassumbly value,
   ■Alternatively, if the RX_Timer_Trigger value is outside the RLC reassembly window, and the RX_Timer_Trigger value is not equal to the RX _Next Highest value,
   ■Alternatively, if the RX_Next_Highest value is equal to RX_Next_Reassembly+1 and there is no segment lost before the last byte among all currently received segments for the RLC SDU having the RX_Next_Reassembly value as the RLC serial number,
   ◆The RLC reassembly timer is stopped and initialized.
- If the RLC reassembly timer is not running (including the case where the RLC reassembly timer is stopped by the above procedure)
   ■If the RX_Next_Highest value is greater than RX_Next_Reassumbly +1
   ■Or, if the RX_Next_Highest value is equal to RX_Next_Reassembly+1 and there is at least one segment lost before the last byte among all currently received segments for the RLC SDU having the RX_Next_Reassembly value as the RLC serial number
   ◆The RLC reassembly timer is started.
   ◆In addition, the RX_Timer_Trigger variable is configured to the RX_Next Highest value.

In the above procedure, if the RLC reassembly timer expires, the receiving RLC layer device operates as follows.
- The RX_Next_Reassembly variable is updated with the RLC serial number value of the first (or lowest RLC serial number) data that has not yet been reassembled with an RLC serial number equal to or greater than the RX_Timer_Trigger value.
- If the ordering function is not configured or if the MBS service is not a configured bearer,
   ■ All segments having an RLC serial number smaller than the updated RX_Next_Reassembly value are discarded.
- The UMD PDUs having the RLC serial number smaller than the updated RX_Next_Reassembly value are reassembled into the RLC SDU, the RLC header is removed, and if the reassembled RLC SDUs have not been delivered to the upper layer before, they are delivered to the upper layer device in ascending order of the RLC serial number.
- If the RX_Next_Highest value is greater than RX_Next_Reassumbly +1,
- Alternatively, if the RX_Next_Highest value is equal to RX_Next_Reassembly+1 and there is at least one segment lost before the last byte among all currently received segments for the RLC SDU having the RX_Next_Reassembly value as the RLC serial number,
   ◆The RLC reassembly timer is started.
   ◆In addition, the RX_Timer_Trigger variable is configured to the RX_Next Highest value.

In the (2-1)^{th} operation of the receiving RLC layer device in which the RLC UM mode proposed in the present disclosure is configured, if the order forwarding function is not configured or if the MBS service is not configured bearer, in the case that the transmitting RLC layer device completely transmits the RLC SDU without dividing the RLC SDU when transmitting data (RLC SDU or RLC PDU), the transmitting RLC layer device may transmit data including only the SI field (indicates complete data, or first segment, or last segment, or intermediate segment that is neither first nor last) without the RLC serial number in the RLC header if a 6-bit RLC serial number is configured in the RLC layer device. However, if the RLC SDU is segmented and the segment is transmitted, the first segment may be transmitted including the RLC serial number and the SI field in the RLC header, and in the case of the other middle or last segment, the RLC header may include the RLC serial number, SI field, and SO field (indicating the first byte divided from the RLC SDU) and may be transmitted.

Also, if the in-sequence delivery is not configured or if it is not a bearer in which the MBS service is configured, when the transmitting RLC layer device transmits data (RLC SDU or RLC PDU), if the RLC SDU is completely transmitted without dividing the RLC SDU, if a 12-bit RLC serial number is configured in the RLC layer device, the transmitting RLC layer device may transmit data including only the SI field without the RLC serial number in the RLC header. However, if the RLC SDU is segmented and the segment is transmitted, the first segment may be transmitted including the RLC serial number and the SI field in the RLC header, and in the case of the other middle or last segment, the RLC header may include the RLC serial number, SI field, and SO field (indicating the first byte divided from the RLC SDU) and may be transmitted.

In the (2-1)^{th} operation of the receiving RLC layer device in which the RLC UM mode proposed in the present disclosure is configured, if the in-sequence delivery is configured or if it is a bearer in which the MBS service is configured, when the transmitting RLC layer device transmits data (RLC SDU or RLC PDU), even if the RLC SDU is completely transmitted without dividing the RLC SDU, if a 6-bit RLC serial number is configured in the RLC layer device, the transmitting RLC layer device may transmit data by including the RLC serial number and the SI field (indicates complete data, or first segment, or last segment, or intermediate segment that is neither first nor last) in the RLC header including the RLC serial number so that the receiving RLC layer device may sort them in order. However, if the RLC SDU is segmented and the segment is transmitted, the first segment may be transmitted including the RLC serial number and the SI field in the RLC header, and in the case of the other middle or last segment, the RLC header may include the RLC serial number, SI field, and SO field (indicating the first byte divided from the RLC SDU) and may be transmitted.

In another method, in the (2-1)^{th} operation of the receiving RLC layer device in which the RLC UM mode proposed in the present disclosure is configured, if the in-sequence delivery is configured or if it is a bearer in which the MBS service is configured, when the transmitting RLC layer device transmits data (RLC SDU or RLC PDU), even if the RLC SDU is completely transmitted without dividing the RLC SDU, if a 6-bit RLC serial number is configured in the RLC layer device, the transmitting RLC layer device may include a 12-bit RLC serial number and an SI field (complete data, or first segment, or last segment, or not first refers to an intermediate segment that is not the last) and may transmit data including an indication that the in-sequence delivery may be configured or applied by defining and including the 1-bit I field. That is, the length of the RLC serial number may be changed from 6 bits to 12 bits, and the ordering function may be indicated with a 1-bit indicator. However, if the RLC SDU is divided and the segment is transmitted, in the case of the first segment, the RLC serial number and SI field and 1-bit I field may be defined and included in the RLC header, and an indication that the ordering function can be configured or applied may be transmitted, and in the case of the middle or last segment, the RLC serial number, SI field, SO field (indicating the first byte divided from RLC SDU), and 1-bit I field may be defined and included in the RLC header, so that an indication that the in-sequence delivery may be configured or applied may be transmitted.

In addition, if the in-sequence delivery is configured or if it is a bearer in which the MBS service is configured, when the transmitting RLC layer device transmits data (RLC SDU or RLC PDU), if the RLC SDU is completely transmitted without dividing the RLC SDU, if the 12-bit RLC serial number is configured in the RLC layer device, data may be transmitted including the RLC serial number and the SI field in the RLC header. However, if the RLC SDU is segmented and the segment is transmitted, the first segment may be transmitted including the RLC serial number and the SI field in the RLC header, and in the case of the middle or last segment, it can be applied to the RLC header and transmitted including the RLC serial number, SI field, and SO field (indicating the first byte divided from the RLC SDU).

In another method, if the in-sequence delivery is configured or if it is a bearer in which the MBS service is configured, when transmitting data (RLC SDU or RLC PDU), if the RLC SDU is completely transmitted without dividing the RLC SDU, if the 12-bit RLC serial number is configured in the RLC layer device, the transmitting RLC layer device may transmit data including an indication that the order sort function can be configured or applied by defining and including the RLC serial number, SI field, and 1-bit I field in the RLC header. However, if the RLC SDU is segmented and the segment is transmitted, in the case of the first segment, the RLC serial number, SI field, and 1-bit I field may be defined and included in the RLC header, indicating that the ordering function may be configured or applied, and may be transmitted, and in the case of the middle or last segment, the RLC serial number, SI field, SO field (indicating the first byte divided from RLC SDU), and 1-bit I field may be defined and included in the RLC header, so that indication that the ordering function may be configured or applied may be transmitted.

In the above, when the I field is always configured to 0 in the RLC header and the ordering function is not configured, the header structure as described above may be applied to the undivided RLC SDU.

In addition, it is characterized in that the transmitting RLC layer device can transmit data by configuring and including the RLC header structure including the I field proposed in the present disclosure when the ordering function is configured or activated, when the in-sequence delivery is configured or activated, the receiving RLC layer device may check the I field to check the RLC serial number and perform order sorting on the received data, and it is characterized in that, for an RLC PDU having an I field value of 0, even if the ordering function is configured, reassembly is performed immediately without applying the ordering function, the RLC header is removed, and deliver the same to the upper layer device (because the data was sent before the ordering function was configured).

When the receiving RLC layer device of the present disclosure operates in the RLC AM mode, the detailed operation of the (2-2)^{th} embodiment is as follows. In the RLC AM mode, the RLC layer device implements the ARQ function, receives an RLC status report from the receiving end (indicating whether or not data is successfully transmitted with the RLC serial number), and retransmits unsuccessfully delivered data to prevent data loss from occurring.

In the (2-2)^{th} embodiment, when the in-sequence delivery is configured, or when the in-sequence delivery is used, or when the out-of-sequence delivery is not used, or in the case of a bearer in which the MBS service is configured, or in the case of an RLC layer device in which the MBS service is configured, the operation of the receiving RLC layer device is proposed.

First, variables used for the window operation of the receiving RLC layer device in the RLC AM mode may be defined as follows.
- RX_Next: A state variable indicating the RLC serial number next to the highest or last RLC serial number among completely received data to be reassembled.
- RX_Next_Status_Trigger: A status variable indicating the next RLC serial number that triggered the RLC reassembly timer.
- RX_Next_Highest: A state variable indicating the RLC serial number next to the highest RLC serial number among received data.
- RX_Next_Highest Status: A status variable indicating the highest RLC serial number that can be indicated by ACK_SN (e.g., the RLC serial number following the highest successfully received RLC serial number) in the RLC status report when configuring an RLC status report.

The receiving RLC layer device may operate as follows when receiving an AMD PDU including y to z bytes of the RLC SDU having the RLC serial number value as x from the lower layer device.
- If the RLC serial number x of the AMD PDU received above is outside the RLC reception window,
- Or, if an AMD PDU containing bytes y to bytes z of an RLC SDU having an RLC serial number value of x has been received before.
   ■ The received AMD PDU is discarded.
- Otherwise, unless the above
   ■ The received AMD PDU is stored in the receive buffer.
   ■ If a portion or segment included in the AMD PDU has been previously received,

The portion or segment included in the AMD PDU is considered to have been received and discarded.

In the above procedure, for the AMD PDU stored in the buffer, the receiving RLC layer device operates as follows. That is, when an AMD PDU having an RLC serial number of x is stored in the buffer, the receiving RLC layer device operates as follows.
- If the value of RLC serial number x is greater than or equal to the value of RX_Next_Highest
   ■ The RX_Next Highest value is updated to x+1.
- If all bytes of the RLC SDU corresponding to the value of RLC serial number x have been received,
   ■ If the ordering function is not configured or if the MBS service is not a configured bearer
   ◆ The data or segments corresponding to the value of the RLC serial number x are reassembled to form an RLC SDU, the RLC header is removed, and the reassembled RLC SDU is delivered to an upper layer device.
   ■ If the value of x is equal to RX_Highest_Status
   ◆ The RX_Highest_Status variable is updated with the RLC serial number value of the first (lowest RLC serial number) data that is greater than the current RX_Highestet_ Status value and has not yet completely received all bytes.
   ■ If the value of x is equal to RX_Next
   ◆ The RX_Next variable is updated with the RLC serial number value of the first (lowest RLC sequence number) data that is greater than the current RX_Next value and has not yet completely received all bytes.
   ◆ If the AMD PDUs having an RLC serial number smaller than the updated RX_Next value are reassembled into RLC SDUs, the RLC header is removed, and the reassembled RLC SDUs have not been previously delivered to the upper layer, the AMD PDUs are delivered to the upper layer in ascending order of the RLC serial number.
- If the RLC rebuild timer is running
   ■ If the RX_Next_Status_Trigger value is the same as the RX_Next value
   ■ Or, if the RX_Next_Status_Trigger value is equal to RX_Next+1 and there is no segment lost before the last byte among all currently received segments for the RLC SDU having the RX _Next value as the RLC serial number,
   ■ Or, if the RX_Next_Status_Trigger value is outside the RLC receive window, and the RX_Next_Status_Trigger value is not equal to the RX_Next+AM_Window_Size value,
   ◆ The RLC reassembly timer is stopped and initialized.
- If the RLC reassembly timer is not running (including the case where the RLC reassembly timer is stopped by the above procedure)
   ■ If the RX_Next_Highest value is greater than RX_Next +1
   ■ Or, if the RX_Next_Highest value is equal to RX_Next +1 and there is at least one segment lost before the last byte among all currently received segments for the RLC SDU having the RX _Next value as the RLC serial number
   ◆ The RLS reassembly timer is started.
   ◆ The RX_Next Status_Trigger variable is configured to the RX_Next_Highest value.

In the above procedure, if the RLC reassembly timer expires, the receiving RLC layer device operates as follows.
- The RX_Highest_Status variable is updated with the RLC serial number value of the first (or lowest RLC serial number) data that has not yet been fully received with an RLC serial number equal to or greater than the RX_Next Status_Trigger value.
- If the RX_Next_Highest value is greater than RX_Next +1
- Or, if the RX _Next _Highest value is equal to RX_Next +1 and there is at least one segment lost before the last byte among all currently received segments for the RLC SDU having the RX _Next value as the RLC serial number
   ◆ The RLS reassembly timer is started.
   ◆ The RX_Next Status_Trigger variable is configured to the RX_Next_Highest value.

In the (2-2)^{th} embodiment, which is the operation of the receiving RLC layer device in which the RLC AM mode is configured, if the RLC SDU is completely transmitted without fragmentation when transmitting data (RLC SDU or RLC PDU), or when the first segment divided in the RLC SDU is transmitted, if the 12-bit RLC serial number is configured in the RLC layer device, data may be transmitted by including only the RLC serial number and the SI field (indicates the complete data, or the first segment, or the last segment, or the middle segment, which is neither the first nor the last) in the RLC header. However, if the RLC SDU is segmented and the segment is transmitted, if the middle or last segment is transmitted, the RLC header may include the RLC serial number, SI field, and SO field (indicates the first byte divided from the RLC SDU) and may be transmitted.

In addition, in the (2-2)^{th} embodiment, which is the operation of the receiving RLC layer device in which the RLC AM mode is configured, if the RLC SDU is completely transmitted without fragmentation when transmitting data (RLC SDU or RLC PDU), or when transmitting the first segment divided in the RLC SDU, if an 18-bit RLC serial number is configured in the RLC layer device, the transmitting RLC layer device may transmit data including only the RLC serial number and the SI field (indicating complete data, first segment, last segment, or intermediate segment that is neither first nor last) in the RLC header. However, if the RLC SDU is divided and the segment is transmitted, if the middle or last segment is transmitted, the RLC header includes the RLC serial number, SI field, and SO field (indicating the first byte divided from the RLC SDU).

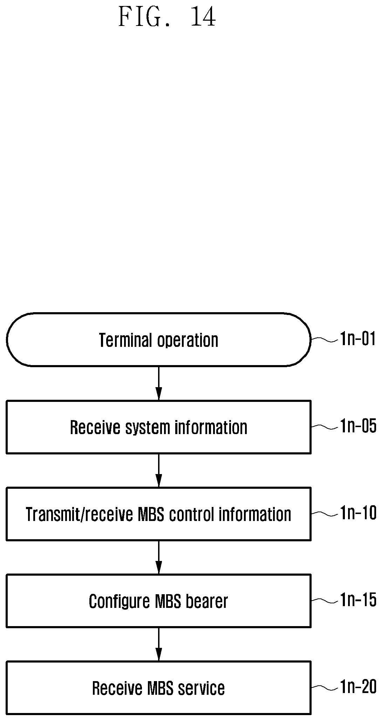

FIG. 14 is a diagram illustrating an operation of a terminal proposed by the present disclosure.

In FIG. 14, the terminal may camp on or accesses the cell, receive system information (1n-10) in RRC idle mode, RRC deactivation mode, or RRC connected mode, and check whether or not the MBS service is supported or the type or configuration of the supported MBS service according to the first signaling procedure or the second signaling procedure or the third signaling procedure or the fourth signaling procedure proposed in the present disclosure. The terminal may receive or transmit MBS control information (MBS service related configuration information) from or to the base station (e.g., MBS service request or interest or preference indication) (1n-10). When the MBS service is supported in the above, or when the MBS service of interest or to be received is supported, the terminal may configure the MBS bearer in the method suggested in FIG. 7 of the present disclosure, receive MBS data according to the MBS service configuration, and receive MBS data in the method proposed in FIG. 1h of the present disclosure to receive service support.

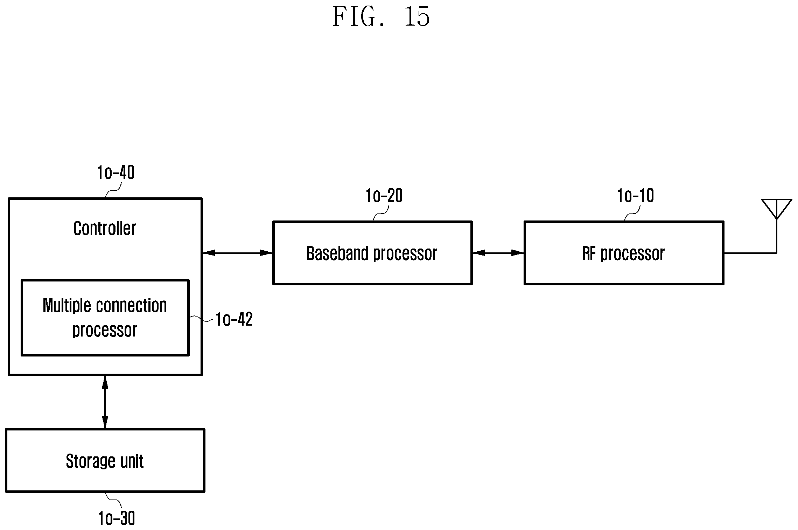

FIG. 15 illustrates a structure of a terminal to which an embodiment of the present disclosure can be applied.

Referring to the figure, the terminal may include a radio frequency (RF) processor 1o-10, a baseband processor 1o-20, a storage unit 1o-30, and a controller 1o-40.

The RF processor 1o-10 performs a function for transmitting and receiving a signal through a radio channel, such as band conversion and amplification of the signal. That is, the RF processor 1o-10 up-converts the baseband signal provided from the baseband processing unit 1o-20 into an RF band signal and transmits the same through an antenna, and down-converts the RF band signal received through the antenna into a baseband signal. For example, the RF processor 1o-10 may include a transmit filter, a receive filter, an amplifier, a mixer, an oscillator, a digital to analog converter (DAC), an analog to digital converter (ADC), and the like. In the figure, only one antenna is shown, but the terminal may include a plurality of antennas. In addition, the RF processor 1o-10 may include a plurality of RF chains. Furthermore, the RF processor 1o-10 may perform beamforming. For the beamforming, the RF processor 1o-10 may adjust the phase and magnitude of each of the signals transmitted and received through a plurality of antennas or antenna elements. In addition, the RF processor may perform MIMO, and may receive multiple layers when performing MIMO operation. The RF processor 1o-10 may perform receive beam sweeping by appropriately configuring a plurality of antennas or antenna elements under the control of the controller, or adjust the direction and beam width of the receive beam so that the receive beam is coordinated with the transmit beam.

The baseband processor 1o-20 performs a function of converting between a baseband signal and a bit stream according to a physical layer standard of the system. For example, when transmitting data, the baseband processor 1o-20 generates complex symbols by encoding and modulating the transmitted bit stream. Also, when receiving data, the baseband processor 1o-20 restores the received bit stream by demodulating and decoding the baseband signal provided from the RF processing unit 1o-10. For example, in case of orthogonal frequency division multiplexing (OFDM) scheme, when transmitting data, the baseband processor 1o-20 generates complex symbols by encoding and modulating a transmission bit stream, maps the complex symbols to subcarriers, and then, constructs OFDM symbols through an inverse fast Fourier transform (IFFT) operation and cyclic prefix (CP) insertion. In addition, when receiving data, the baseband processor 1o-20 divides the baseband signal provided from the RF processing unit 1o-10 into OFDM symbol units, restores signals mapped to subcarriers through a fast Fourier transform (FFT) operation, and then restores a received bit stream through demodulation and decoding.

The baseband processor 1o-20 and the RF processor 1o-10 transmit and receive signals as described above. Accordingly, the baseband processor 1o-20 and the RF processor 1o-10 may be referred to as a transmitter, a receiver, a transceiver, or a communication unit. Furthermore, at least one of the baseband processor 1o-20 and the RF processor 1o-10 may include a plurality of communication modules to support a plurality of different radio access technologies. In addition, at least one of the baseband processor 1o-20 and the RF processor 1o-10 may include different communication modules to process signals of different frequency bands. For example, the different radio access technologies may include an LTE network, an NR network, and the like. In addition, the different frequency bands may include a super high frequency (SHF) (e.g., 2.5 GHz, 5 GHz) band and a millimeter wave (e.g., 60 GHz) band.

The storage unit 1o-30 stores data such as a default program, an application program, and configuration information for the operation of the terminal. The storage unit 1o-30 provides stored data according to the request of the control unit 1o-40.

The controller 1o-40 controls overall operations of the terminal. For example, the controller 1o-40 transmits and receives signals through the baseband processor 1o-20 and the RF processor 1o-10. In addition, the control unit 1o-40 writes and reads data in the storage unit 1o-30. To this end, the controller 1o-40 may include at least one processor. For example, the controller 1o-40 may include a communication processor (CP) that controls for communication and an application processor (AP) that controls an upper layer such as an application program.

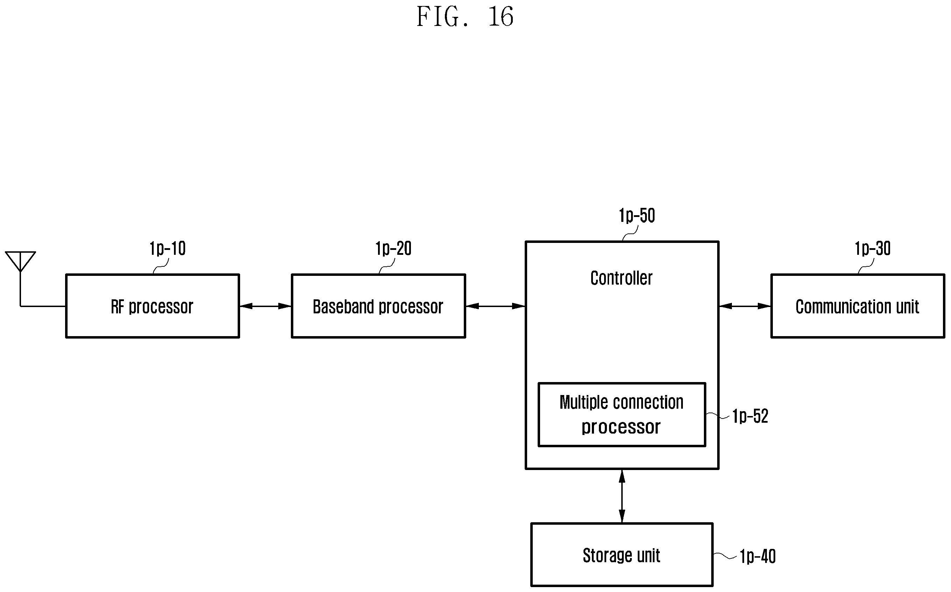

FIG. 16 illustrates a block configuration of a TRP in a radio communication system to which an embodiment of the present disclosure can be applied.

As illustrated in the figure, the base station may include an RF processor 1p-10, a baseband processor 1p-20, a backhaul communication unit 1p-30, a storage unit 1p-40, and a controller 1p-50.

The RF processor 1p-10 performs a function for transmitting and receiving a signal through a wireless channel, such as band conversion and amplification of the signal. That is, the RF processor 1p-10 up-converts the baseband signal provided from the baseband processor 1p-20 into an RF band signal, transmits the same through an antenna, and down-converts the RF band signal received through the antenna into a baseband signal. For example, the RF processor 1p-10 may include a transmit filter, a receive filter, an amplifier, a mixer, an oscillator, a DAC, an ADC, and the like. Although only one antenna is shown in the drawing, the first access node may include a plurality of antennas. Also, the RF processing unit 1p-10 may include a plurality of RF chains. Furthermore, the RF processor 1p-10 may perform beamforming. For the beamforming, the RF processor 1p-10 may adjust the phase and magnitude of each of signals transmitted and received through a plurality of antennas or antenna elements. The RF processor may perform a downlink MIMO operation by transmitting one or more layers.

The baseband processor 1p-20 performs a function of converting between a baseband signal and a bit stream according to the physical layer standard of the first radio access technology. For example, when transmitting data, the baseband processor 1p-20 generates complex symbols by encoding and modulating a transmitted bit stream. Also, when receiving data, the baseband processor 1p-20 restores the received bit stream by demodulating and decoding the baseband signal provided from the RF processor 1p-10. For example, in the OFDM scheme, when transmitting data, the baseband processor 1p-20 generates complex symbols by encoding and modulating a transmission bit stream, maps the complex symbols to subcarriers, and then OFDM symbols are constructed through the IFFT operation and CP insertion. In addition, upon data reception, the baseband processor 1p-20 divides the baseband signal provided from the RF processor 1p-10 into OFDM symbol units, and restores signals mapped to subcarriers through FFT operation. After that, the received bit stream is restored through demodulation and decoding. The baseband processor 1p-20 and the RF processor 1p-10 transmit and receive signals as described above. Accordingly, the baseband processor 1p-20 and the RF processor 1p-10 may be referred to as a transmitter, a receiver, a transceiver, a communication unit, or a wireless communication unit.

The communication unit 1p-30 provides an interface for performing communication with other nodes in the network.

The storage unit 1p-40 stores data such as a default program, an application program, and configuration information for the operation of the main station. In particular, the storage unit 1p-40 may store information on a bearer allocated to an accessed terminal, a measurement result reported from the accessed terminal, and the like. In addition, the storage unit 1p-40 may store information serving as a criterion for determining whether to provide or stop multiple connections to the terminal. In addition, the storage unit 1p-40 provides the stored data according to the request of the control unit 1p-50.

The controller 1p-50 controls overall operations of the main station. For example, the controller 1p-50 transmits and receives signals through the baseband processor 1p-20 and the RF processor 1p-10 or through the backhaul communication unit 1p-30. In addition, the controller 1p-50 writes and reads data in the storage unit 1p-40. To this end, the controller 1p-50 may include at least one processor.

The embodiments of the disclosure described and shown in the specification and the drawings are merely specific examples that have been presented to easily explain the technical contents of the disclosure and help understanding of the disclosure, and are not intended to limit the scope of the disclosure. It will be apparent to those skilled in the art that, in addition to the embodiments set forth herein, other variants based on the technical idea of the disclosure may be implemented.

## Claims

1. A method performed by a terminal in a wireless communication system, the method comprising:
establishing a radio resource control (RRC) connection with a base station;
receiving, from the base station through a physical layer, first multicast and broadcast service (MBS) data and second MBS data ;
delivering, from the physical layer through a medium access control (MAC) layer, the first MBS data to a first radio link control (RLC) layer and the second MBS data to a second RLC layer;
delivering, to a packet data convergence protocol (PDCP) layer, the first MBS data from the first RLC layer and the second MBS data from the second RLC layer; and
delivering, from the PDCP layer to an upper layer, the first MBS data and the second MBS data,
wherein a first bearer comprising the first RLC layer is configured as an unicast bearer, and a second bearer comprising the second RLC layer is configured as a multicast bearer.

2. The method of claim 1,
wherein the first RLC layer is configured as an unacknowledgement mode (UM) or an acknowledgement mode (AM), and the second RLC layer is configured as the UM, and
wherein the first MBS data and the second MBS data are identified based on at least one of a logical channel identifier and a radio network temporary identifier (RNTI).

3. The method of claim 1,
wherein a reordering operation is performed on the first MBS data and the second MBS data in the PDCP layer, and
wherein the MAC layer is configured to perform a hybrid automatic repeat request (HARQ) retransmission operation for the first MBS data or the second MBS data.

4. The method of claim 1,
wherein the upper layer comprises a service data adaption protocol (SDAP) layer that performs an operation for mapping each of the first MBS data and the second MBS data to a corresponding quality of service (QoS) flow, and
wherein an SDAP header is not included in each of the first MBS data and the second MBS data.

5. A method performed by a base station in a wireless communication system, the method comprising:
establishing a radio resource control (RRC) connection with a terminal;
obtaining, at a packet data convergence protocol (PDCP) layer from an upper layer, first multicast and broadcast service (MBS) data and second MBS data;
obtaining, from the PDCP layer, the first MBS data at a first radio link control (RLC) layer and the second MBS data at a second RLC layer;
obtaining, at a physical layer through a medium access control (MAC) layer, the first MBS data from the first RLC layer and the second MBS data from the second RLC layer; and
transmitting, to the terminal through the physical layer, the first MBS data and the second MBS data,
wherein a first bearer comprising the first RLC layer is configured as an unicast bearer, and a second bearer comprising the second RLC layer is configured as a multicast bearer.

6. The method of claim 5,
wherein the first RLC layer is configured as an unacknowledgement mode (UM) or acknowledgement mode (AM), and the second RLC layer is configured as the UM, and
wherein the first MBS data and the second MBS data are identified based on at least one of a logical channel identifier and a radio network temporary identifier (RNTI).

7. The method of claim 5,
wherein a reordering operation is performed on the first MBS data and the second MBS data in the PDCP layer, and
wherein the MAC layer is configured to perform a hybrid automatic repeat request (HARQ) retransmission operation for the first MBS data or the second MBS data.

8. The method of claim 5,
wherein the upper layer comprises a service data adaption protocol (SDAP) layer that performs an operation for mapping each of the first MBS data and the second MBS data to a corresponding quality of service (QoS) flow, and
wherein an SDAP header is not included in each of the first MBS data and the second MBS data.

9. A terminal in a wireless communication system, the terminal comprising:
a transceiver; and
a controller configured to:
establish a radio resource control (RRC) connection with a base station;
control the transceiver to receive, from the base station through a physical layer, first multicast and broadcast service (MBS) data and second MBS data ;
deliver, from the physical layer through a medium access control (MAC) layer, the first MBS data to a first radio link control (RLC) layer and the second MBS data to a second RLC layer;
deliver, to a packet data convergence protocol (PDCP) layer, the first MBS data from the first RLC layer and the second MBS data from the second RLC layer; and
deliver, from the PDCP layer to an upper layer, the first MBS data and the second MBS data, and
wherein a first bearer comprising the first RLC layer is configured as an unicast bearer, and a second bearer comprising the second RLC layer is configured as a multicast bearer.

10. The terminal of claim 9,
wherein the first RLC layer is configured as an unacknowledgement mode (UM) or an acknowledgement mode (AM), and the second RLC layer is configured as the UM, and
wherein the first MBS data and the second MBS data are identified based on at least one of a logical channel identifier and a radio network temporary identifier (RNTI).

11. The terminal of claim 9,
wherein a reordering operation is performed on the first MBS data and the second MBS data in the PDCP layer, and
wherein the MAC layer is configured to perform a hybrid automatic repeat request (HARQ) retransmission operation for the first MBS data or the second MBS data.

12. The terminal of claim 9,
wherein the upper layer comprises a service data adaption protocol (SDAP) layer that performs an operation for mapping each of the first MBS data and the second MBS data to a corresponding quality of service (QoS) flow, and
wherein an SDAP header is not included in each of the first MBS data and the second MBS data.

13. A base station in a wireless communication system, the base station comprising:
a transceiver; and
a controller configured to:
establish a radio resource control (RRC) connection with a terminal;
obtain, at a packet data convergence protocol (PDCP) layer from an upper layer, first multicast and broadcast service (MBS) data and second MBS data;
obtain, from the PDCP layer, the first MBS data at a first radio link control (RLC) layer and the second MBS data at a second RLC layer;
obtain, at a physical layer through a medium access control (MAC) layer, the first MBS data from the first RLC layer and the second MBS data from the second RLC layer; and
control the transceiver to transmit, to the terminal through the physical layer, the first MBS data and the second MBS data, and
wherein a first bearer comprising the first RLC layer is configured as an unicast bearer, and a second bearer comprising the second RLC layer is configured as a multicast bearer.

14. The base station of claim 13,
wherein a reordering operation is performed on the first MBS data and the second MBS data in the PDCP layer, and
wherein the MAC layer is configured to perform a hybrid automatic repeat request (HARQ) retransmission operation for the first MBS data or the second MBS data.

15. The base station of claim 13,
wherein the upper layer comprises a service data adaption protocol (SDAP) layer that performs an operation for mapping each of the first MBS data and the second MBS data to a corresponding quality of service (QoS) flow, and
wherein an SDAP header is not included in each of the first MBS data and the second MBS data.
